Europäisches Patentamt

(19) European Patent Office

Office européen des brevets

(11) Publication number: **0 087 528**
**A1**

# (12) EUROPEAN PATENT APPLICATION

(21) Application number: 82301013.7

(22) Date of filing: 26.02.82

(51) Int. Cl.³: **G 01 B 7/30**
**G 01 B 7/31, G 01 B 7/14**
**B 23 B 49/00, G 01 C 9/14**
**B 25 B 23/14**

(43) Date of publication of application:
07.09.83 Bulletin 83/36

(84) Designated Contracting States:
DE FR GB IT

(71) Applicant: CENTRO CORPORATION
1934 Stanley Avenue
Dayton Ohio(US)

(72) Inventor: Benjamin, Hary Louis
1000 Brittany Hills
Dayton Ohio(US)

(74) Representative: Warren, Francis Charles et al,
Baron & Warren 18 South End Kensington
London W8 5BU(GB)

(54) Position sensing device.

(57) A position sensing device (10) for indicating the relative
position of the device with respect to an external surface. A
main support member (16) houses a plurality of angular
position sensing probes (106, 108) which are each associated
with transducers (114, 118) that provide an indication of the
relative position of each probe (106, 108) to the support
member (16) so that when the probes (106, 108) engage an
external surface, information is provided which can be used
to indicate the relative position of the device with respect to
the external surface. An additional lateral position sensing
probe (44) can also be mounted in the support member (16)
to indicate exact axial alignment with a hole or other
discontinuity in the external surface.

EP 0 087 528 A1

./...

Croydon Printing Company Ltd.

FIG-1

## POSITION SENSING DEVICE

The present invention relates to devices for sensing the relative position between such a device and an external surface, through the use of contacting probes which extend from the device to the surface.

These devices generally provide a means for sensing the relative position of the device with respect to an external surface so as to provide an indication of the relative perpendicularity or angularity of the device with respect to that surface. Additional features of these devices include the ability to indicate the distance from the device to the external surface and the ability to indicate an exact position of a discontinuity in the surface, such as a hole. All of these functions are particularly useful in "teaching" industrial robots which are capable of remembering a location of a position in space once the robot has been moved to that location. Obviously, many of the various features of these devices are useful in many other industries also.

Prior to my development of these devices, it was a common practice to teach such industrial robots by bringing the robot arm into approximate alignment with the surface, through visual observations and utilizing the driving mechanism of the robot. This is a very tedious operation requiring considerable labor and skill and was thus uneconomical for most applications.

There are many industries in which the relative angular position between two members must be known. In some situations accuracy of measurement is important, while in others, the angular measurement must be made quickly and continuously in order to constantly monitor the relative angle so that continuous corrections can be made if necessary.

Many such devices cannot be made sufficiently portable, due to their complexity or alignment sensitivity, that they can be utilized in many situations where it is desired to have an accurate and/or immediate angular measurement. In addition, such devices generally do not permit the simultaneous indication of the relative angular position between two objects in orthogonal planes or permit the resolution of the angle in two planes to the angle in an azimuth plane perpendicular to the base reference plane.

In other words, it is sometimes desired, for example, to measure or check the relative perpendicularity of a stud to the surface from which it extends, or of the relative perpendicularity between two flat surfaces. This involves measuring the relative positions in two dimensions relative to a base plane or third dimension. Thus, for example, in the case of a stud, it is a question of determining the position of the central axis of the stud relative to two orthogonal planes which extend perpendicular to the surface from which the stud extends. The stud could extend between the two reference planes and thus would have a projected angle in each of the reference planes as well as a single angle in the azimuth plane through the axis of the stud in which the actual angle of inclination exists. A similar measuring situation is required with regard to perpendicular or relatively angled surfaces.

This type of measurement requirement exists in many industries and has presented a substantial problem in that the equipment which has been devised to accomplish such measurements is not generally suited for ease of adaptation to other problem areas than that to which it was specifically designed.

The present invention provides a position sensing device which indicates the relative perpendicularity or angularity between the device and a surface, and in addition, if desired, can also provide an indication of the distance from the device to the surface, and further, can provide an exact alignment with a point on the surface. The position sensing device includes a support member supporting at least one angular position sensing probe movably mounted within and extending from the support member for engaging an external surface. At least one transducer means is mounted to the support member and engages each of the probes for sensing movement thereof and providing electrical signals indicative of the positions of each of the probes relative to the support member. Means are provided including circuitry for receiving the signals from the transducers and providing an indication of the relative angular position of the support member to the surface.

In one form, an additional reference probe is provided in the support member which is maintained stationary relative to the support member during normal operation of the device and provides a fixed reference point where it engages the external surface and with respect to which at least one other probe can be utilized to establish perpendicularity between the support member and the external surface.

Although all of the sensing and reference probes can extend from the support member and directly engage the surface of a workpiece as the external surface providing the reference point for the probe's information, an intermediate platten may also be utilized. Such a platten is movably mounted on the support member so as to engage the probes with an internal surface which is parallel to a further external surface which in turn engages the surface of the workpiece with respect to which the probe is to provide information. The platten is useful in protecting the reference and sensing probes and provides additional features which are discussed below.

In some of the embodiments of the present invention, the distance from the support member to the external surface with respect to which information is being gathered can be established through the movement of at least one of the sensing probes as it retracts into the support member, since the transducer associated with that sensing probe is providing a signal indicative of the relative position of that probe with respect to the support member.

Additionally, an external means of indicating the relative position between the external surface and the support member may be provided. This is particularly useful where a fixed reference probe is utilized since the support member is basically intended to pivot about the reference probe to establish the desired angularity or perpendicularity and thus this probe will not be moved toward or away from the external surface being examined.

Since, in the case of industrial robots for example, the distance that is really necessary to be measured is the distance from the robot arm supporting the device to the external surface, an intermediate housing can be provided in which the support member telescopes. Thus, by providing a further transducer means which indicates the relative position of the support member with respect to this housing, the relative position of the robot arm with respect to the external surface can be easily indicated.

Since, in many environments such as industrial robot useage, it is desirable to be able to permit relatively large movements between the external surface being examined and the robot arm supporting the position sensing device while the device is engaging the external surface, a relatively large length of movement must be provided in either the sensing probes or between the support member and the housing, depending upon which means is being used to sense the relative distance from the external surface to the robot arm.

It has been discovered that conventional linear transducers or potentiometers of the type commonly available to provide an indication of the movement of a rod therethrough, cannot provide the accuracy, repeatability and wear which is desirable. In the present invention, this difficulty is overcome by the use of strain gage technology associated with a cantilevered member mounted in the support member or the housing. The probe which provides the indication of movement between the external surface and the robot arm is provided with a tapered surface which acts as a camming surface for a cam follower which, in turn, causes deflection of the cantilevered member thus causing stain in that member which is readily ascertainable through the strain gages.

These gages can be easily calibrated to provide an exact indication of the relative position of the probe with respect to the support member and thus the distance from the external surface to the robot arm, for example. Simple adjustments in the angle of the camming surface can permit almost any reasonable length of stroke with highly accuracte determination through the use of sensitive strain gages.

As mentioned above, it is also an alternative feature of the present invention to provide means of determining the lateral position of the position sensing device with respect to a discontinuity, such as a hole, in the external surface being examined and thus provide an indication of exact alignment of the support member with the hole. In its preferred form, this lateral position sensing probe is mounted for sliding movement within the support member so that it can be retracted to prevent damage, but otherwise is engaged with the external surface being examined.

When the tip of this probe engages a hole and extends into it as the lateral movement of the position sensing device continues, stress is placed on the probe since it is supported in a cantilever fashion from a stress sensing member. The stress sensing member is designed to indicate the direction relative to the support member as to which stress is being applied through movement of the probe in the hole. This information is then utilized to provide an indication to the operator of the direction in which he must move the position sensing device in order to exactly locate the lateral position sensing probe in the hole so as to eliminate any bending stress on the probe.

In its preferred form, the sensing member is provided with two perpendicular surfaces formed of relatively thin flat plates with strain gage transducers mounted to each surface. The information provided can thus be utilized to indicate the stress in each of the planes of these surfaces which then can easily be used as information to provide the operator with an indication of the direction in which he must move the position sensing device in order to relieve these stresses on the lateral position sensing probe.

In one form of the present invention provides an instrumented tool which can provide precise measurement of the relative angular positions between two members or surfaces, or can be modified to provide a less precise measurement, but a simplified and more easily utilized tool than what is available in the prior art.

These advantages are provided by an instrumented tool which basically comprises a frame structure which is coupled to a base plate forming a reference plane by means of a plurality of rods slidably supported in the frame and positioned at equally angularly and radially spaced locations around a central axis with the outer end portions of the rods pivotally mounted in the base plate in such a manner that the frame is free to pivot about the base plate as the rods move in and out of the frame while maintaining the central axis so that it intersects the plane of the bottom of the base plate at substantially the same position regardless of the relative angular position between the frame and the base plate.

The potentiometers are integral in a circuitry which provides continuous read-out of the relative angle between the frame and the base plate in two orthogonal planes perpendicular to the reference plane formed by the bottom of the base plate. If desired, the circuitry can be provided to give a continuous read out of the angle in the aximuth plane between the frame and the reference plane of the base plate.

In the preferred form of this embodiment there are four potentiometers, two each in perpendicular planes and four support rods which are equally radially and angularly interspersed between the potentiometer rods and which also engage the base plate and are pivotally connected thereto to provide the main support for the frame while the rods which engage the potentiometers are free to slide therein.

An important aspect of this embodiment of the present invention is the manner of connecting the plurality of rods, both the potentiometer rods and the support rods to the base plate. Although the base plate is not held in an exact concentric position with regard to the axis about which the rods are located, the exact angular orientation between the base plate and the frame structure is maintained regardless of the relative pivoting between the base plate and the frame. In order to accomplish this in one form, the base plate is provided with a plurality of radially extending grooves which extend from a central axis which would be in alignment with the axis of the position of the rods in the frame member when the frame is exactly perpendicular in all planes to the base plate reference plane. In an alternative form, since the movement of the rods radially outward as a result of relative angular movement of the frame and the base plate is not great, a plurality of cylindrical recesses may be used rather than radially extending slots, so long as the diameter of the cylindrical recesses are sufficient to permit the necessary outward radial and angular movement of the pivotal connection between the rods and the base plate to allow the desired degree of relative angular movement between the frame and the base plate.

In both cases a cylindrical member is supported in the radially expanding groove or cylindrical recess, and is connected to the bottom of each of the rods through a spherical bearing member so that each rod is permitted to pivot relative to the cylindrical support member while the cylindrical support member moves within the radial groove or cylindrical recess, as the frame is pivoted relative to the base plate. The extent of movement between the cylindrical support member and the cylindrical recess, for example, is determined through the mathmatical analysis which establishes the loci of points of tangency to the cylindrical support member which extends generally radially outwardly in the base plate as a result of angular movement of the frame in the opposite direction relative to the base plate. This degree of freedom is necessary in order to permit the frame to be moved relative to the base plate while not binding on the rods.

The basic concept of this embodiment of the device of the present invention can be utilized in many different environments. For example, it can be utilized as a stud perpendicularity measure relative to the surface in which the stud is positioned, by placing a central, cylindrical opening in the frame which matingly engages the outer surface of the stud and with a central circular opening in the base plate so that the instrumented tool can be positioned over the stud. Thus, the read out of the relative perpendicularity of the stud to the surface can easily be obtained.

As a further example of the utilization of this invention, it can be incorporated into a drilling device in which the drill extends through the central portion of the frame coaxially with the positions of the potentiometer rods, and through a corresponding cylindrical opening in the base plate. The base plate can then be positioned on the surface to be drilled and the drill moved until the proper angle, either perpendicular or some other desired relative angle to the surface, is established, and then the drill can be passed through the base plate by compression of the frame in order to drill the hole in the material. It is to be noted that compression of the frame for drilling is for a separate purpose and is independent of the relative positioning of the frame and base plate to establish perpendicularity.

A further utilization of the device is essentially as a carpenter's level in which the base plate is provided with a plumb bob type of pendulum member which then, due to gravity, holds the base plate in a horizontal position to form the reference plane relative to the surface of the earth and then the frame can be positioned against any surface whose relative angular position to the ground can be determined.

A still further example of the utilization of the present invention is in combination with a torque and thrust measuring device which can be adapted for utilization as a screwdriver to position threaded fasteners in openings so that the torque and thrust applied to the screwdriver, which is coupled to the frame, can be measured simultaneously with the relative angular position between the screwdriver and the surface in which the threaded fastener is being inserted in or removed from.

Fig. 1 is a cross sectional view of a preferred embodiment of the present invention;

Fig. 2 is a cross sectional view along line 2-2 of Fig. 1;

Fig. 3 is a cross sectional view along line 3-3 of Fig. 1;

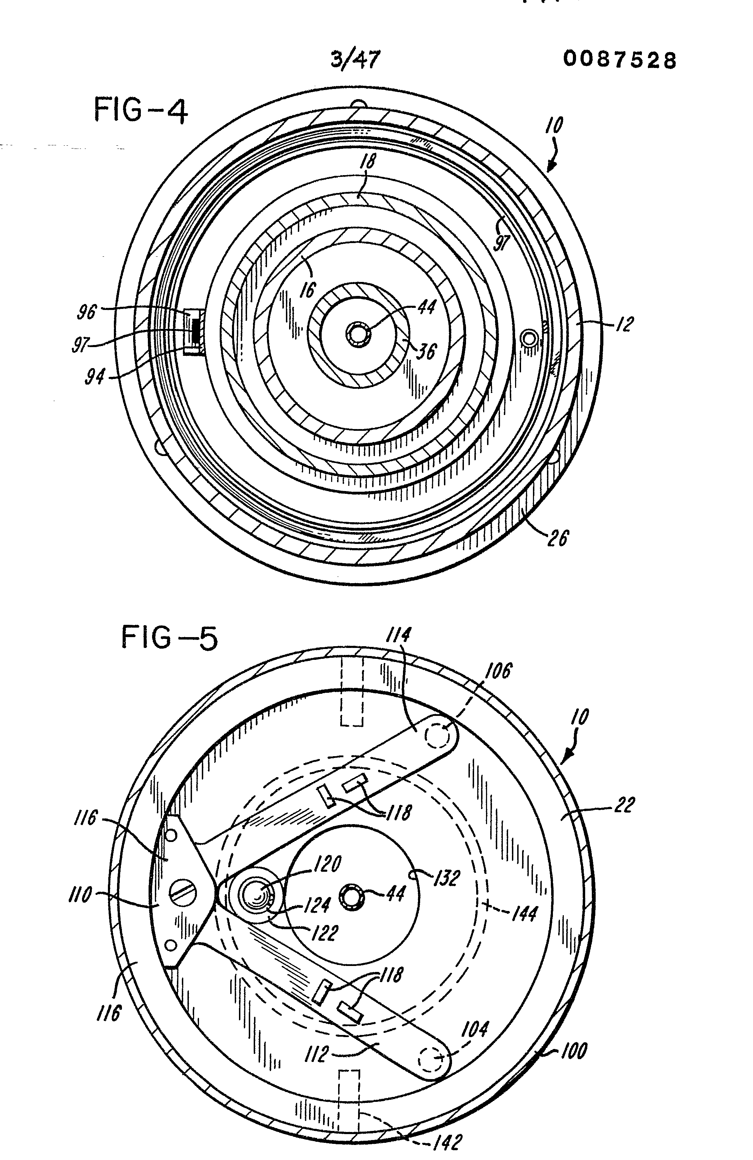

Fig. 4 is a cross sectional view along line 4-4 of Fig. 1;

Fig. 5 is a cross sectional view along line 5-5 of Fig. 1;

Fig. 6 is a cross sectional view of an alternative preferred embodiment of the present invention;

Fig. 7 is a cross sectional view along line 7-7 of Fig. 6;

Fig. 8 is a cross sectional view along line 8-8 of Fig. 6;

Fig. 9 is a cross sectional view along line 8-8 of Fig. 6 of an additional alternative embodiment in which there are four sensing probes rather than three;

Fig. 10 is a fragmented cross sectional view of a further preferred embodiment of the present invention;

Fig. 11 is a further fragmented partially cross sectioned view of an additional embodiment of a lateral position sensing probe engaged in an opening in an external surface;

Figs. 12a-21 illustrate the circuitry which utilizes the signals from the various transducers in the embodiment of Fig. 1 to provide a visual indication of the relative position between the support member and the external surface being sensed;

Fig. 22 is a plan view of a panel indicating a possible array for the light signals produced through the circuitry of Figs. 12a-21 which indicates movement of the position sensing device;

Fig. 23 is a schematic representation of a reference plane defined by the probes of the embodiment of Fig. 1;

Fig. 24 is a schematic representation of the reference plane of Fig. 23 from a perpendicular direction and with the reference plane tilted with respect to a target surface;

Fig. 25 is a cross sectional view of a preferred embodiment of the present invention, illustrating the position sensing device in engagement with a surface;

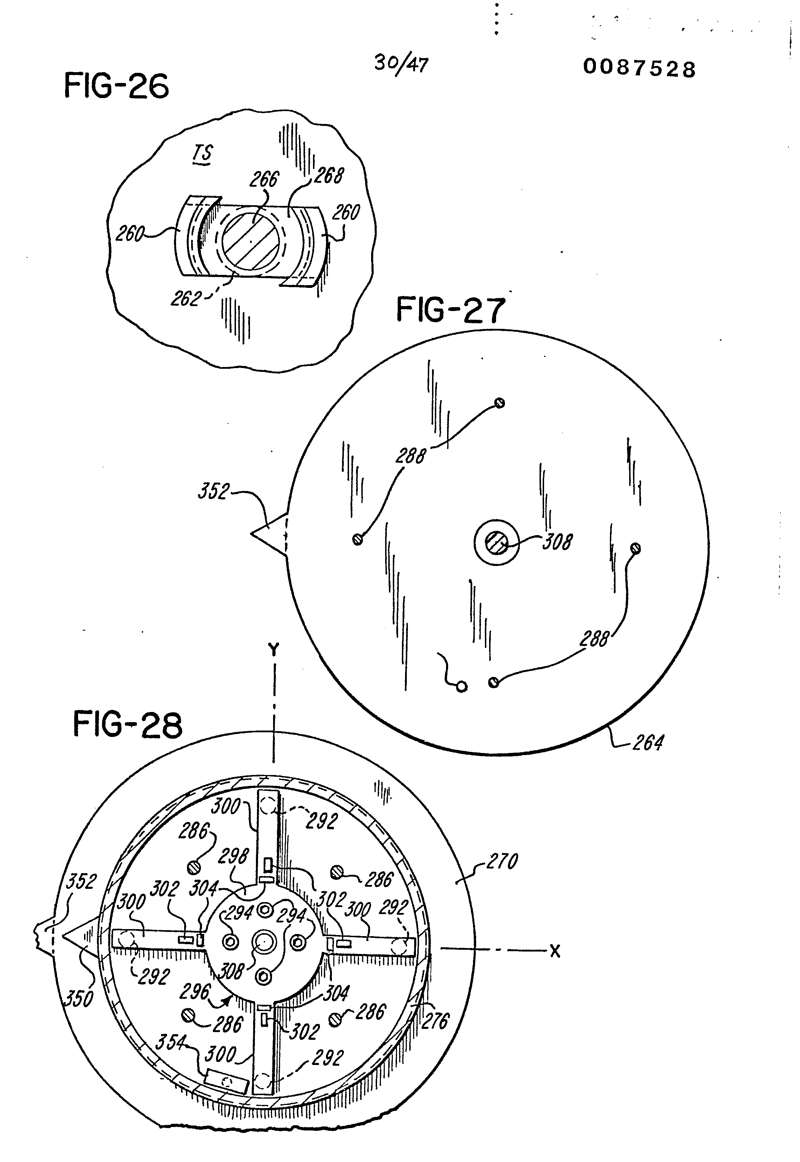

Fig. 26 is a cross sectional view along line 26-26 of Fig. 25;

Fig. 27 is a cross sectional view along the line 27-27 of Fig. 25;

Fig. 28 is a cross sectional view along the line 28-28 of Fig. 25;

Fig. 29 is a cross sectional view along the line 29-29 of Fig. 25;

Fig. 30 is a cross sectional view along the line 30-30 of Fig. 25;

Fig. 31 is a cross sectional view along the line 31-31 of Fig. 25;

Figs. 32a-38 illustrate the circuitry which utlizes the signals from the various transducers to provide a visual indication of the relative position between the support member and the surface being sensed in the embodiment of Fig. 25; and

Fig. 39 is a pictorial view of a control counsel housing the circuitry and the visual indicators for the preferred embodiment of Fig. 25 of the present invention;

Fig. 40 is a perspective view of a further preferred embodiment of the instrumented tool of the present invention including a torque and thrust measuring device, and which is connected to a visual readout apparatus;

Fig. 41 is a vertical cross sectional view of the lower portion of the preferred embodiment of Fig. 40;

Fig. 42 is a cross sectional view in the direction of line 42-42 of Fig. 40;

Fig. 43 is a cross sectional view in the direction of line 43-43 in Fig. 40;

Figs. 44-46 are schematic circuit diagrams of the preferred embodiment of the present invention illustrated in Fig. 40;

Fig. 47 is a side view in partial cross section of the thrust and torque measuring portion of the preferred embodiment of Fig. 40;

Fig. 48 is a cross sectional view through line 48-48 of Fig. 47, illustrating a thrust measuring section of the device;

Fig. 49 is a cross sectional view along line 49-49 of Fig. 47, illustrating the torque measuring portion of the device;

Fig. 50 is a vertical cross sectional view through a further preferred embodiment of the present invention, where it is utilized as a drill angularity measuring device;

Fig. 51 is a top plan view of the embodiment of Fig. 50 showing the angle indicating device.

Fig. 52 is a vertical cross sectional view through a further preferred embodiment of the present invention, where it is utilized as a stud perpendicularity measuring device;

Fig. 53 is a plan view of the embodiment of Fig. 52;

Fig. 54 is a vertical partial cross sectional view of a further preferred embodiment of ·the present invention, wherein it is utilized as a level;

Fig. 55 is a top plan view of the embodiment of Fig. 54;

Fig. 56 is a horizontally cross sectional view through the base plate assembly of Fig. 11;

Fig. 57 is a vertical cross sectional view along the line 57-57 of Fig. 56;

Fig. 58 is an enlarged view of one of the cylindrical recesses of the base plate of Fig. 56;

Fig. 59 is a schematic illustration of the relative angular readings between a frame and the reference plane with an angle established in an azimuth plane.

Fig. 60 is a schematic illustration of the light emitting diode layout used on several embodiments; and

Fig. 61 is a circuit diagram of circuitry which can be utilized to operate the light system illustrated in Fig. 60 when utilized with any of the embodiments of Figs. 40-60.

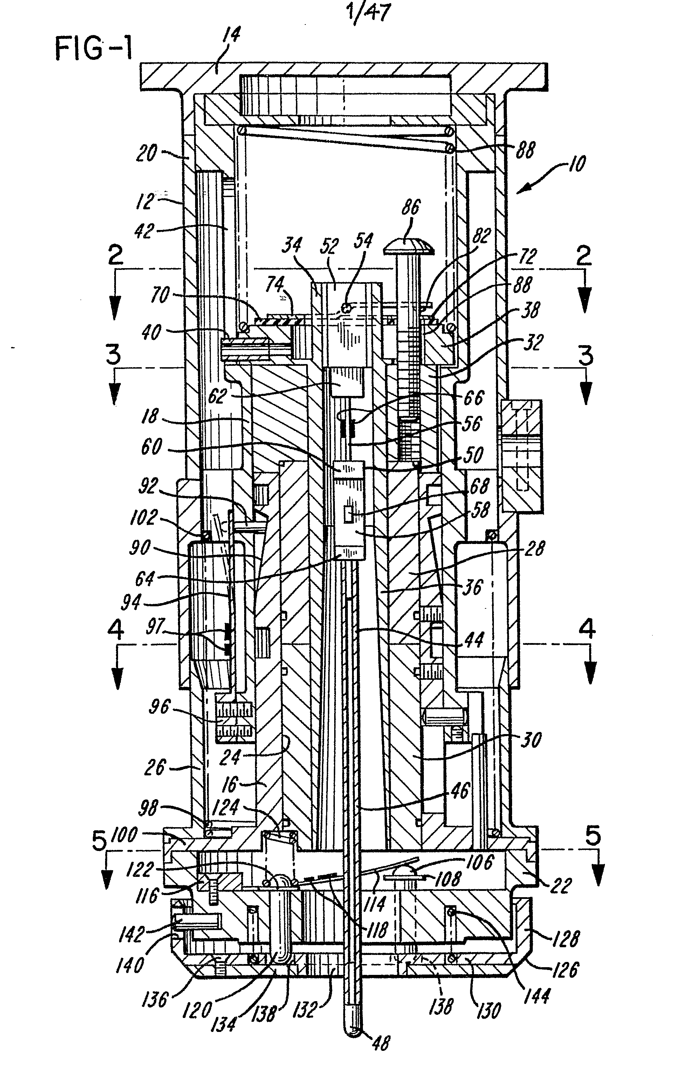

The first embodiment of the position sensing device 10 is illustrated in Fig. 1 and is provided with a main outer cylindrical housing 12 which is closed at its upper end by a cap 14. Cap 14 is the portion of the device which will be directly attached to the robot arm (not shown) in the environment where this device would be utilized for "teaching" an industrial robot. Supported within this housing 12 is a main support member 16 which is telescopically received within the housing 12.

Support member 16 is likewise cylindrical in this embodiment, although it should be understood that the cylindrical shape of this device is not essential to its operation. The main support member 16 is actually fabricated from a plurality of individual pieces which function together to provide the main support for the instrumentation in the position sensing device 10, although the main support may be fabricated from a single piece, if desired.

Likewise, the outer housing 12 is formed of a plurality of parts in order to reduce the weight as well as permit ease of fabrication of the device. Thus, for example, the inner wall 18 of housing 12 is fabricated separately from the outer wall 20 and is threaded into the cap 14 to hold the inner wall 18 in position. The outer wall 20 then can be threaded to the upper portion of the inner wall 18 to hold the assembly securely together.

The main support member 16 includes a bottom cap 22 which is threadably received by an internal cylindrical wall 24 which extends into the outer cylindrical housing 12 and is telescopically received within the inner wall 18 thereof. An outer cylindrical wall 26 of support member 16 is threadably connected to the inner wall 24 and is telescopically received by the outer wall 20 of the cylindrical housing 12 for sliding movement therein.

Mounted within the inner wall 24 of support member 16 are cylindrical bushings 28 and 30 which are mounted fixed with respect to the inner wall 24 for movement therewith. A further cylindrical member 32 is mounted atop bushing 28 and is also mounted fixed relative to the inner wall 24 for movement therewith. Slidingly supported within the central openings as defined by bushings 28 and 30 and cylindrical member 32 is a lateral position sensing probe support member 34, also generally cylindrical in shape with a tapered lower portion 36 and with an upper portion that widens into a disk shaped cap 38. A hole is drilled into one side of the cap 38 and a guide pin 40 is securely fitted therein and extends outwardly into a mating slot 42 formed in the inner wall 18 of the cylindrical housing 12 so that the orientation of the lateral position sensing probe support member 34 is maintained in the same location at all times with respect to the outer housing 12.

Member 34 supports a lateral position sensing probe 44 for movement therewith telescopically within the housing 12 along the longitudinal axis of the probe which is concentric with the axis of the housing 12 as well as the support member 16. The lateral position sensing probe 44 is comprised of a hollow cylindrical rod 46 having a solid end cap 48 formed with a spherical end. The upper end of rod 46 is attached to a sensing block 50. The upper portion 52 of sensing block 50 is cylindrical and fits snuggly within the cylindrical bore in member 34. A pin 54 extends through the upper portion 52 and through member 34 to hold the sensing probe 44 in fixed position with respect to member 34.

Sensing probe 50 is formed with two relatively thin flat plates 56 and 58 which are formed in planes perpendicular to one another from a single block of material and with an intermediate rectangular cross section portion 60. The planes in which the plates 56 and 58 are formed intersect along the longitudinal axis of rod 46. A further rectangular upper portion 62 joins the portion 52 and a lower rectangular portion 64 has a cylindrical extension which is received in the upper portion of the rod 46 to hold the rod in a cantilevered fashion extending outwardly from the sensing device 10. The tapered lower portion 36 of the member 34 permits cantilevered movement of the lateral position sensing probe 44 over an extended lateral width so that the rod 46 does not contact any portion of the sensing device within that range of movement.

Mounted to the surfaces of plates 56 and 58 are strain gage transducers 66 and 68, respectively. These gages are mounted in a conventional manner to indicate the strains that occur in each of the plates 56 and 58 when the probe 44 is bent. The overall design of the probe is such that all bending takes place in the plates 56 and 58, thus the probe body 46 must be designed stiffer than these plates. It is to be noted that none of the lead wires from any of the strain gages discussed herein are illustrated for the sake of clarity. However, it is apparent that lead wires must extend from each of the strain gages referred to herein and out of the device and into the control circuitry described below.

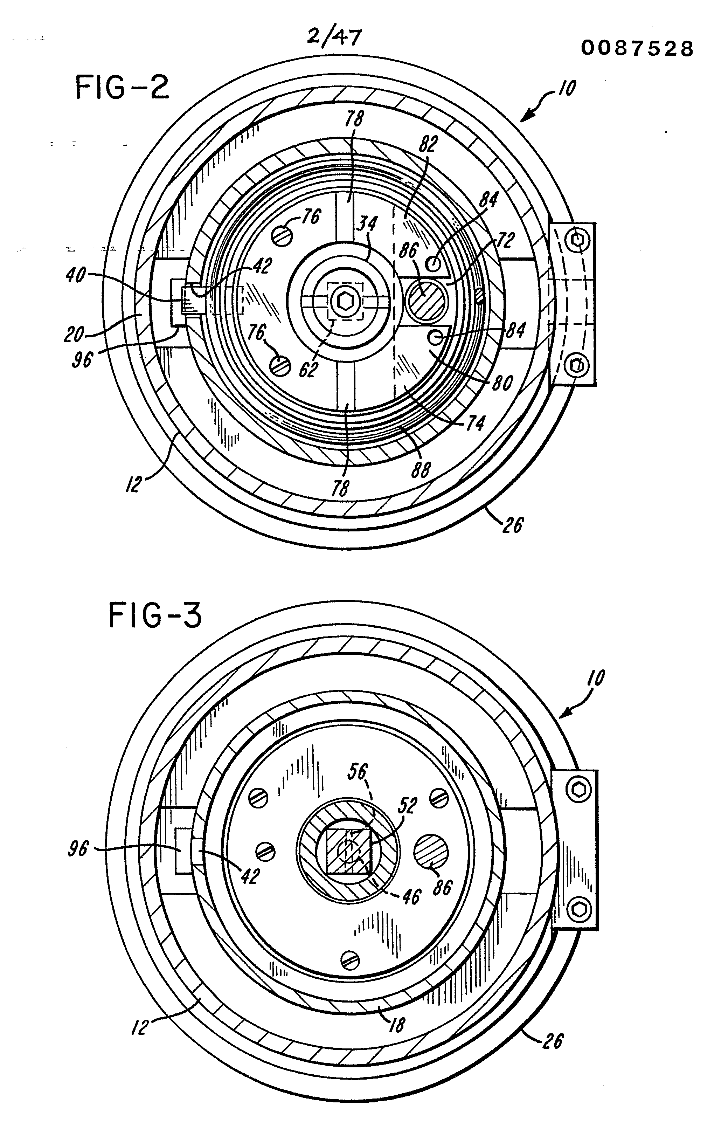

Mounted to the disk shaped cap section 38 of member 34 is an annular plate 70 formed of electrically insulative material with a crescent shaped member 72, made of copper or other conductive material, mounted on the surface thereof and off to one side as illustrated in Figs. 1 and 2. A further piece of conductive material in the form of a horseshoe shaped piece 74 is also mounted on the upper surface of the annular plate 70 and is secured thereto by bolts 76. The horseshoe shaped piece 74 is provided on each side with upwardly extending offset 78, as shown in Fig. 2, which causes the right side of the piece 74 to be elevated above the left side as shown in Fig. 2. Thus, the ends 80 and 82 of the piece 74 are positioned in vertically spaced relation above the crescent shaped member 72.

On each of the ends 80 and 82 of piece 74 is formed a downwardly extending dimple 84 which is generally also out of contact with the crescent shaped member 72. Extending between the ends 80 and 82 of the member 74 is a bolt 86 which is threaded into a corresponding opening in the member 32. It is to be noted that the bolt 86 extends through an enlarged hole 88 formed in the disk shaped cap 38, shown in Fig. 1, so that the cap is free for relative movement with respect to the bolt 86.

As can be seen in Fig. 1, as the lateral position sensing probe 50 and its support member 34 are moved upwardly relative to the main support member 16, the plate 74 will eventually contact the bottom of the head on the bolt 86 and cause the ends 80 and 82 to be forced downwardly to contact the plate 72. An electrical connection is provided between these plates which, through the appropriate circuitry, described below, provides an indication that the probe is in its fully retracted position and will not provide correct readings with respect to the lateral positioning of the probe. The lateral position sensing probe support member 34 and thus the probe 44 itself, is normally maintained in an extended position through action of a spring 88 which is compressed between the inner surface of the cap 14 and the upper surface of the disk shaped cap 38.

Referring again to Fig. 1, as previously mentioned, means can be provided for indicating the relative height of the robot arm which engages the top cap 14 from the external surface being examined. In this embodiment, this vertical position sensing measurement is achieved through the use of a transducer means that measures the relative position of the support member 16 to the housing 12. The inner cylindrical wall 24 is provided with a frusto-conically shaped surface 90 which is engaged by a pin 92 slidably received in a laterally extending hole in the side of the inner wall 18 of cylindrical housing 12.

The surface 90 acts as a camming surface and the pin 92 a cam follower so that relative movement of the support member 16 within the housing 12 causes movement of the pin 92 as shown in Fig. 1 by the phantom line position. The outer end of the pin 92 engages a cantilever supported thin plate 94 which is bolted as at 96 to a portion of the inner wall 18 of the housing 12. Strain gages 96 are mounted to the plate 94 and provide an indication of the amount of stress on the plate 94 as it is bent by movement of pin 92, which stress can be easily calibrated to indicate the relative positions between the support member 16 and housing 12. This information can then easily be transformed into an indication of the distance from the surface being examined to the robot arm engaging the outer surface of the top cap 14.

A spring 98 at its lower end engages a lower lip 100 of support member 16 and at its upper end is fitted in a recess 102 formed in housing 12 to normally bias the support member 16 outwardly with respect to the housing 12. This spring is easily overcome and the deflection is indicated through the strain gages 98 upon bending of the plate 94 as a result of that movement.

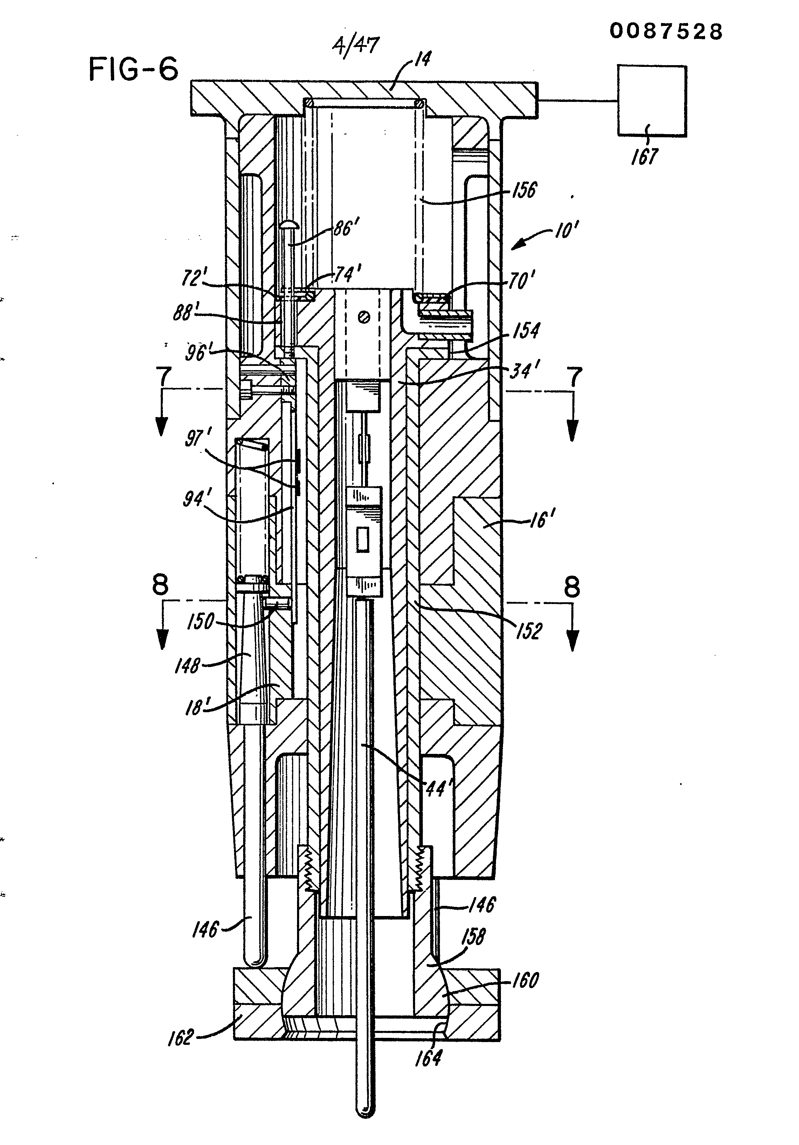

The relative perpendicularity or angularity of the device with respect to an external surface is provided by the mechanism housed in and supported by the lower end cap 22 of the main support member 16. In this embodiment, a pair of angular position sensing probes 104 and 106 (see Fig. 5) are mounted in corresponding holes in the cap 22. The holes permit a slip fit of the cylindrically formed probes 104, 106. The probes 104 and 106 have spherically shaped ends and a stop ring 108 is provided on the upper end of each to prevent the probes from passing through the opening in cap 22.

The transducer means associated with each of the probes 104 and 106 is essentially the same in function as that described above with respect to the vertical position indication. However, in this case the shape of the transducer means is somewhat different in that a twin cantilevered beam member 110, as shown in Fig. 5, is provided which has two independently operable thin plates 112 and 114 associated, respectively, with pins 104 and 106. Each of the beams is integrally formed with the mounting member 116 and each extends in cantilever fashion towards the respective pins 104 and 106. Each of the plates 112 and 114 could be independently mounted if desired, however, the construction disclosed as preferred. Mounted on the surface of each of the plates 112 and 114 are pairs of strain gages 118 which provide the desired information with respect to the flexing of these members upon movement of the pins 104 and 106.

Also mounted in the bottom cap 22 in the same manner as pins 104 and 106 is a reference probe 120. Reference probe 120 is provided with a stop ring 122 which prevents the probe from passing through the associated hole in the bottom cap 22 and which also acts as a support for a biasing spring 124 which is compressed between the stop ring 122 and a recess formed in the lip of the support member 16.

This spring 124 maintains the reference pin in an extended position with respect to the bottom cap 22 and is only overcome by an exceptional force so as to prevent damage to the reference probe if the sensing device 10 is too firmly pressed against the external surface being examined. The spring 124 is therefore stronger than either spring 98 or 88 so that it is the last to compress when an exceptional force is applied to the device.

Although the device would be totally operable with the sensing probes 104 and 106 and reference probe 120 extending from the base cap 22 to engage an external surface being examined, an additional platten 126 is utilized in this preferred embodiment. Platten 126 is generally in the form of a cylindrical end cap with a cylindrical wall 128 which encompasses a corresponding portion of the end cap 22, but is of larger diameter to provide a space between the platten 126 and end cap 22 for freedom of relative movement therebetween. The bottom 130 of platten 126 is of an annular form with a central opening 132 through which the probe 46 extends. An annular hardened insert 134 is bolted through a plurality of screws 136 to the bottom 130 to provide a more wear-resistant surface since it is anticipated that the rest of the platten is preferably formed of aluminum or other softer material.

Cylindrical holes 138 are formed in the softer material in the bottom 130 to permit each of the probes 104, 106 and 120 to rest on the harder annular insert 134. This upper surface of the annular insert 134 thus becomes the external surface being examined by the probe and the opposite parallel surface of the annular insert 134 will engage the surface of the workpiece actually being examined. Sufficient freedom of angular movement between the platten 126 and end cap 22 is provided by the clearance between the walls in order to permit a desired maximum angle of tilt of the sensing device 10 with respect to the workpiece being examined.

The platten 126 is held in position against the reference probe 120 through the use of a pin 140 fitted in a corresponding hole in cap 22 and extending into a slot 142 formed in the upstanding wall 128 of the platten 126. A spring 144 biases the platten 126 away from the end cap 22.

A second embodiment of the invention is illustrated in Figs. 6 through 8. This embodiment is very similar to that of the above-described embodiment. It is provided with a main support member 16' which is likewise formed of a plurality of components for ease of assembly and construction. A most noteworthy difference between the embodiments of Figs. 1 and 6 is that the sensing device 10' of Fig. 6 is not provided with a telescoping housing 12 in which the main support member 16 is received. In view of this, some means must be provided for absorbing the height changes between the robot arm which is fastened to the top cap 14' and the external surface to be examined.

In this embodiment, this height adjustment is achieved through the plurality of sensing probes 146 which are somewhat different in construction from the sensing probes 104 and 106 of the embodiment of Fig. 1. Also, in this embodiment, there is no reference probe 120. In this embodiment the measurement of the height is achieved through the monitoring of the relative position of the probes 146 within the support member 16'.

Each of the sensing probes 146 has an upper frusto-conically shaped portion 148 which provides a tapered camming surface for pin 150 which functions as a cam follower and is loosely fitted in a hole in the inner wall 18' of the support member 16'. This pin 150 in turn engages the thin plate 94' which extends as a cantilever beam from the mounting member 96' secured to the support member 16'. Strain gages 98' sense the stressing of plate 94' due to movement of the sensing probe 146 and thus provide an indication of the relative position of the sensing probes within the main support member 16'.

The lateral position sensing probe 44' is identical to that of the first embodiment and the lateral position sensing probe support member 34' is very similar to that of the first embodiment, described above. Any difference in construction of these elements is due to the difference in the general shape of the overall sensing device 10', while the functions are identical.

Surrounding the support member 34' is a cylindrical sleeve 152 which is provided with an upper annular flange 154. This sleeve 152 is slidingly received in a corresponding bore through the support member 16'. Both the lateral position sensing probe support member 34 and the sleeve 154 are biased outwardly from the main support member 16' by spring 156 acting between the top cap 14' and the upper surface of support member 34. It is noted that thus the support member 34 is free for sliding movement within the sleeve 152 and the sleeve 152 is in turn free to slide within the corresponding bore in support member 16' against the biasing force of spring 156. This permits the lateral position sensing probe 44' to telescope into the device 10', independently of movement of the sleeve 152.

The lower end of sleeve 152 threadably receives a generally cylindrical platten support member 158. The lower portion 160 of member 158 is spherically shaped and supports a platten 162 having a correspondingly shaped central opening 164 therein which is free for pivotal movement on the spherically shaped lower portion 160 of the member 158. The platten 162 is formed in two pieces and then bolted together on the lower end of the member 158 and is thus held in position.

Each of the probes 146 contacts the upper surface of the platten 162 and the bottom surface of the platten 162 is then used to contact the workpiece being examined in essentially the same way as the first disclosed embodiment above. The member 158 has a cylindrical central opening through which the probe 44' extends. The platten 162 is free to rotate on the member 158 as it engages the workpiece being examined and, as a result, moves the probes 146 to provide the indication of the relative angularity or perpendicularity between the sensing device 10' and the surface of the workpiece.

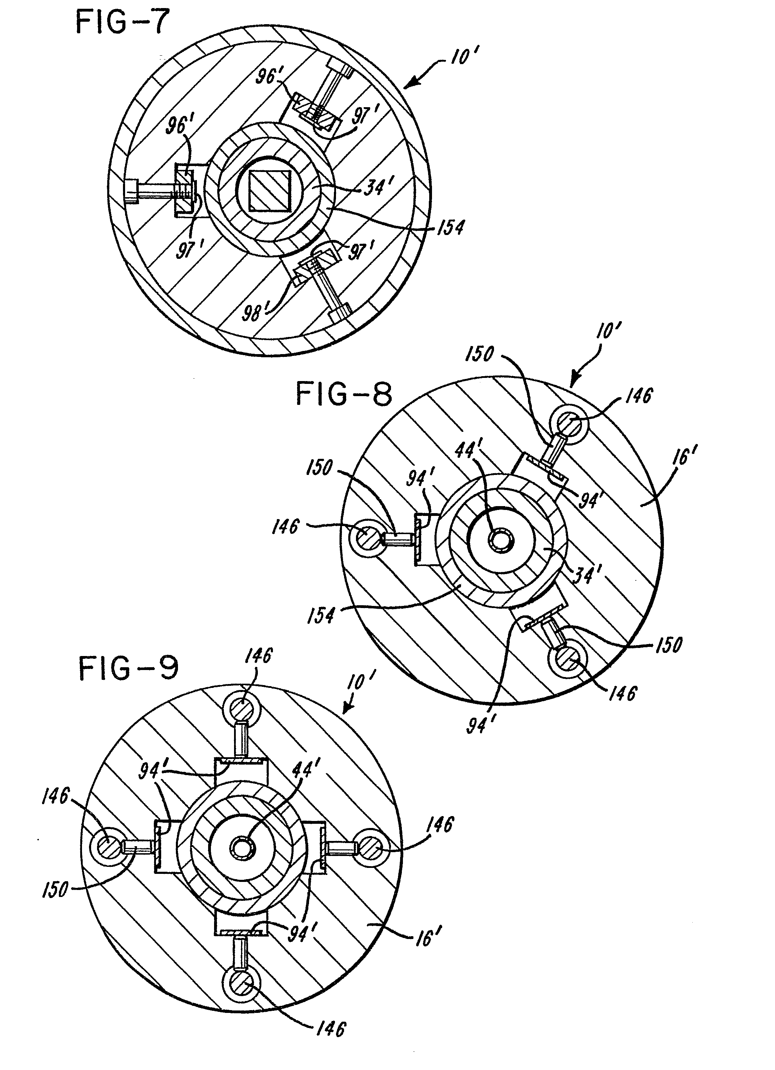

Although three probes are illustrated in the embodiment of Figs. 6 through 8, one or more probes may be utilized, for example, as is illustrated in a slight modification of Fig. 9 where four sensing probes 146 are illustrated in cross section taken through the same line as section 8-8 of Fig. 6. With the exception of the difference in the numbers of probes, the device 10' is identically constructed to that as illustrated in Figs. 6 through 8.

It is also contemplated that a single probe may be used to achieve the desired results. If, for example, looking at the device illustrated in Fig. 6 only the single probe shown in the cross section of the drawing were present and neither of the other two probes shown in cross sections of Figs. 7 and 8 were present, this device could still be utilized to provide the desired information. All that is necessary is a means 167 illustrated schematically in Fig. 6 as a box, which is capable of rotating the device 10' about its central axis and including means for receiving signals from the single probe at different positions as it is rotated around that axis while in contact with the target surface. The necessary information can thus be obtained from a single probe moved to multiple positions, as opposed to multiple probes in fixed positions. Information from the probe need only be obtained at two separate locations 90 degrees apart, in order to establish the angle of the axis of the device to the target surface, although multiple data points could also be used. This could be achieved very easily in many existing industrial robots since a typical movement provided in the wrist portion of the robot arm is the ability to rotate while knowing the exact position of the "hand" which would be holding the sensing device.

As previously mentioned the sleeve 152 is free for independent relative movement with respect to the lateral position sensing probe support member 34'. Thus, as with the first embodiment, in order to indicate that the lateral position sensing probe 44' is not providing accurate information when fully retracted within the platten 162, an annular plate 70' is mounted to the upper portion of the support member 34' and supports the crescent shaped conductive piece 72'. A horseshoe shaped conductive piece 74', bent in the same manner as the piece 74 described above, is mounted to the member 70' and extends over the member 72'. A bolt 86' is threaded into the flange 154 of support member 34' and extends through an enlarged bore 88' in the upper portion of the support member 34'.

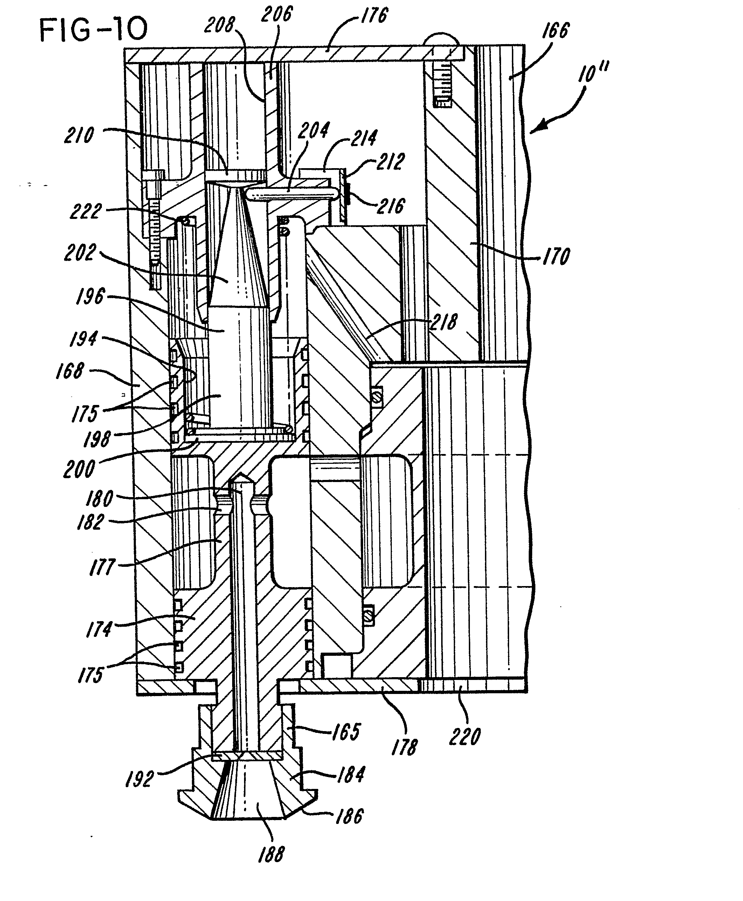

Yet another embodiment is illustrated in Fig. 10. This embodiment of the position sensing probe 10" is somewhat more specialized in that it is designed to allow each of the angular position sensing probes 165 to measure the relative angularity between the position sensing device 10" and an external surface through a hydrodynamic bearing principal in which the liquid separates the sensing probes 165 from the external surface being examined. This device is useful in those instances where it is desirable to avoid actual contact between the workpiece and the sensing probes 165. One such use is wherein a sonic sensor is utilized in a liquid environment to examine the surface of a workpiece and wherein it is desirable to know the perpendicularity or angularity of the sensor with respect to that surface. The use of the fluid bearings to support each of the sensing probes 165 is beneficial in such an environment.

Referring to the details of the embodiment of Fig. 10, the actual sonic sensor (not shown) is itself not important to the present invention and is merely secured within a central cylindrical opening 166 defined in the main body of the sensor 10" and which is equivalent to the support member 34 in the initially described embodiment. This main body or support member includes an outer cylindrical wall 168 and inner cylindrical offset wall 170 composed of two generally cylindrical portions 172 and 173 which define a plurality of fluid channels discussed below. A top annular plate 176 and a bottom annular plate 178 cover the top and bottom of the device with exception of the central bore 166 through which the sonic sensor extends.

What is shown in Fig. 10 is essentially a single quadrant of the device and it is anticipated that in this embodiment there will be four sensing probes 170, although another number of probes could be utilized in accordance with the present invention.

Referring now to the construction of each of the probes 165, the main body 174 is cylindrical and is slidingly received in a corresponding bore formed in the outer wall 168 of the device. A plurality of combined labyrinth seals and dirt grooves 175 are formed in the upper and lower regions of the main body 174 to assist in maintaining smooth sliding movement of the main body within its bore. In the central region of the main body 174 is a reduced diameter cylindrical portion 177 which thus provides an annular cavity surrounding the main body 174 within the bore formed in the outer wall 168. A central vertically extending bore 180 extends from this central region 178 and opens at the lower end of the main body portion 174. A lateral bore 182 extends through the central portion 178 and intersects the vertical bore 180.

On the lower end of the main body 174 is secured a probe tip 184 of generally cylindrical construction with an upwardly top area conical portion 186 around the lower edge thereof to assist in fluid flow away from the probe tip 184. In the center of the probe tip 184 is a frusto-conically shaped cavity 188 which communicates with the bore 180 through opening 190 in the probe tip. Between the outer end of the main body 174 and the opening 190 in the probe tip is a metering orifice plate 192. This metering orifice plate 192 is very important in the present embodiment in that it determines the amount of fluid separation between the working surface being examined and the lower surface of the probe tip 184. The means for determining the size of this orifice are described more fully below. The height of the water film can be described by the equation:

$$h = 1/4 \ d_0^2/d_v \ (K_0/K_p) \ (\Delta P_0/\Delta P_v)^{1/2}$$

where:

| | | |
|---|---|---|
| $h$ | = | the desired thickness of the water film |
| $d_0$ | = | the diameter of the orifice |
| $d_v$ | = | the diameter of the probe tip |
| $\Delta P_0$ | = | the pressure drop across the orifice |
| $\Delta P_v$ | = | the pressure drop across the probe tip |
| $K_0$ | = | the orifice flow coefficient |
| $K_v$ | = | the probe flow coefficient |

where the coefficients $K_0$ and $K_v$ are derived experimentally.

and

$$d_v = 2(F/\pi\Delta P_v)^{1/2}$$

where

F = spring force

If the spring force is given and, by design, $\Delta P_0 = \Delta P_v$ and the maximum operating pressure of the system is given equal to $\Delta P_t$ then:

$$\Delta P_t = 2\,\Delta P_v = 2\,\Delta P_0$$

therefore:

$$\Delta P_v = \Delta P_t/2$$

therefore:

$$d_v = 2(2F/\pi \Delta P_t)^{1/2} = C$$

and since

$$\Delta P_0 = \Delta P_v$$

$$h = 1/4 \; d_0^2/d_v (K_0/K_p)$$

and therefore

$$d_0 = (4hd_v(K_0/K_p))^{1/2}$$

therefore

$$d_0 = C' \; (h)^{1/2}$$

where

$$C' = (4 \; d_v \; (K_p/K_0))^{1/2}$$

Thus, once the desired h, $P_t$, and F are chosen by design, $d_0$ is easily calculated and h at any other

$$\Delta P_0 = C'' \; (\Delta P_0/2)^{1/2}$$

where

$$C'' = 1/4 (d_0^2/d_v) (K_0/K_p)/(\Delta P_t/2)^{1/2}$$

Referring now to the upper regions of the main body 174 of the probe 165, a central cylindrical cavity 194 is defined in the upper region of the main body 174 and receives a camming member 196 in the cavity 194 of the main body 174. The camming member 196 includes a cylindrical portion 198 which has a stepped flange 200 at the lower end thereof and a camming surface 202 of frusto-conical shape at the upper end thereof.

As with the previously described embodiments, this frusto-conically shaped camming surface is engaged by a pin 204 forming a cam follower and which is mounted with a sliding fit in an opening in a portion of the main body of the sensing device 10". In this case the pin 204 is fitted in a guide member 206 mounted to the outer wall 168. The guide member 206 defines a cylindrical bore 208 which telescopically receives the camming member 196. At the upper end of the frusto-conically shaped camming surface 202 is a cylindrical cap 210 which also slides within the bore 208 to provide additional stability for the cam. Note, the camming member 196 and body 174 are not connected.

Pin 204 in turn engages a thin plate 212 which is cantilever mounted through the mounting member 214 to the main body of the sensing probe 10". Strain gage transducers 216 are secured to the cantilever mounted thin plate 212 to sense its movement and thus provide an indication of the movement of the probe 165 relative to the main body of the sensing device.

Although it is possible to make the device 10" completely fluid tight to external fluids in the environment in which it is intended to operate, the present embodiment is not so designed. In view of

the fact that liquid can pass along the outer surface of the probe 165 and upwards into the cavity in the main body housing the probe, an additional liquid bleed off cavity 218 is provided in the inner wall of the main body of the device in order to permit fluid which passes into the bore surrounding the camming member 196 to pass out through this cavity and empty out of the device through the opening 220 in the lower portion thereof. This bleed cavity 218 thus prevents a build up of back pressure above the probe which would inhibit its operation.

Referring again to the probe 165, the probe is biased outwardly from the device by spring 222 which extends between the stepped flange 200 and a corresponding annular cavity defined in the lower region of the guide member 206. The force applied by this spring 222 is important with respect to the design of the orifice 192 since maintenance of the liquid bearing between the probe tip 184 and the surface being investigated depends on the ability of the liquid pressure to overcome the spring pressure as the device is lowered onto the surface being investigated. Obviously, the force applied by the spring will vary as it is compressed or extended upon movement of probe 165 relative to the main body of the device.

It is to be noted that the construction of Fig. 10 could be combined with a construction similar to Fig. 1 with the use of a reference probe, but without additional platten of the embodiment of Fig. 1.

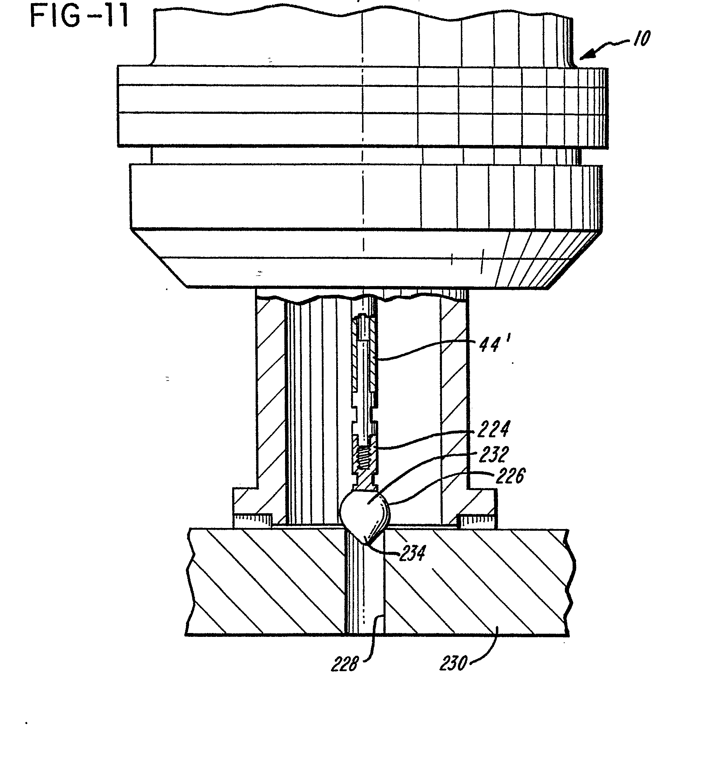

Referring now to the further embodiment disclosed in Fig. 11, this is essentially the embodiment of Fig. 1 with an adaptation of the lateral position sensing probe 44. In this embodiment, the lateral position sensing probe 44' is provided with an extension 224 at the lower end of which is a probe centering tip 226. The purpose of this tip 226 is to aid in locating the exact center of an existing hole such as hole 228 in an exemplary workpiece 230.

The tip 226 consists of a spherical upper portion 232 which blends into a conically shaped lower portion 234 with a radiused lower end. With this construction, as the probe approaches the hole 228 from the side, the conically shaped lower portion 234 first reaches the edge of the hole and the tip 226 is immediately centered in the hole through the force of spring 88 and the bending of the probe 44'. Bending of the probe 44' causes the strain gages 66 and 68 to transmit the necessary electrical signals to indicate the necessary direction of movement of the device 10 to center it over the hole 228. Likewise, if the device 10 is moved laterally away from the hole the spherical design in conjunction with the conical tip assist in permitting the probe 226 to easily lift out of the hole 228 without causing damage to the lateral position sensing probe.

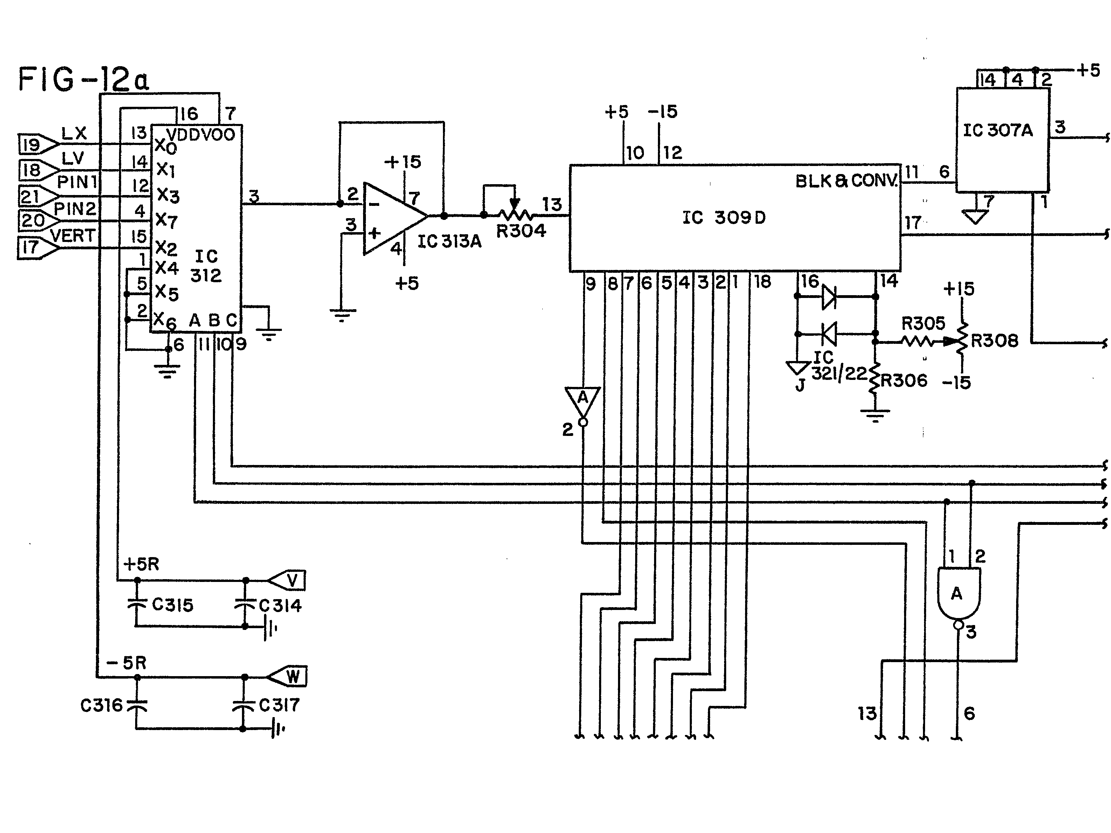

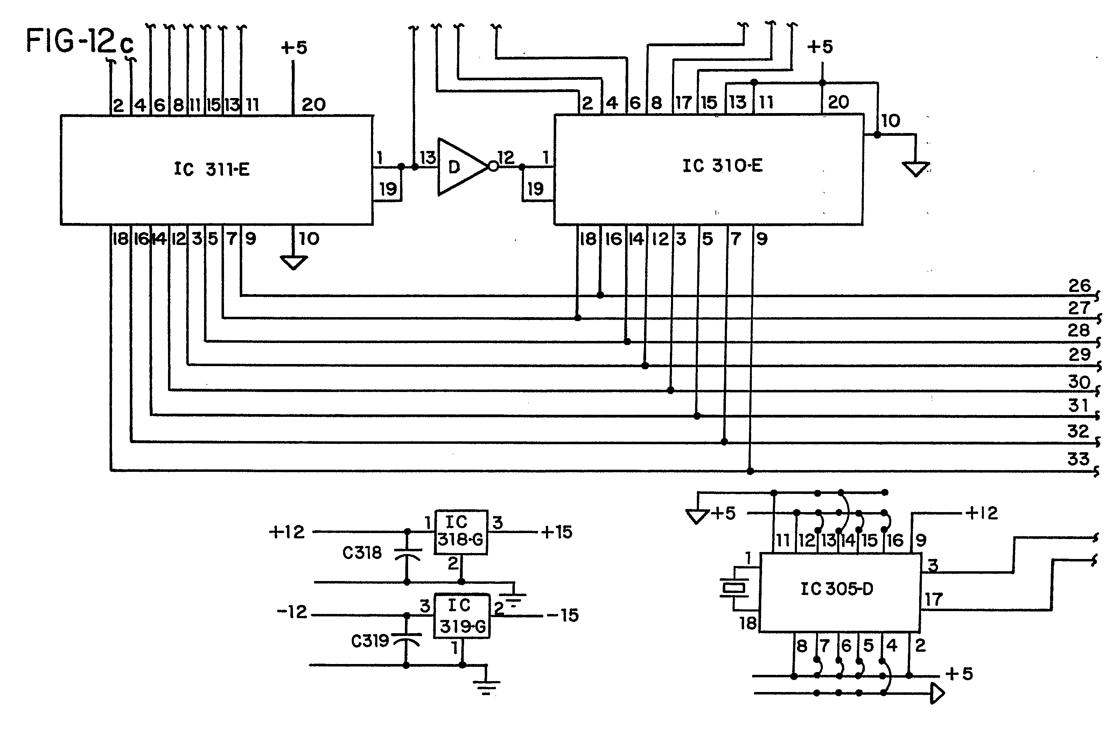

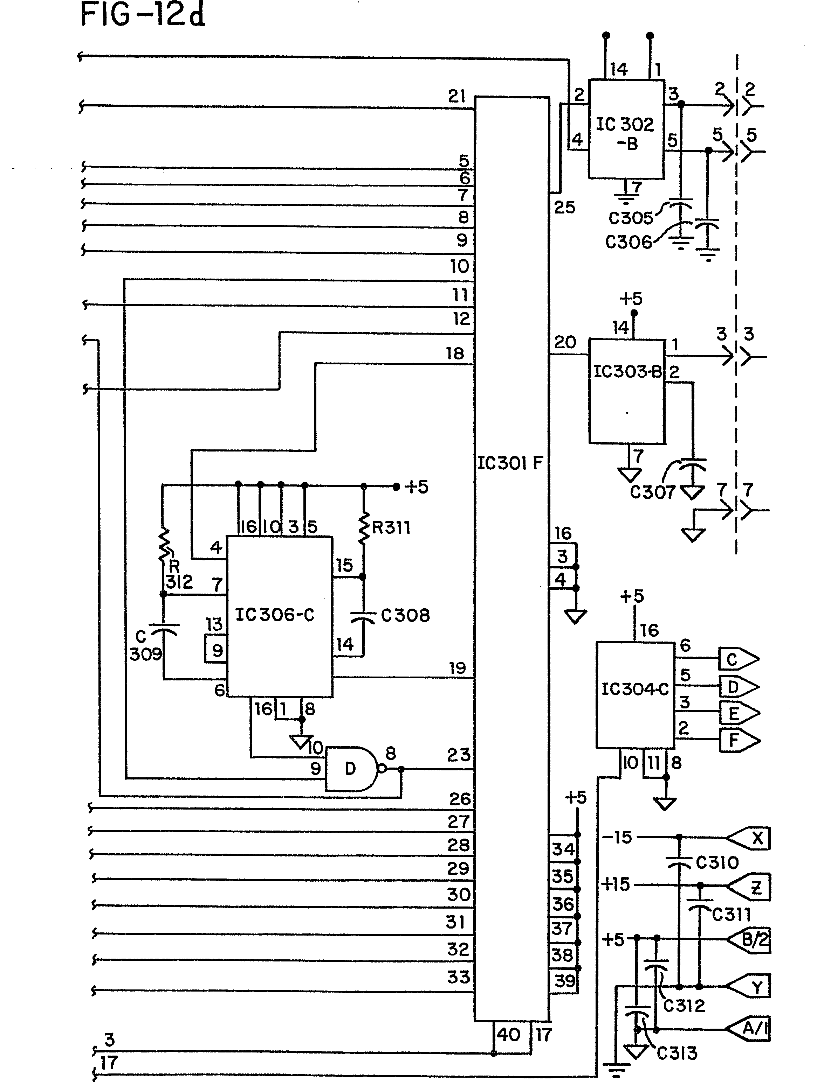

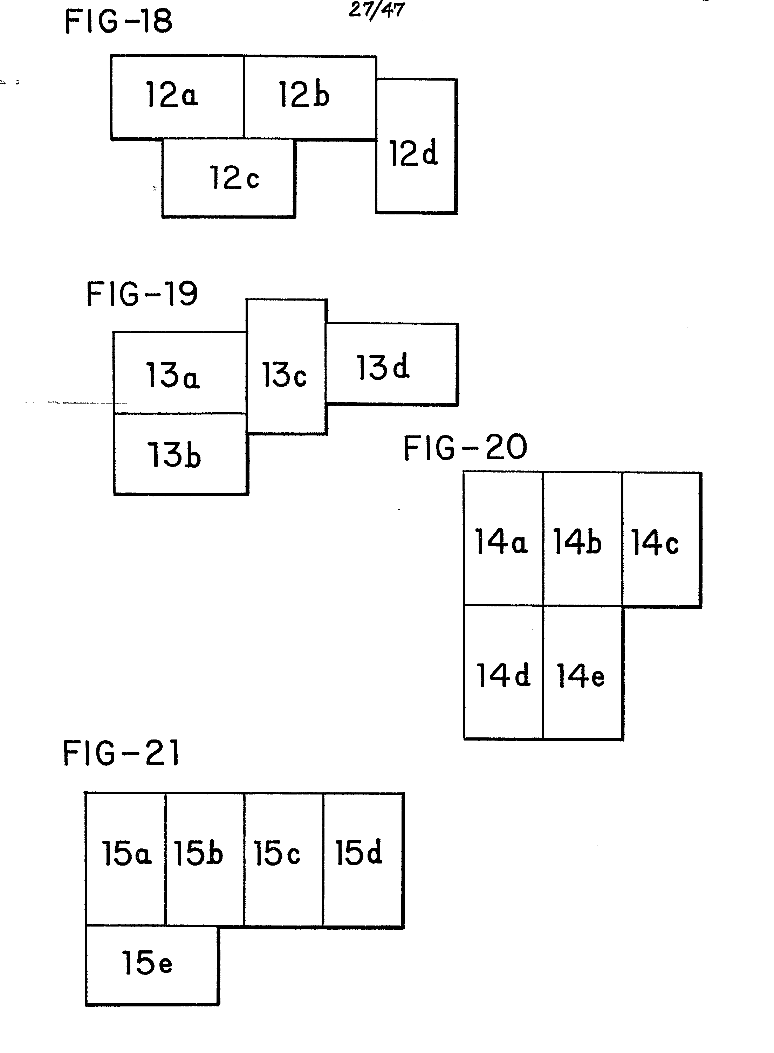

The circuitry of Figs. 12a-21 is specifically designed for utilization in connection with the embodiment of Fig. 1, but is easily adaptable for use with the other embodiments described above. Therefore, only the circuity will be described to indicate how the various strain gage transducer outputs are utilized to provide indications of the perpendicularlity or angularity of the device with respect to an external surface, the relative closeness of the device to that surface and the position of the lateral position sensing probe relative to a discontinuity in that surface.

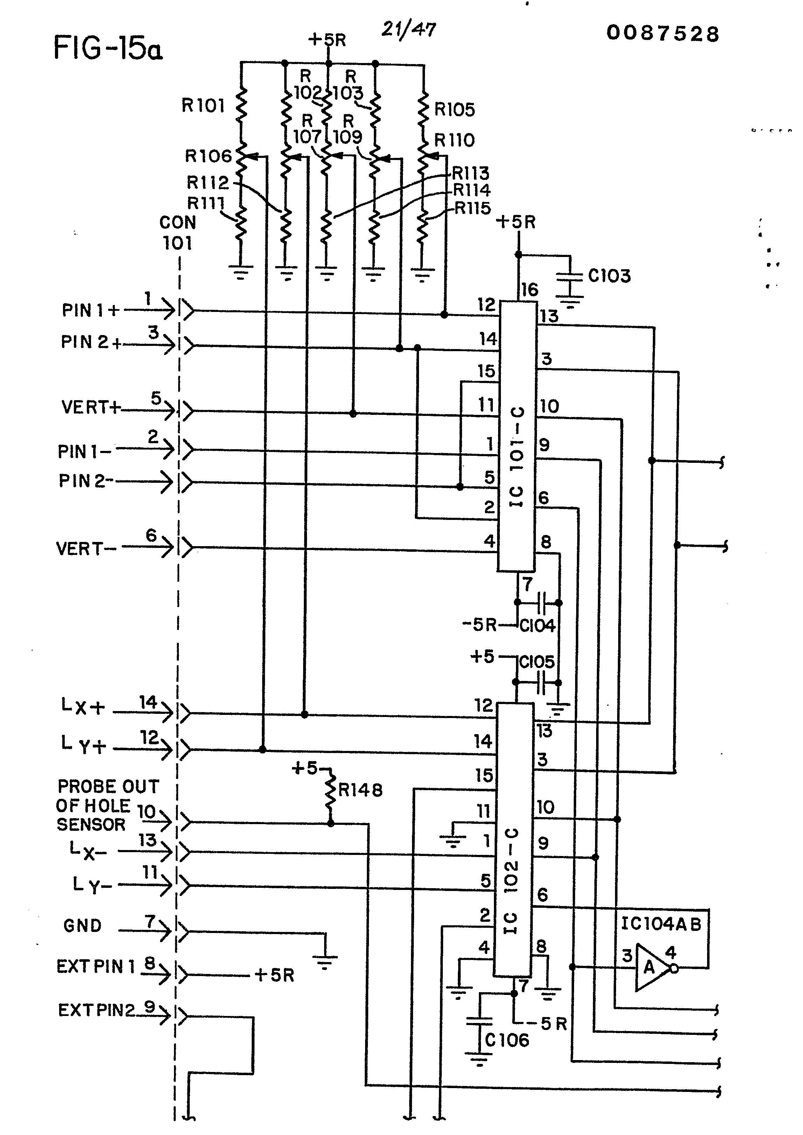

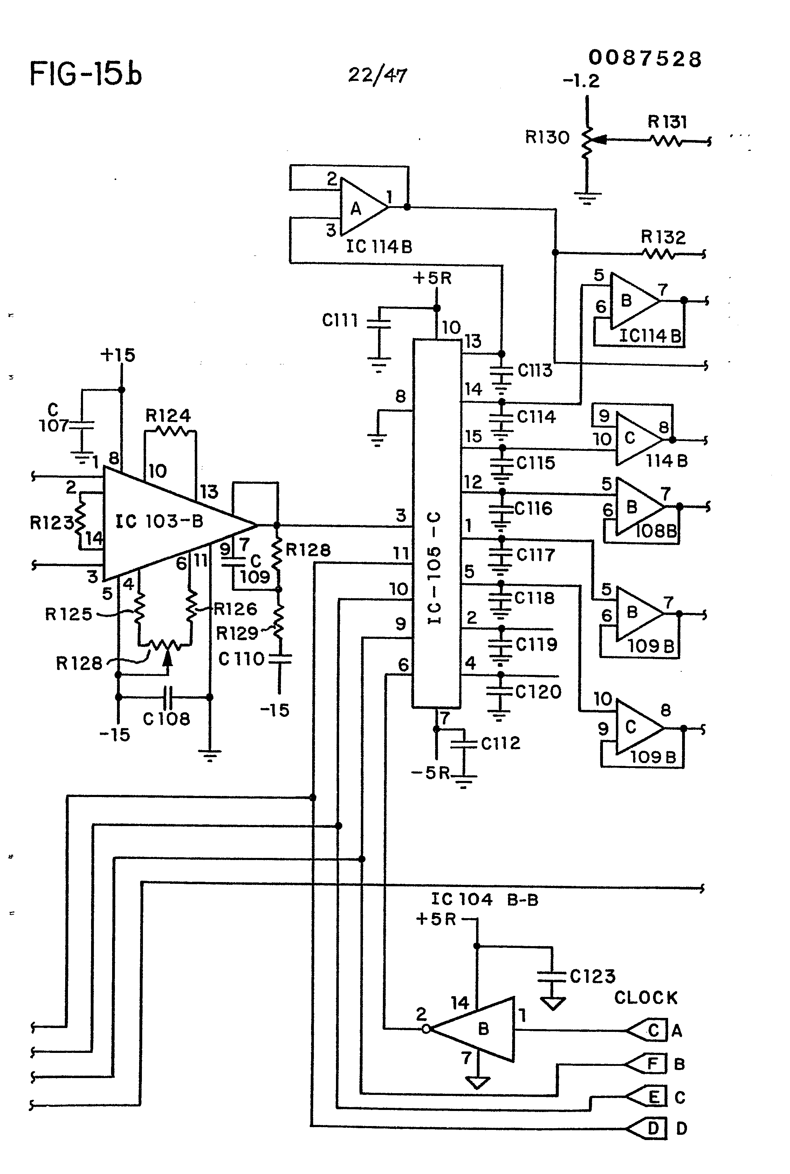

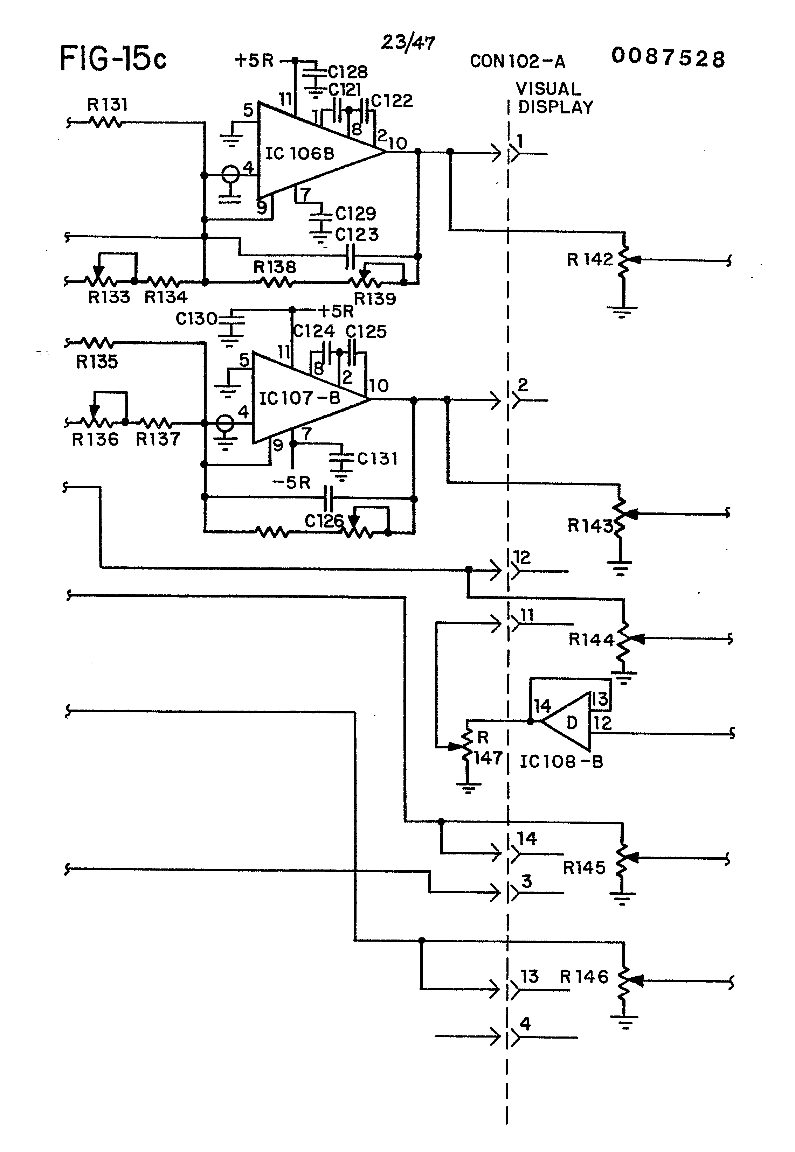

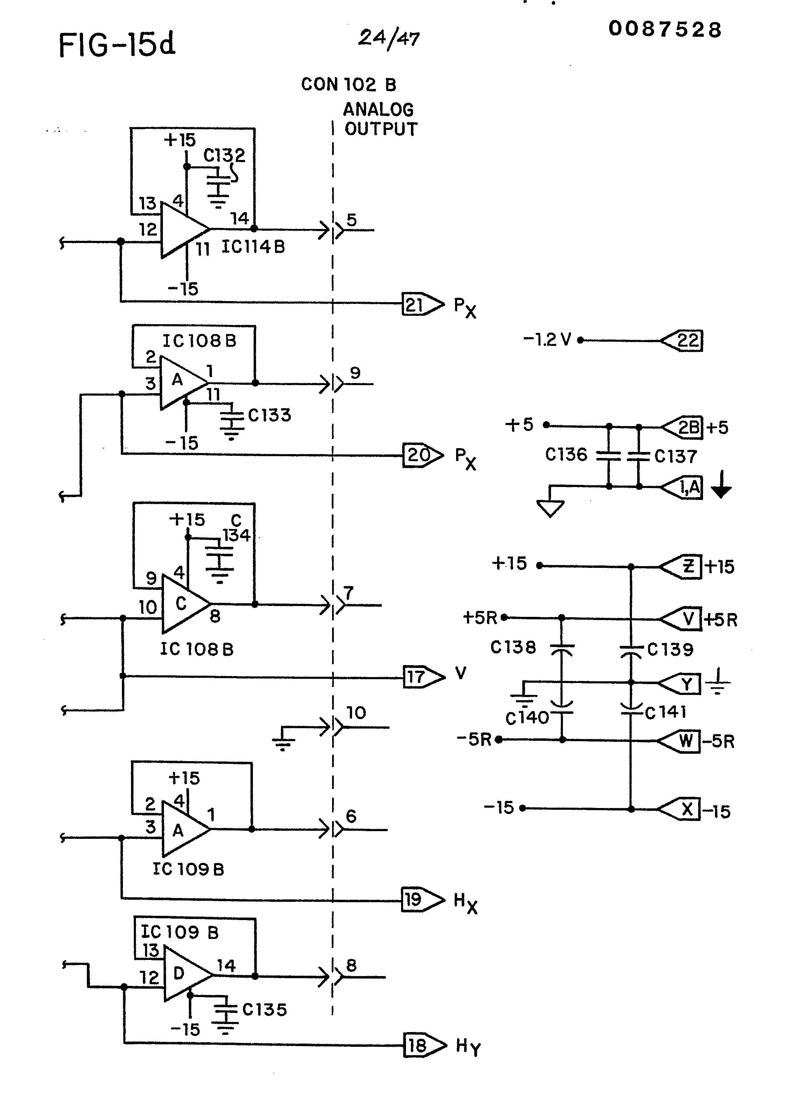

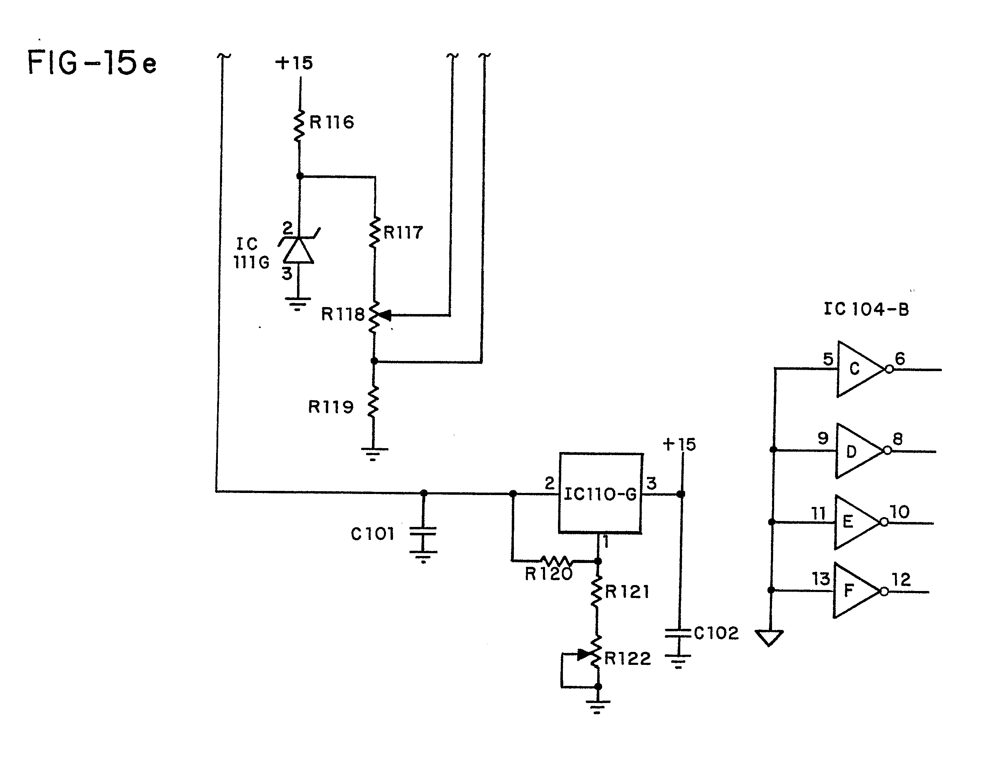

When the device 10 is assembled, an arbitrary X and Y axis is established which, as the device is viewed in Fig. 1, the X axis lies in the plane of the paper and the Y axis perpendicular to the paper. Information with respect to the movement of the lateral position sensing probe 44 in the X axis is provided by strain gage transducers 66 while information with respect to movement of the probe in the Y axis is provided by strain gage transducers 68. Strain gage transducers 66 and 68 are bonded to both sides of the flexible members with which they are associated and are interconnected to form a four active arm wheatstone bridge. The resulting differential output signal changes polarity as the probe tip is deflected through the free state, zero position. The lateral position sensing probe output signals $L_x+$ and $L_x-$ and $L_y+$ and $L_y-$ are connected to the input multiplexer on the input side of Fig. 15a.

As previously mentioned, the vertical position sensing measurement is provided through the output of the strain gage transducers 96. These strain gages are mounted to both sides of the thin flexible plate 94 and are interconnected to form a complete four active arm wheatstone bridge. The resulting differential output signal is designated as Vert+ and Vertand is connected to the input multiplexer illustrated in Fig. 15a.

The relative perpendicularity or angularity of the device, as previously mentioned, is provided through the inputs of strain gages 118. Again, in initial assembly, these strain gages and the thin plates 112, 114 to which they are bonded are aligned with the selected X and Y axis which coincides with that described above in connection with the lateral position sensing probe 44. Again, the strain gages are bonded to both sides of each of the thin plates and are interconnected to form a separate four active arm bridge on each plate 112, 114. The resulting differential electric signals are designated Pin 1+ and Pin land Pin 2+ and Pin 2- and are connected to the input multiplexer on the input circuity illustrated in Fig. 15a.

The two sensing probes 104 and 106 are positioned equidistant from the +X axis at a specific distance from the Z axis extending upwardly alongside the lateral position sensing probe 44 and which is the central axis of the device 10. The reference probe 120 is positioned on the -X axis at a distance from the Z axis equal to the distance from the probes 104 and 106 to the Z axis. As previously mentioned all three of the probes contact the platten.

The two sensing probes 104 and 106 are, as shown, longer than the reference probe 120. When the device 10 is aligned exactly perpendicular with the target surface, the two sensing probes 104, 106 will be depressed to the same relative length as the reference probe 120, causing the thin plates to be deflected to about half of their intended deflection over the full measuring range of the device.

When the sensing device 10 is tilted in the plane passing through the X axis, the two plates will be deflected in exactly the same manner thus creating output signals from the transducers that are equal in polarity and magnitude. When the position sensing device is tilted in the plane passing through the Y axis, the thin plates will be deflected in equal but opposite directions, causing a proportional change in the output signals from the strain gages. This reversal and change in magnitude of one signal relative to the other is electronically differentiated from the condition when both signals vary in the same manner to generate the processed signals that define the perpendicularity of the sensor head relative to the target surface. The same differential can be utilized through proper integration to provide an indication of the exact angle of the position sensing device relative to the surface and in an azimuth plane.

Referring now more specifically to Figs. 15a-d which constitute the input circuitry of the device from the various strain gages, fixed and variable voltages are developed from onboard regulators in this circuitry to excite and calibrate each of the strain gages utilized as input. The individual bridge output signals are multiplexed, amplified, demultiplexed, and stored on sample and holds and then analog processed to yield the desired X and Y axis perpendicularity, horizontal position and vertical height outputs. These signals are then scaled to true engineering units, buffered and output to the user at the analog ouput connector and placed on the system buss for use by the associated sensing device circuits described below.

As previously stated, the two perpendicularity sensors Pin 1 and Pin 2, the horizontal X and Y probe sensors and the vertical sensor are connected to the four channel differential multiplexers IC101 and IC102. An "opposite polarity" Pin 2 signal is also created by reversing the polarity of Pin 2 signal and feeding it to channel 6 on differential multiplexer IC101. Precision voltage reference IC111 and resistors 117 and 119 and potentiometer R118, form a bridge emulation circuit that creates a high common mode, low differential voltage that is adjusted to be equal to the full scale output of the most sensitive strain gage in the sensing device 10. This signal is input to channel 7. Channel 8 is grounded.

All the strain gage bridge sensors, except the perpendicularity Pin 2, are excited from the regulated output of IC112. The Pin 2 bridge is excited from the adjustable voltage regulator IC110 to provide a means of adjusting the gain of the Pin 2 bridge to exactly match that of the Pin 1 bridge. Resistors R101 through R115 establish a small potential across the potentiometers R106 through R110 which is used to adjust the output of each bridge to zero.

The eight data channels of the two multiplexers are sequentially addressed by the system clock inputs B through D. Clock B is coupled directly to the "enable" or "select" Pin 6 of multiplexer IC102 and through inverter section A of IC104 to the same Pin on multiplexer IC101. When Clock B is at a logic high, multiplexer IC101 is selected and multiplexer IC102 is tristated or disconnected and vice versa. Clocks C and D are decoded to select one of the four channels of data presented to each multiplexer.

The differential outputs of the two multiplexers are connected to a high speed instrumentation amplifier IC103 that amplifies the small differential voltage from the selected bridge to a usable signal level while rejecting the common mode DC bridge voltage and any common mode noise signals that are induced in the interconnecting cables, etc. This high level signal is then routed through demultiplexer IC105 which switches the output to the selected sample and hold capacitor C113 through C120 as determined by the address generated by the system clock signals B, C and D.

Clock A is inverted through section B of IC104 and used to enable the demultiplexer output after the amplifier has settled or stabilized to the new level, thus charging the selected capacitor to the signal level.

Unity gain buffer amplifiers section A, B and C of IC114, section B of IC108 and sections B and C of IC109, provide a very high impedence load to the sample and hold capacitors to provide any bleed down of the analog signal level stored in each capacitor. The two perpendicularity signals on capacitor C113 and C114 are summed with an offset voltage with potentiometer 130 in the chopper stabilized, low drift amplifier IC106. The series resistance of potentiometer R133 and resistor R134 is adjusted to exactly match the resistor R132 so that both signals provide exactly the same output when the signal levels are exactly the same. Potentiometer R130 is adjusted to reduce the output of amplifier IC106 to zero when the perpendicularity signals are at one half of their full scale output. This condition occurs when the sensing probe 10 is perpendicular to the target surface in the plane containing the X axis.

When the position sensing device 10 is inclined in only the plane containing the X axis, the signal levels on both C113 and C114 increase or decrease in equal amount causing the output of amplifier 106 to increase above or below zero to indicate the magnitude and direction of inclination of the main body of the position sensing device in the plane of the X axis.

When the position sensing device 10 is inclined in the plane of the Y axis, the voltages on capacitors C113 and 114 vary in equal and opposite directions, resulting in no change in the output of amplifier IC106. Potentiometer R139 and resistor R138 establish the gain of amplifier IC106. Capacitors C121 and C122 are used by amplifier IC106's chopper stabilization system. Capacitor C123 limits the band pass of the amplifier to minimize noise feed through. The processed signal from IC106 is scaled to true engineering units with potentiometer R142, buffered with unity gain amplifier IC114, section A and routed through the analog output on the connector of the control unit (not shown).

The voltage on capacitor C113 is also summed with the voltage on C115 in amplifier IC107. This amplifier circuit is the same as the previously described example using amplifier IC106, except no offset is summed with the voltages stored on the capacitors. The voltage on C115 is the same magnitude, but now opposite in polarity, to the voltage on C114 so now the voltages on C113 and C115 cancel each other when they are summed together.

Since these two signals are always equal in magnitude but opposite in polarity for any inclination of the sensing device 10 in the plane containing the X axis, the output of amplifier IC107 remains unchanged. When the position sensing device is inclined in the plane containing the Y axis, the voltages now become equal in magnitude and polarity and sum to produce an output which changes in polarity as the angle of inclination in the plane containing the Y axis passes through the zero or true perpendicularity position.

The amplifier IC107 output is buffered and output by amplifier IC108, section A in the same manner as the previous example using amplifier IC114 section A.

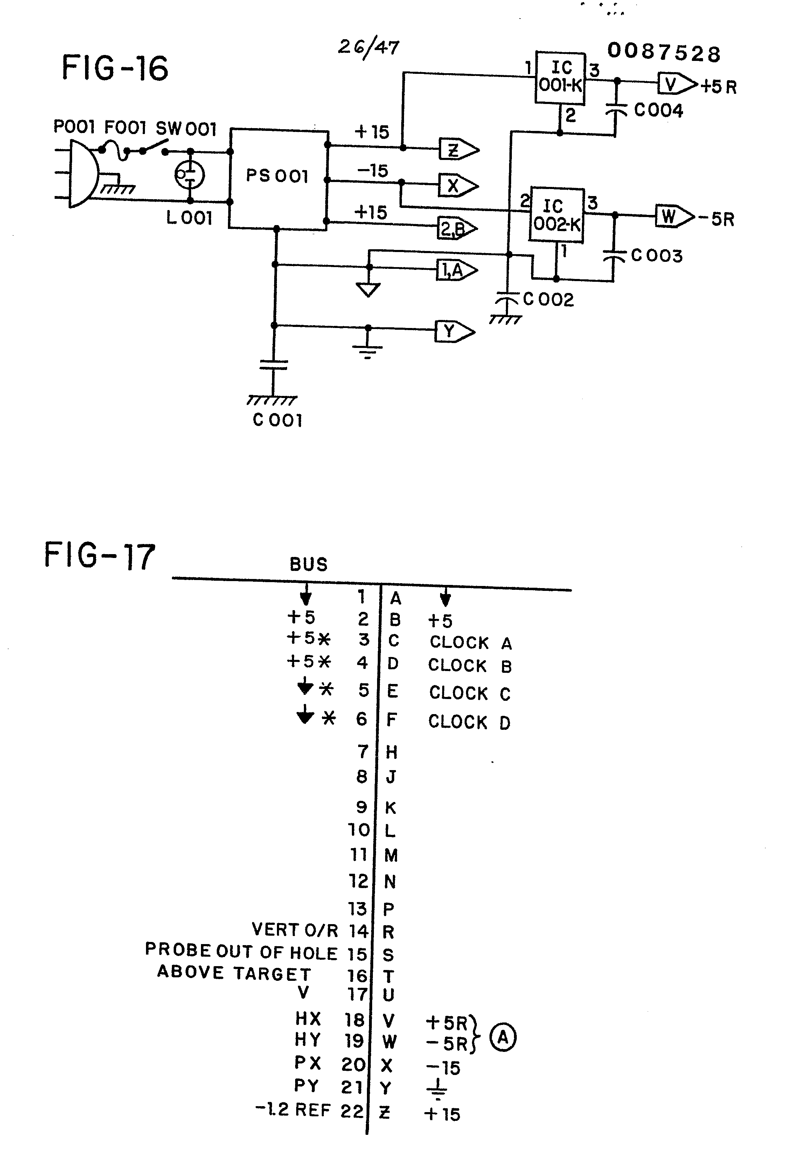

The two horizontal position signals stored on capacitors C116 and C117 and the vertical height signals stored on capacitors C116 are buffered by amplifiers IC109 sections B and C and IC108 section B, respectively, scaled with potentiometers R114 through R146 and buffered with amplifiers IC109 section B and D and IC108 section C, as in the previous examples. The scaled vertical output is again buffered with amplifier IC108 section D and rescaled with potentiometer IC147 for use by the digital voltmeter in the visual display circuitry described below. Remaining capacitors are provided to bypass low and high frequency noise to and from the system buss power supply feeds of Fig. 17.

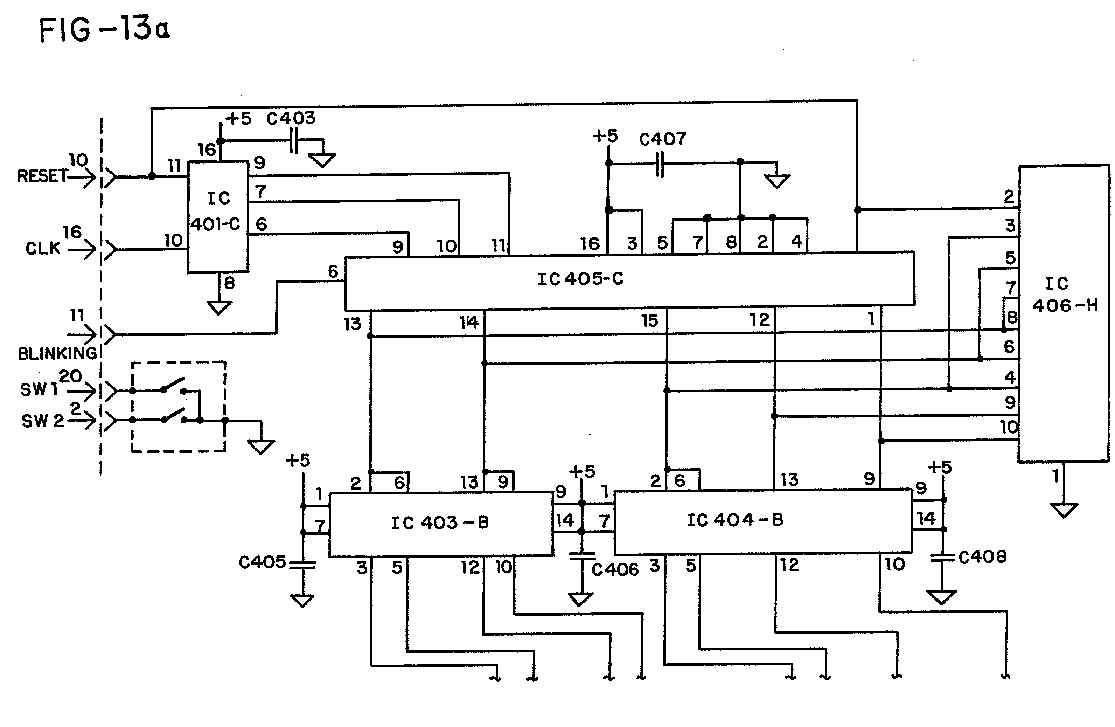

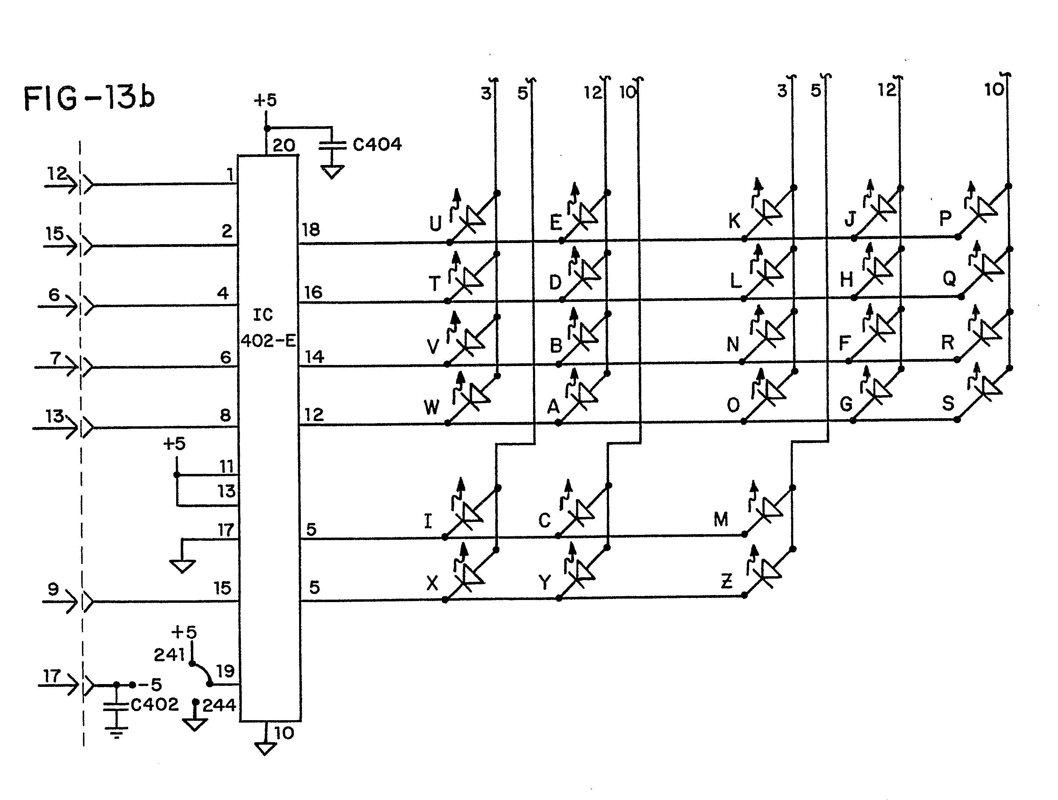

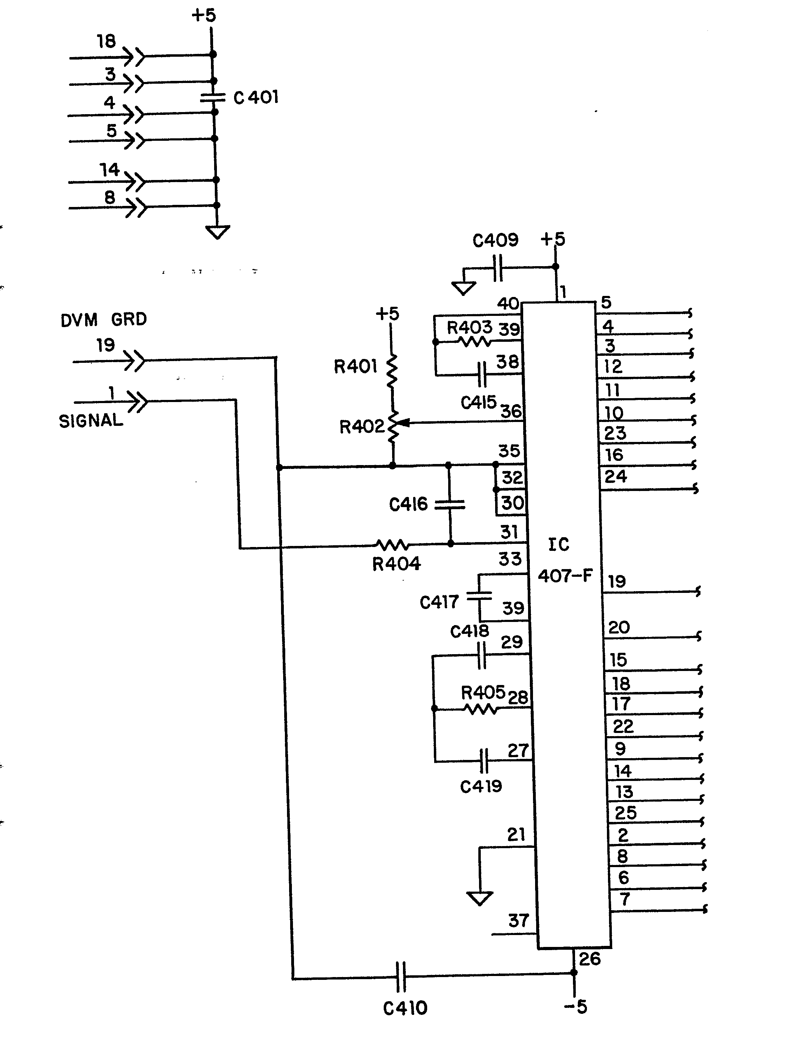

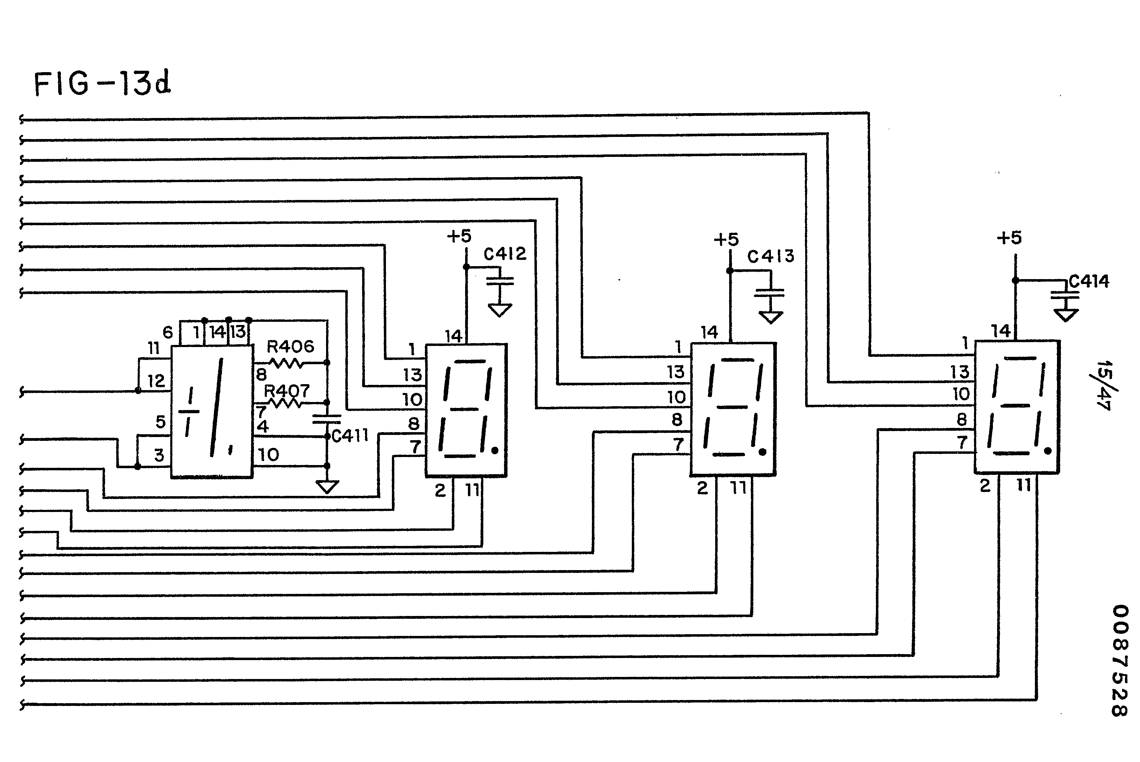

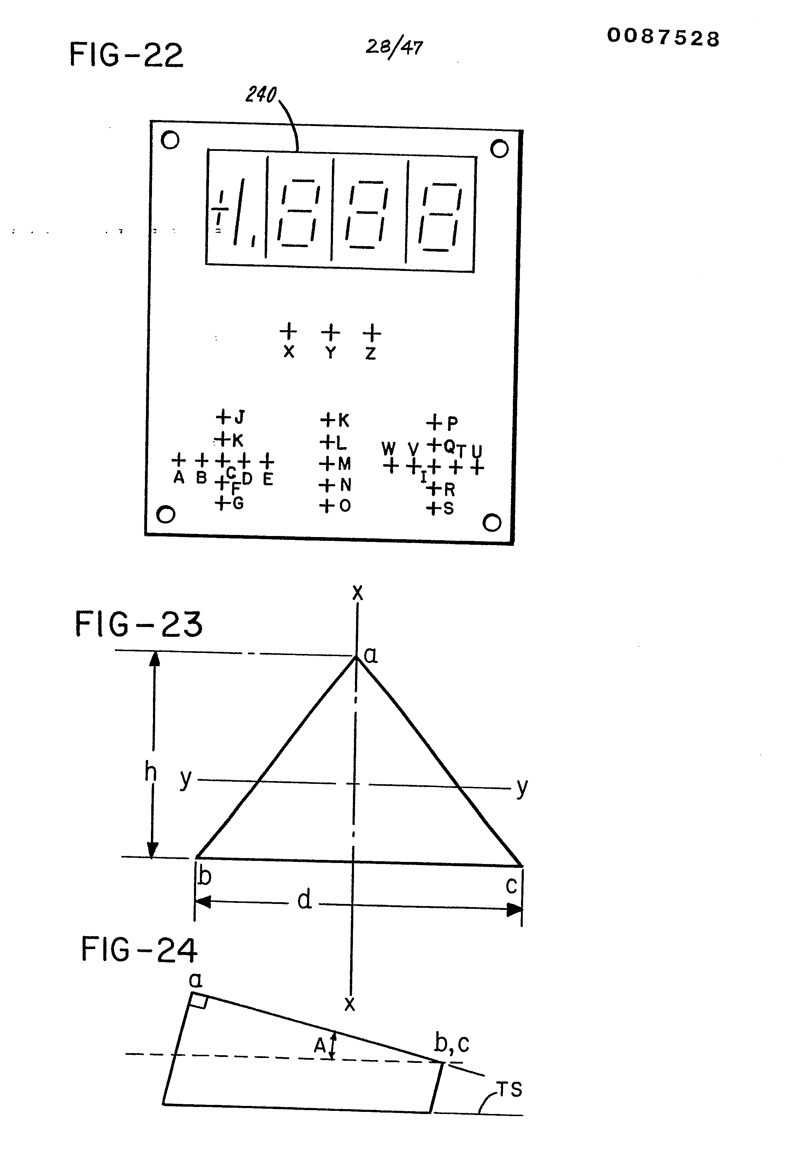

A visual display for the operator controlling movement of the position sensing device is provided in a format illustrated in Fig. 22 where each of the lettered positions indicates a visible LED lamp. In addition, a digital display 240 is provided which indicates the vertical height of the position sensing device relative to the external surface being examined. The circuitry for driving this display board of Fig. 22 is illustrated in Figs. 13a-d. The LED displays in the visual display are arranged in a five column, six row matrix as illustrated in Fig. 13b. Each column corresponds to a specific horizontal/vertical position or perpendicularity axis in the visual display as indicated in Fig. 22. The columns are connected to power at the same time the axis signal is connected to the LED driver. The output of the LED driver then selects the appropriate LED in the row and the LED lights for a brief period equal to 20 percent of the time for one cycle through all the columns.

The sensitivity LED indicators are selected by the sensitivity switch and the center green LED indicators in each axis are multiplexed in with a display LED in the first three rows. A completely separate 3 1/2 digit digital voltmeter chip creates a digital display of the vertical position of the sensor in true engineering units on the digital display indicator 240.

Referring now to the specifics of this circuitry, IC407 is an LSI integrated circuit containing a complete dual slope 3 1/2 digit digital voltmeter that directly drives the seven segment LED numerical displays 240. The resistors and capacitors connected to this circuit are specified by the manufacturer and provide a scaling and internal clock timing functions. Resistor 401 and potentiometer R402 set the zero point of the display.

The system signal clocks ripple counter IC401 which generates a three line address for a multiplexer IC405. The counter sequentially generates six unique addresses. The first five addresses connect the voltage to the selected input of IC403 or IC404. The sixth address connects the same voltage to the reset input of the ripple counters in the visual display and the display driver board, resetting all counters and resynchronizing the ripple counter in the visual display to the ripple counter on the display driver board. Both counters will then generate a synchronous address relating to a column in the LED matrix to one of the five sensor axis signals.

IC403 and IC404 are switching transistors arrays which switch power to the selected row of display LED's when the switches are turned on by the signals from the multiplexer IC405. IC402 is a buffer-sinker which connects the cathode of the selected LED in each row to ground in response to the output of the LED driver on the display driver board. Display LED's I, C and N are the green center LED's which are simply sequentially turned on during the first three change of addresses to the multiplexer IC405. They appear to be on continuously because the human eye integrates the pulsed light source and sees only the average illumination and intensity. The cathodes of these LED's are tied in common to ground through IC402.

LED's X, Y and Z are the sensitivity indicators. A separate input to IC402 is driven low at the right time by the logic on the display board to cause the LED related to the specific position of the sensitivity switch to turn on. The jumper shown on Pin 19 of IC402 is strapped to the power supply or ground depending on the choice of one of two different integrated circuits that can be utilized for IC402.

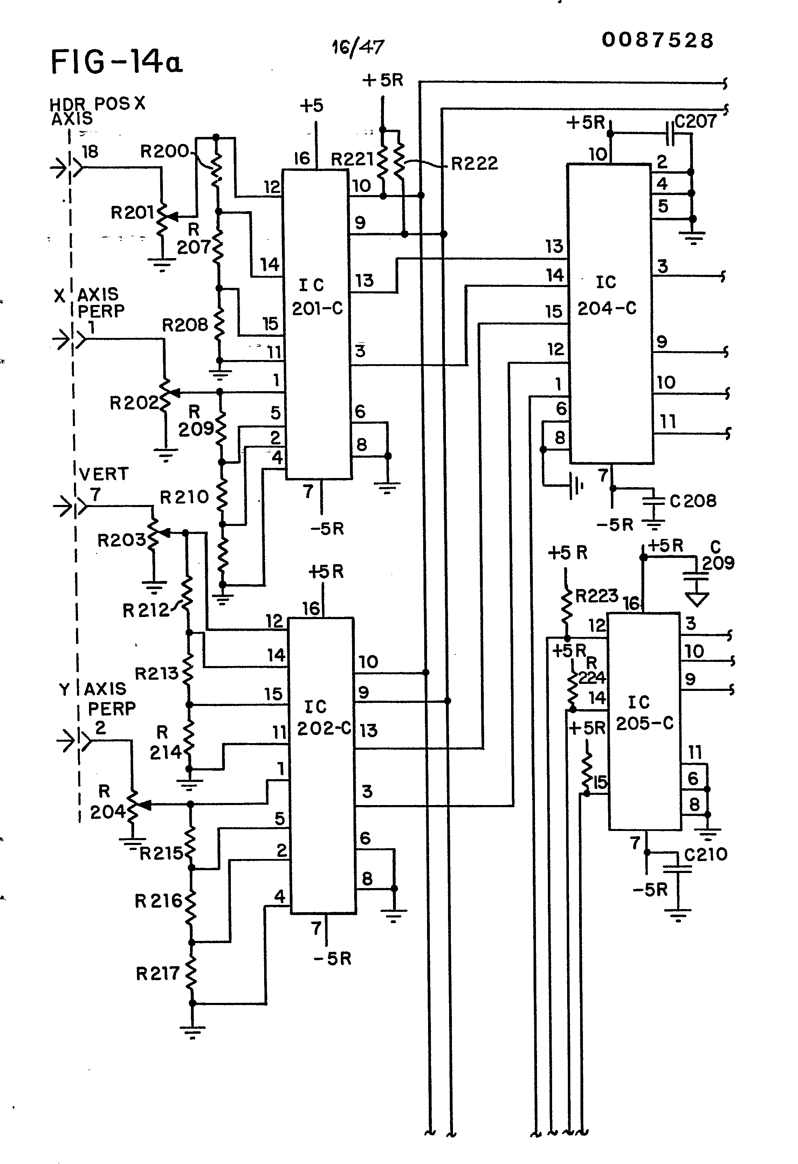

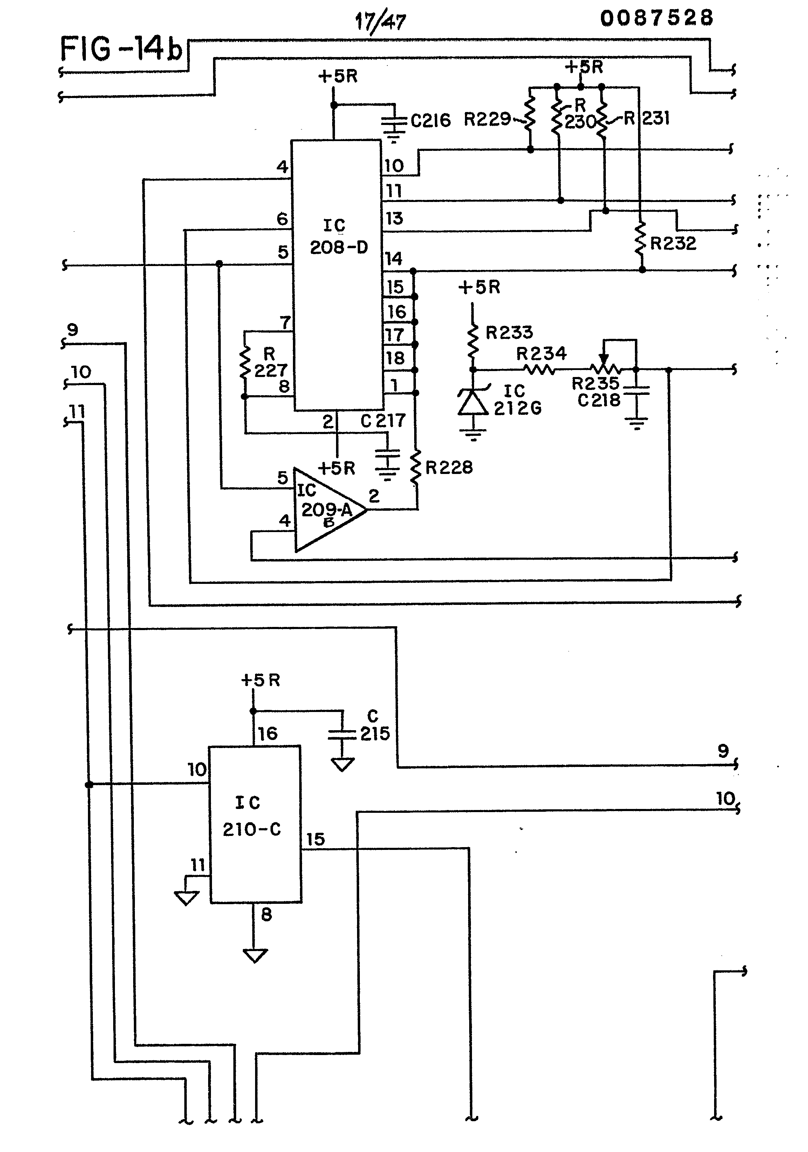

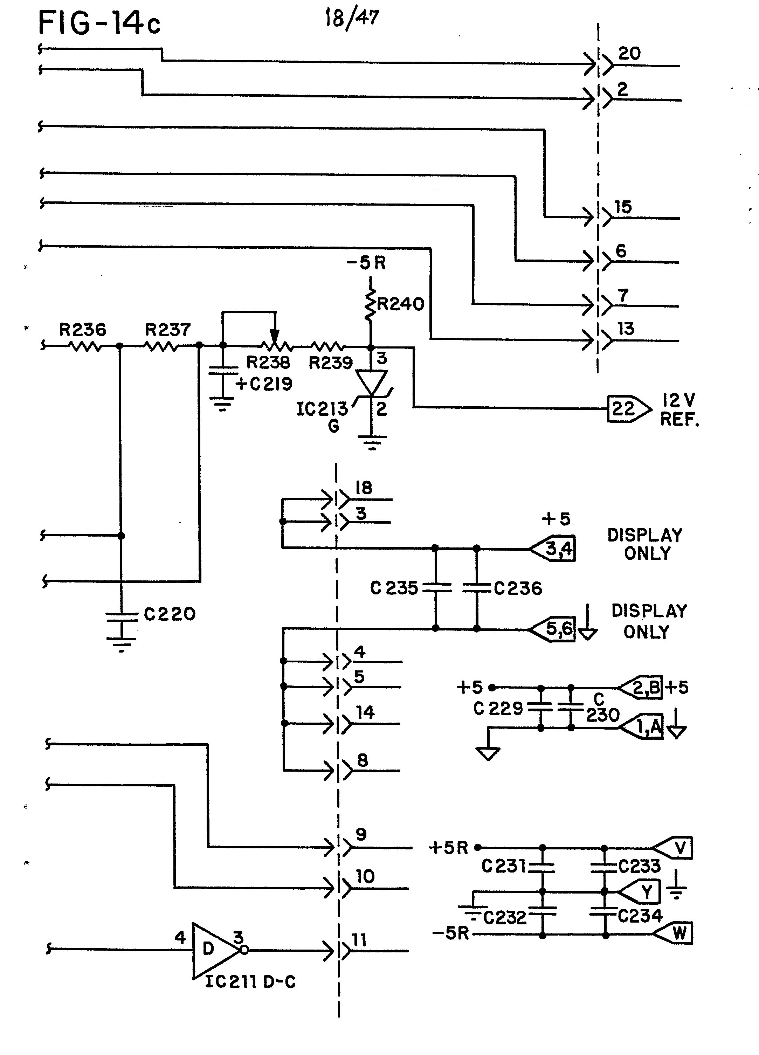

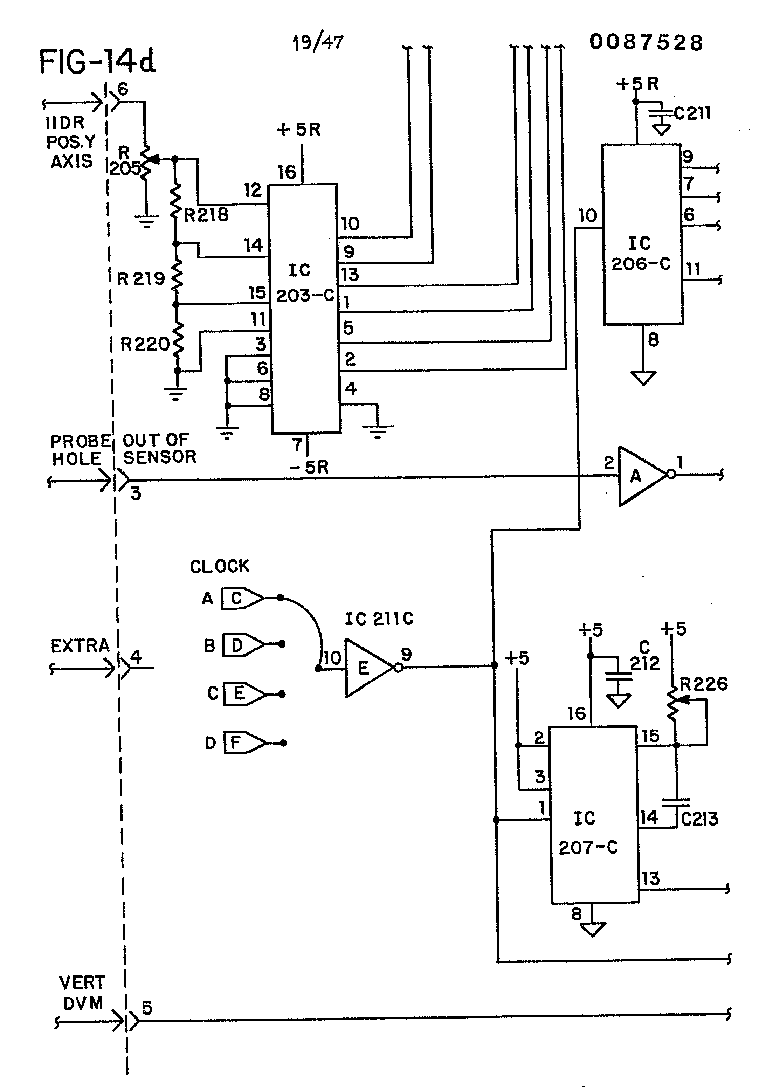

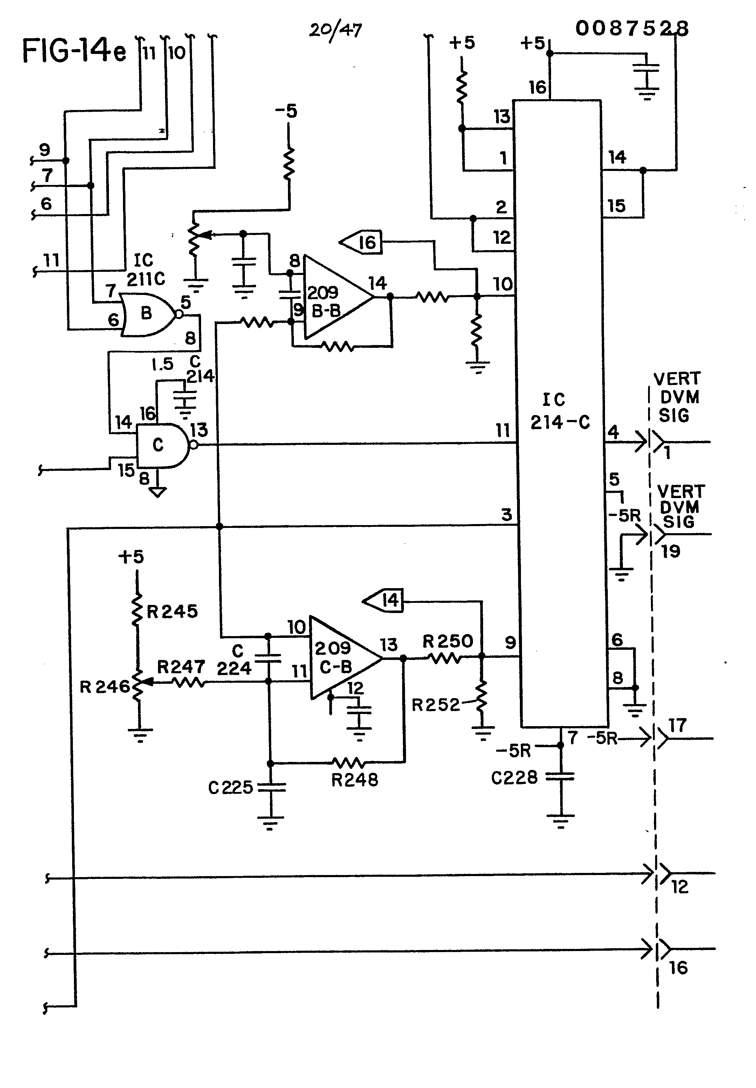

Referring now to the display driver circuitry of Figs. 14a-e, as previously mentioned, the X and Y axes perpendicularity and horizontal position signals and the vertical position signal are scaled to the fine medium or coarse signal levels as selected by the switch in the visual display and sequentially multiplexed into an L.E.D. driver. The multiplexing logic selects one of the five scaled input signals, applies it to the L.E.D. dirver and applies power to the selected axis of the visual display. The L.E.D. driver turns on the L.E.D. in the visual display that is scaled to the instantaneous polarity and magnitude of the applied signal in the selected axis. Additional logic causes all L.E.D. displays to blink at the rate of $2H_z$ when the vertical position signal is near the maximum positive level. This indicates that that sensor head is not in contact with the target surface.

This logic also causes the vertical position digital display to display only a "-1." to indicate an over range condition when the vertical position signal is near the maximum negative level. This indicates that the sensor head has been collapsed to the least working height. Auxiliary logic also detects the closing of the "probe out of hole" switch that was functionally described in the "Input Board" circuit discussion. This action blanks the X and Y axis horizontal position L.E.D. displays in the visual display unit.

Looking at Figs. 14a-e, the X and Y axis position and perpendicularity signals and the vertical position signal are individually scaled to specific fine, medium and coarse signal levels by potentiometers R201 through R205 and resistance voltage dividers R206 - R208, R209 - R211, R212 - R214, R215 - R217 and R218 - R220. Scaling demultiplexers IC201, 202 and 203 select the fine, medium or coarse level of each signal as determined by the address created by the sensitivity switch in the visual display that is connected to the two address lines pulled high by resistors R221 and R222 and tied in common to all demultiplexer unit address inputs.

The lower half of demultiplexer IC203 selectively grounds one of the three inputs to multiplexer IC205 to indicate which sensitivity range has been selected. Resistors R223 through R225 pull the inputs to IC205 to a logic high when they are not selected. The five individually scaled ouput signals are multiplexed to the L.E.D. driver IC208 by multiplexer IC204. The multiplexer address to IC204 and IC205 is created by ripple counter IC206 which receives clock pulses from the system buss through inverter section E of IC211. This clock signal is also output to the visual display through connector 202.

The ripple counter continually counts to five and is then reset by another counter in the visual display. This reset action is explained in detail in the description of the visual display above. The five counts create five unique address outputs which select the five signal channels in a specific sequence.

The L.E.D. driver IC208 is essentially a set of 10 precision comparators. One input of each comparator is tied to the signal input pin 5. The other input is tied to the intersection of two resistors in a voltage divider made up of 10 resistors connected in series. The ends of the voltage divider appear at pins 4 and 6 of IC208.

Normally the voltage divider is connected between ground and a reference voltage. An input signal that is increased from zero to the reference voltage will turn on the first L.E.D. at 10 percent of the reference level, the second at 20 percent of the reference voltage, etc. until the tenth L.E.D. is turned on when the input equals the reference voltage. The outputs of the L.E.D. driver are "open collector" configurations which means that the output acts like a switch with one side connected to ground. One side of a load (resistors R229 through R232) must be connected to a low impedence voltage source that will supply the load current when the L.E.D. driver switches the other end to the ground.

IC212 and 213 are band gap precision 1.2V reference voltage sources that are connected to provide bipolar reference voltages. Resistors R234 and R239 and potentiometers R235 and R238 are connected in series with the two ends of the voltage divider in the L.E.D. driver IC208. These components permit the voltage across the resistance voltage divider in L.E.D. driver IC208 to be adjusted to establish the sensitivity of the L.E.D. driver (input voltage step required to turn on each L.E.D.). The addition of capacitors C218 and C219 creates a low pass filter that prevents any transient fluctuations from appearing at the voltage divider of IC208. In this application, the voltage across the divider network is adjusted asymetrically to move the zero voltage level upward on the ladder to the point that it is exactly centered between the input voltage required to turn on either of the two yellow (+Y and -Y outputs) L.E.D.'s in a display axis of the visual display unit. This is necessary to cause circuit operation to be centered about the four uppermost and consecutive outputs of the L.E.D. driver because only four of the ten available outputs are required.

There are five L.E.D.'s in any display axis, (two yellow, two red and one green L.E.D.). The green L.E.D.'s are effectively "on" all the time, so only the four L.E.D. outputs +R, +Y, -Y and -R are needed to control the five L.E.D.'s in any display axis. The other outputs are tied together and to the output of comparator IC209A. This comparator prevents the -R output from turning off when the input voltage swings below the trip point for the "-R" L.E.D. in any display axis. One side of the comparator is connected to the signal input and the other side is referenced to a voltage divider formed by resistors R236 and R237 which are selected to set this reference voltage to cause the comparator to switch to a logic low level at the same time the "-R" L.E.D. is pulled to a logic low by the L.E.D. driver. Resistor R228 limits the current flow to the comparator to set the minimum output of the comparator to a logic low and capacitor C220 filters transients from the comparator reference input.

The comparator is effectively "or tied" such that either the comparator in the L.E.D. driver IC208 or the external comparator IC209A can switch the -R line to a near ground logic low. When the input voltage falls below the trip point for the comparator in the L.E.D. driver IC208, the internal compartor output will try to go to a logic high but the external comparator will hold the logic low condition for any more negative swing of the input signal.

The integral L.E.D. driver logic prevents the +R line from switching to a logic high for positive signal voltages that exceed the most positive voltage on the internal voltage divider, therefore both red (-R and +R) L.E.D. driver line will remain at a logic low when the bipolar input voltage exceeds the reference levels set up on the internal voltage divider in IC208.

It is significant to note that the L.E.D. driver is normally set up to provide a 75 milivolt step between each of the four L.E.D. driver outputs whereas the full scale signal input may swing as much as ± 2 volts. This biasing scheme for the L.E.D driver establishes a very high sensitivity near the zero voltage level that represents the aligned condition for the position sensing device vertical or Z axis while also maintaining the red L.E.D.'s in the "on" condition when the input ·voltage far exceeds the maximum reference (far out of alignment) to indicate the direction that the position sensing device must be moved to establish alignment.

Resistor R227 establishes a limit to the current that can be drawn into or "sinked" by each output of the L.E.D. driver. Resistors R229 through R232 pull the four L.E.D. driver outputs to a logic high when the outputs are not "turned on" or pulled to a logic low by the L.E.D. driver. IC207 is a one shot that produces a pulse with a duration determined by potentiometer R226 and capacitor C213. This pulse delays the turn on of the selected L.E.D. because digital devices tend to turn off more slowly than they turn on and this causes ghosting or flickering of any L.E.D. that is not quite fully off when the next L.E.D. is turning on. The time delay allows full turn off before the next L.E.D. can be turned on.

IC210 is a ripple counter that divides the previously divided by 5 clock pulse on this multiplexer address line down to a 2H$_z$ clock that is used to "blink" all or portions of the visual display when the limit conditions are created.

Sections B and C of comparator IC209 are biased by resistors and potentiometers R241 through R248 to switch to a low output when the vertical position signal approaches the maximum or minimum full scale level. The maximum level indicates that the sensing device is "above the target" and all signals are invalid. The minimum level indicates that the sensing device is fully collapsed to an "over range" position and the vertical position signal is invalid. Resistors R249 through R252 form voltage dividers that transform the comparator outputs to a logic low signal. These comparator outputs are routed to buss pins 14 and 16 for use by the analog to digital conversion circuitry of Figs. 12a-d, described below.

IC214 is a multiplexer which is used as a static logic element. When comparator IC209C goes low, a 5 volt signal is connected to the vertical digits voltmeter in the visual display, causing the display to over range and display -1. When comparator IC209B goes low, the $2H_z$ clock signal from IC210 is connected to the visual display multiplexer disable input, causing all displays to blink at the $2H_z$ rate.

IC211 is a combination logic chip containing inverter sections A and F, two input NOR section B and two input NAND section D. The NOR output will be high only when the two multiplexer address lines that are connected to the inputs are both low. This occurs when either one of the two horizontal probe axes are selected.

The lateral position sensing probe of the sensing device will be forced into the body of the sensing device if it is brought down on a surface without a target hole or if the sensing device is positioned at an extreme horizontal offset from the target hole, forcing the probe to climb the slope of the tapered hole and disappear into the body of the sensing device. When this happens, an internal switch formed by members 72 and 82 in the sensing device 10 is closed, pulling the input to inverter section A to a logic low. The inverted logic high signal will enable gate section C such that when the NOR section output goes high when the horizontal position signals are selected by the multiplexer, the output of gate section C will go low. This signal is coupled to buss pin 15 for use by the analog to digital conversion circuit of Figs. 12a-d.

IC214 will connect the $2H_z$ clock pulse to the visual display multiplexer disable input, causing just the horizontal position L.E.D. displays

-48-

**0087528**

to blink, indicating the displayed horizontal position data is not usable.

The remaining capacitors C229 through C235 help to minimize the transient voltage changes on the system supply buss of Fig. 17 and bypass to ground any high or low frequency AC components that may get on the system power supply lines from external noise sources.

In addition to the digital display in the format illustrated in Fig. 22, since the present invention is directed in one aspect to the "teaching" of an industrial robot as opposed to a real time indicator of position relative to an external surface which is provided by the above described circuitry, it is important to be able to relate this data received from the sensing device 10 directly into the computer storing the information controlling the movements of the sensing device. In that regard, the circuitry of Figs. 12a-d is utilized to effect this result.

The five channels of analog data from the input circuit of Figs. 15a-e are multiplexed into an A/D (analog to digital converter) and converted into 10 bit, 2's complement digital data which is transmitted to the customer's computer (not shown) as two eight bit bytes via a standard RS232 port.

When power is applied to the circuit, IC308 generates a low to high logic pulse which resets the UART (universal asynchronous receiver and transmitter), IC301. The parallel data output bits RR1-RR8 and the "data received" line DR go to a TTL logic low. The serial output line TRO goes to a TTL high which is converted to RS232 levels by level shifter IC302 and transmitted to the customer's computer. Flip flop IC307 is also reset when the same pluse is coupled to the RD input of IC307 through inverter sections B and E of IC314 and NAND gate section C of IC315.

The Q output flip flop IC307 goes high at reset, forcing the "blank and convert" input of the A/D convertor ID309 to a logic high which resets the convertor, and blanks (disconnects) the convertor's data lines MSB through DI from the remaining circuit. The customer computer initiates circuit action by serially transmitting an 8 bit byte via the RXD line to RS 232 receiver IC303 which converts the logic levels of the serial pulse train to the TTL levels and routes it to the serial data input line of IC301. IC301 converts the serial data to an 8 bit parallel byte, outputs same on RR1 through RR8 and sets the data received line to a logic high. The bits RR1 through RR3 present a 3 bit BCD address code to multiplexer IC312 which connects the addressed or selected channels to the high speed buffer amplifer IC313. This amplifier presents a high impedance input to the multiplexer output and negates any effect from the small "on" resistance of the multiplexer switch. The low ouput impedance of the amplifier provides an ideal source impedance for the low input impedance of the A/D convertor.

The output of the buffer amplifier passes through potentiomemter R304 which provides a 1 to 3 LSB (least significant bit) trim of the full scale calibration of the A/D convertor. Bit RR5 from IC301 is the A/D convertor start conversion control bit. This bit is set high at the same time the address bits RR6-RR8 are set so a time delay must be provided to allow the multiplexer to select an analog data channel and the buffer amplifier to settle to the final value of the analog input before an A/D conversion is initiated. When bit RR5 goes high, the $\overline{Q}$ output of one shot IC308B goes low and then returns to a high after a fixed time delay determined by R307 and C302. This low to high transition clocks flip flop IC307 and shifts $\overline{Q}$ to a logic low which initiates a conversion cycle in the A/D convertor IC309. The data ready output of the convertor momentarily goes high to indicate a conversion is in process and then returns to a logic low when the data conversion is complete. This output is coupled to the RS232 transmitter IC302 where it is converted to RS232 levels and transmitted to the customer's computer to indicate that the conversion is complete.

The A/D convertor outputs are now holding a bit pattern analogous to the level of the analog signal that was just converted. The digital outputs are now enabled (connected) to the two eight bit wide tristate buffers, IC310 and IC311. These biffers share a common eight bit wide data path to the transmit data port or register of the UART, IC301. The outputs of the buffers are controlled by the output enable $\overline{OEA}$ and $\overline{OEB}$ inputs that tristate (switch the output to a high impedance) or turn off the buffer when this input is set to a logic high level.

Bit two of the data received byte from the UART IC301 determines which buffer is connected to the UART transmit port. This bit is tied directly to the IC311 and through inverter section D of IC313 to IC310. The first control byte from the customer's computer will set this bit high, connecting IC310 outputs to the transmit port of IC301. Data bits 8 and 9 (MSB), a decimal point flag and three status bits are now serially transmitted by UARS IC301. IC301, Pin 28 now has the decimal point flag bit that is low when either of the perpendicularity axes of the RTS are selected for conversion. This bit can be used to shift the decimal point of a customer's display of the digital data to permit output in true engineering units without a decimal adjust operation in the customer's computer.

When each data byte is received from the customer's computer, the data ready line DR of the UART IC301 goes to a logic high which clocks the dual one shot IC306. Q1 goes low and Q1 goes high for a period determined by R311 and C308. Q1 clocks the second section of IC306 when it returns to the high state following this first time delay. Q1 immediately resets the UART data received line DRR so that the UART may accept the next data byte.

Q2 now goes to a logic high for a period determined by R312 and C309. This output and the transmit control bit RR3, which is normally maintained at a logic high level, cause a momentary low pulse to appear at the output of the NAND gate, section D of IC315. This pulse strobes the THRL line of IC315 loading the UART and initiating a data transmission of the data byte presented to TR1 through TR8 of UART IC301 when THRL returns to a logical high. The serial pulse train data immediately appears at the TRO line of IC301. It is converted to an RS232 logic level by the RS232 transmitter IC302 and transmitted to the customer's computer via the TXD line in the interconnecting cable.

The customer's computer now sends a second byte which sets RR1, RR2 and RR4 low and RR5 and RR6 high. Bit RR2 enables IC311 connecting it to the data output TR1 through TR8 of IC301. Buffer IC310 is now turned off. Data bits 0 (LSB) through 7 now appear at TR1 through TR8 respectively. The previously defined time delay and output strobe pulse from IC306 and section D of IC315 now occurs and the second data byte is transmitted. The low to high transition of this pulse is coupled to one shot IC320 where it clocks the one shot causing $\overline{Q1}$ to go high for a period determined by R301 and C303. Since the reset control bit 5 was set high when the second control byte was received from the customer's computer, the output of the NAND gate section B of IC315 will now go low, causing flip flop IC307 to reset via the logic path through section C of IC315 and section E of the inverter IC314. The circuit is now ready to start a second cycle.

IC318 and IC319 are miniature 12 volt regulators which reduce the $\pm$ 15 volt supply level to the $\pm$ 12 volts required by the RS232 transmitter and receiver, IC302 and IC303. IC305 is a dual baud rate generator that divides down the 5.0688 $MH_z$ frequency to two indpendent clock signals. The Fr output clocks the UART, IC301 and the second clock signal is further divided down by ripple counter IC304 to provide system timing signals for use by other circuitry as described above.

Inverter section A of IC314 inverts the MSB from the A/D convertor to change the data format from offset binary to 2's complement.

Capacitors C305 and C306 limit the slew rate of the RS232 transmitter to 30V/microsecond to conform with the RS232 sepecifications. The remaining capacitors in the circuit provide transient filtering and noise suppression functions.

Fig. 16 illustrates the power supply for the above described circuitry in the position sensing device of Fig. 1. PS001 is a commercial switching type power supply and provides the

required ± 15 volt analog power source and the +5 volt digital logic power source. L001 is a power indicator and F001 the system fuse. IC001 and IC002 are three terminal voltage regulators that reduce the ± voltage supplies to ± 5 volts to create the ± 5 volts regulated voltage source. Capacitors C003 and C004 stabilize the output of the voltage regulators IC001 and IC002. Capacitor C001 decouples any case to power supply noise. Capacitor C002 decouples noise on the common ground return from IC001 and IC002 to chassis ground.

It is to be understood that the above described circuitry is one means of providing the desired visual indication of movements of the sensing device 10 and that other circuit constructions can be utilized in conjunction with the device to provide either the same visual indications or other indications such as those described in the above referred to related applications. For the sake of clarity, a list of components used in the construction of the above described circuitry is set out below, but is not to be construed as a limitation on the construction of the circuitry portion of the present invention.

A/D and RS232 OF FIGS. 12a-d

| | | | | | |
|---|---|---|---|---|---|
| R301 | Resistor | 1/4W | Carbon | 4.7K ohm | |
| R302 | Resistor | Not used | | | |
| R303 | Resistor | Not used | | | |
| R304 | Pot | Bourns | 3006P | 50 ohm | |
| R305 | Resistor | 1/4W | Film | 4.7K ohm | |
| R306 | Resistor | 1/4W | Film | 10 ohm | |
| R307 | Resistor | 1/4W | Carbon | 4.7K ohm | |
| R308 | Pot | Bourns | 3006P | 10K | |
| R309- | | | | | |
| R312 | Resistor | 1/4W | Carbon | 2.2K ohm | |
| | | | | | |
| C301 | Capacitor | | Ceramic | 1000 pf | |
| C302 | Capacitor | | Ceramic | 1000 pf | |
| C303 | Capacitor | | Ceramic | 1 MFD | |
| C304 | Capacitor | | Ceramic | 1000 pf | |
| C305- | | | | | |
| C307 | Capacitor | | Ceramic | .1 MFD | |
| C308 | Capacitor | | Ceramic | 1000 pf | |
| C309 | Capacitor | | Ceramic | 1000 pf | |
| C310- | | | | | |
| C312 | Capacitor | | Ceramic | .1 MFD | |
| C313 | Capacitor | | Tantalum | 10 MFD 25V | |
| C314- | | | | | |
| C317 | Capacitor | | Ceramic | .1 MFD | |
| C318 | Capacitor | | Ceramic | 1.0 MFD | |
| C319 | Capacitor | | Ceramic | 1.0 MFD | |
| | | | | | |
| IC301 | Integrated | Circuit | TR1863 | Western Digital | |
| IC302 | Integrated | Circuit | MC1488 | Motorola | |
| IC303 | Integrated | Circuit | MC1789 | Motorola | |
| IC304 | Integrated | Circuit | MC14040BCP | Motorola | |
| IC305 | Integrated | Circuit | BR1941 | Western Digital | |
| IC306 | Integrated | Circuit | 74221 | Tex. Inst. | |
| IC307 | Integrated | Circuit | 7474 | Tex. Inst. | |
| IC308 | Integtated | Circuit | 74221 | Tex. Inst. | |
| IC309 | Integrated | Circuit | AD571KD | Analog Devices | |
| IC310 | Integrated | Circuit | 72LS244 | Tex. Inst. | |
| IC311 | Integrated | Circuit | 74LS244 | Tex. Inst. | |
| IC312 | Integrated | Circuit | MC14051BCP | Motorola | |
| IC313 | Integrated | Circuit | MC34001AP | Motorola | |
| IC314 | Integrated | Circuit | 7404 | Tex. Inst. | |
| IC315 | Integrated | Circuit | 7400 | Tex. Inst. | |
| IC316 | Not used | | | | |
| IC317 | Not used | | | | |
| IC318 | Voltage | Regulator | UA78LIZAWC | Fairchild | |
| IC319 | Voltage | Regulator | MC79LIZACP | Motorola | |
| IC320 | Integrated | Circuit | 74123 | Tex. Inst. | |
| IC321 | Diode | | 1N34A | | |
| IC322 | Diode | | 1N34A | | |
| IC323 | Integrated | Circuit | 7408 | Tex. Inst. | |
| | | | | | |
| CON301 | Integrated | Circuit | 14 pin Socket | | |

## VISUAL DISPLAY OF FIGS. 13a-d

| | | | | |
|---|---|---|---|---|
| R401 | Resistor | 1/4W | | 1.5K |
| R402 | Pot | Bourns | 3006P | 25K |
| R403 | Resistor | 1/4W | | 100K |
| R404 | Resistor | 1/4W | | 1 meg |
| R405 | Resistor | 1/4W | | 470K |
| R406 | Resistor | 1/4W | | 150 ohm |
| R407 | Resistor | 1/4W | | 150 ohm |
| C401 | Capacitor | 15UF | | Tantalum |
| C402 | Capacitor | 15UF | | Tantalum |
| C403- | | | | |
| C414 | Capacitor | 0.1UF | | Monolithic |
| C415 | Capacitor | 100 PF | | Mylar |
| C416 | Capacitor | .01 UF | | Polypropylene |
| C417 | Capacitor | .1 UF | | Polypropylene |
| C418 | Capacitor | .047 | | Polypropylene |
| C419 | Capacitor | .22 | | Polypropylene |
| CON401 | Integrated Circuit | 20 pin Socket | | |
| IC401 | Integrated Circuit | MC14040BCP | | Motorola |
| IC402 | Integrated Circuit | 74LS244 | | National |
| IC403 | Integrated Circuit | Q2T3725 | | Tex.Inst. |
| IC404 | Integrated Circuit | Q2T3725 | | Tex.Inst. |
| IC405 | Integrated Circuit | MC14051BCP | | Motorola |
| IC406 | Resistor | SIP Pack | 4310-101-104 | Bournes |
| IC407 | Integrated Circuit | ICL7107CPL | | Intersil |
| SW401 | Switch | | JMT-232 | JBT |
| LED401 | LED Display | | 5082-7736 | Hewlett Packard |
| LED402/ 404 | LED Display | | 5082-7731 | Hewlett Packard |
| LED405 A,E,G,J, K,O,P,S, U,W,Z | LED | | HLMP-1302 Red | Hewlett Packard |
| LED405 B,D,F,H, L,N,Q,R, T,V,Y | LED | | HLMP-1402 Yellow | Hewlett Packard |
| LED405 C,M,I X | LED | | HLMP-1503 Green | Hewlett Packard |

## DISPLAY DRIVER BOARD OF FIGS. 14a-c

| | | | | |
|---|---|---|---|---|
| R201 | Pot | Bourns | 3006P | 20K |
| R202 | Pot | Bourns | 3006P | 50K |
| R203 | Pot | Bourns | 3006P | 20K |
| R204 | Pot | Bourns | 3006P | 50K |
| R205 | Pot | Bourns | 3006P | 20K |
| R206- | | | | |
| R220 | Resistor | 1/4W | Film | * |
| R221- | | | | |
| R225 | Resistor | 1/4W | Carbon | 10K |
| R226 | Pot | Bourns | 3006P | 10K |
| R227 | Resistor | 1/4W | Carbon | 2.2K |
| R228 | Resistor | 1/4W | Carbon | 820 ohm |
| R229- | | | | |
| R232 | Resistor | 1/4W | Carbon | 1.2K |
| R233 | Resistor | 1/4W | Film | 820 ohm |
| R234 | Resistor | 1/4W | Film | * |
| R235 | Pot | Bourns | 3006P | 2K |
| R236 | Resistor | 1/4W | Film | 18K |
| R237 | Resistor | 1/4W | Film | 33K |
| R238 | Pot | Bourns | 3006P | 2K |
| R239 | Resistor | 1/4W | Film | * |
| R240 | Resistor | 1/4W | Film | 820 ohm |
| R241 | Resistor | 1/4W | Film | * |
| R242 | Pot | Bourns | 3006P | 10K |
| R243 | Resistor | 1/4W | Film | 10K |
| R244 | Resistor | 1/4W | Film | 10 meg |
| R245 | Resistor | 1/4W | Film | * |
| R246 | Pot | Bourns | 3006P | 10K |
| R247 | Resistor | 1/4W | Film | 10K |
| R248 | Resistor | 1/4W | Film | 10 meg |
| R249 | Resistor | 1/4W | Carbon | 1.5K |
| R250 | Resistor | 1/4W | Carbon | 1.5K |
| R251 | Resistor | 1/4W | Carbon | 1.2K |
| R252 | Resistor | 1/4W | Carbon | 1.2K |
| R253 | Resistor | 1/4W | Carbon | 10K |
| | | | | |
| C207- | | | | |
| C212 | Capacitor | | 0.1 UF | Monolithic |
| C213- | | | | |
| C217 | Capacitor | | .001 UF | Monolithic |
| C218 | Capacitor | | 220 UF | Electrolytic |
| C219 | Capacitor | | 220 UF | Electrolytic |
| C220- | | | | |
| C228 | Capacitor | | 0.1 UF | Monolithic |
| C229 | Capacitor | | 15 UF | Tantalum |
| C230- | | | | |
| C234 | Capacitor | | 0.1 UF | Monolithic |
| C235 | Capacitor | | 15 UF | Tantalum |
| C236 | Capacitor | | 0.1 UF | Monolithic |

* Value to be selected at time of assembly.

## DISPLAY DRIVER BOARD OF FIGS. 14a-c (con't)

| IC201- | | | | |
|---|---|---|---|---|
| IC203 | Integrated | Circuit | MC14052BCP | Motorola |
| IC204 | Integrated | Circuit | MC14051BCP | Motorola |
| IC205 | Integrated | Circuit | MC14052BCP | Motorola |
| IC206 | Integrated | Circuit | MC14040BCP | Motorola |
| IC207 | Integrated | Circuit | 74123 | Tex. Inst. |
| IC208 | Integrated | Circuit | LM3914 | National |
| IC209 | Integrated | Circuit | LM339 | National |
| IC210 | Integrated | Circuit | MC14040BCP | Motorola |
| IC211 | Integrated | Circuit | MC14572UBCP | Mototola |
| IC212 | Voltage | Reference | LM385BZ | National |
| IC213 | Voltage | Reference | LM385BZ | National |
| IC214 | Integrated | Circuit | MC14053BCP | Motorola |
| CON201 | Integrated | Circuit | 8 Pin Socket | |
| CON202 | Integrated | Circuit | 20 Pin Socket | |

INPUT BOARD OF FIGS. 15a-e

| | | | | |
|---|---|---|---|---|
| R101-R105 | Resistors | 1/4W | Film | * |
| R106-R110 | Pot | Bourns | 3006P | 10K |
| R111-R115 | Resistor | 1/4W | Film | * |
| R116 | Resistor | 1/4W | Film | 2430 ohm |
| R117 | Resistor | 1/4W | Film | 2430 ohm |
| R118 | Pot | Bourns | 3006P | 50 ohm |
| R119 | Resistor | 1/4W | Film | 2490 ohm |
| R120 | Resistor | 1/4W | Film | 270 ohm |
| R121 | Resistor | 1/4W | Film | 470 ohm |
| R122 | Pot | Bourns | 3006P | 500 ohm |
| R123 | Resistor | 1/4W | Film | 499 ohm |
| R124 | Resistor | 1/4W | Film | 100K |
| R125 | Resistor | 1/4W | Film | * |
| R126 | Resistor | 1/4W | Film | * |
| R127 | Pot | Bourns | 3006P | 10K |
| R128 | Resistor | 1/4W | Film | 24 ohm |
| R129 | Resistor | 1/4W | Carbon | 7.5 ohm |
| R130 | Pot | Bourns | 3006P | 1K |
| R131 | Resistor | 1/4W | Film | 1K |
| R132 | Resistor | 1/4W | Film | 100K |
| R133 | Pot | Bourns | 3006P | 20K |
| R134 | Resistor | 1/4W | Film | 90.9K |
| R135 | Resistor | 1/4W | Film | 100K |
| R136 | Pot | Bourns | 3006P | 20K |
| R137 | Resistor | 1/4W | Film | 90.0K |
| R138 | Resistor | 1/4W | Film | 182K |
| R139 | Pot | Bourns | 3006P | 20K |
| R140 | Resistor | 1/4W | Film | 182K |
| R141 | Pot | Bourns | 3006P | 20K |
| R142 | Pot | Bourns | 3006P | 50K |
| R143 | Pot | Bourns | 3006P | 50K |
| R144-R147 | Pot | Bourns | 3006P | 20K |
| R148 | Resistor | 1/4W | Carbon | 10K |
| C101 | Capacitor | | 1.0 UF | Monolithic |
| C102-C108 | Capacitor | | 0.1 UF | Monolithic |
| C109 | Capacitor | | .001 UF | Monolithic |
| C110-C122 | Capacitor | | 0.1 UF | Monolithic |
| C123 | Capacitor | | .033 UF | Monolithic |
| C124 | Capacitor | | 0.1 UF | Monolithic |
| C125 | Capacitor | | 0.1 UF | Monolithic |
| C126 | Capacitor | | .033 | Monolithic |
| C127-C135 | Capacitor | | 0.1 UF | Monolithic |
| C136 | Capacitor | | 15 UF | Tantalum |
| C137-C140 | Capacitor | | 0.1 UF | Monolithic |

INPUT BOARD OF FIGS. 15a-e (con't)

| IC101 | Integrated | Circuit | MC14052BCP | Motorola |
|---|---|---|---|---|
| IC102 | Integrated | Circuit | MC14052BCP | Motorola |
| IC103 | Integrated | Circuit | AD521JD | Analog Devices |
| IC104 | Integrated | Circuit | MC14069UBCP | Motorola |
| IC105 | Integrated | Circuit | MC14051BCP | Motorola |
| IC106 | Integrated | Circuit | ICL7650CPL | Intersil |
| IC107 | Integrated | Circuit | ICL7650CPL | Intersil |
| IC108 | Integrated | Circuit | LF347BN | National |
| IC109 | Integrated | Circuit | LF347BN | National |
| IC110 | Integrated | Circuit | LM317H | National |
| IC111 | Integrated | Circuit | LM336Z-5.0 | National |
| IC114 | Integrated | Circuit | LF347BN | National |
| | | | | |
| CON101 | Integrated | Circuit | 14 Pin Socket | |
| CON102 | Integrated | Circuit | 14 Pin Socket | |

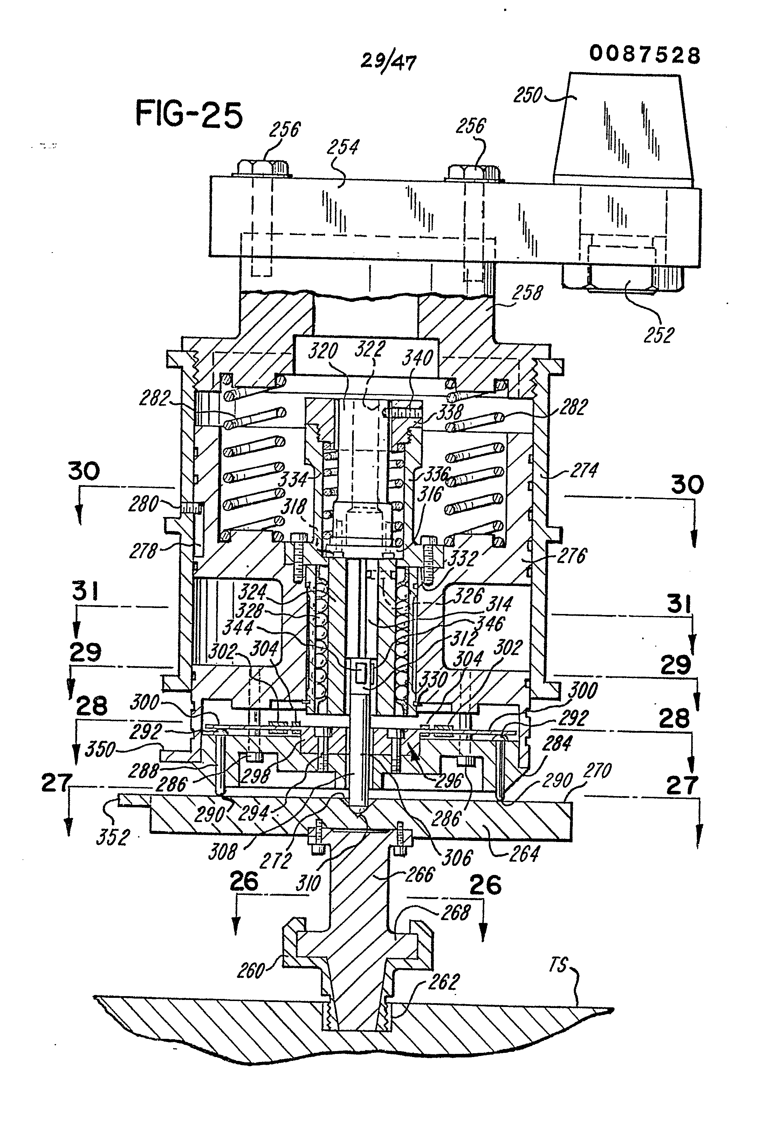

Basically, what the above electronic circuit accomplishes is the calculation of the position of an imaginary reference plane established in the body of a sensing device by the position of the sensors, relative to the external surface under consideration. The angles and dimensions being evaluated are shown schematically in Figs. 23 and 24. With reference to the embodiment of Fig. 1, in Fig. 23 point a corresponds to the reference probe 120 while points b and c correspond to the sensing probes 104 and 106, respectively.

As is mentioned above, the distance from points b and c to the intersection of the X and Y axes is equal to the distance from point a to the Y axis. The Z axis of the device extends perpendicular to the page of Fig. 23. It is to be understood, however, that these dimensions are not critical, particularly, in a two sensing probe device. In other words, the distances from a, b and c to the intersection of the X and Y axis do not all have to be equal, although the calculations are more difficult if they are not. Therefore, for the sake of simplicity of calculations and ease of producing an analog equivalent circuit, the above-referred to distances are established in the preferred embodiment.

To make the necessary calculations, the following formulas are utilized which find their equivalent in the analog circuit described above. The angle A is the angle illustrated in Fig. 24 which is the slope of the reference plane with respect to the target surface TS. The angle B is the angle that the reference plane, established by the points a, b and c, makes with the plane of the target surface. Since the fixed reference pin is in the X axis, the tangents of angles A and B are in the form:

$$B = \tan^{-1}\left(\frac{b-c}{d}\right) \text{ and } A = \tan^{-1}\left(\frac{b+c}{2h}\right)$$

In the above calculations, the distances a, b and c are the indicated height of the probes with respect to the target surface.

It is to be noted that the right angle is always perpendicular to the reference plane, i.e., it is in the plane containing the X axis and is adjacent the reference plane as shown in Fig. 24 and not on the target surface TS. In this manner the tangent of the angle is always measured. Obviously, when the reference plane becomes parallel to the target surface the angles A and B will be zero and will indicate this condition of parallelism.

The embodiment of Fig. 25 of the position sensing device of the present invention is also illustrated in a form for use in "teaching" an industrial robot of conventional construction the proper location for drilling in reference to a target surface TS of some object such as a drilling fixture beneath which is positioned a piece (not shown) to be drilled. For this particular application a truncated cone-shaped member 250, adapted to fit into the industrial robot arm (not shown), is exactly positioned offset from the center line of the position sensing device the same distance that a drill holder will eventually be positioned during the actual drilling operation. Member 250 is bolted with bolt 252 to a positioning arm 254 which, in turn, is bolted with bolts 256 to the upper cylindrical cap 258 of the position sensing device.

In addition to being properly offset from the position where the member 250 engages the robot arm, the distance from the member 250 to the surface TS must also be exact since it must be the same as when the actual drill holding device and drill (not shown) are mounted to the robot arm. In addition, in this particular environment the actual drilling device must engage and rotate into locking position with a bayonet-type locking member 260 which has been previously mounted in a threaded bushing 262 already positioned in the body of the drilling fixture. It was therefore necessary in this particular embodiment to package the position sensing device in an envelope which would fit within these dimensions. This, however, is not to be construed as a limitation on the actual size or shape of the present invention since these factors can vary significantly for a given requirement for its use.

Also, since the position sensing device is not actually being used in this environment to sense a particular surface, but rather a position in space relative to the locking member 260, a temporary adapter plate 264 has been provided which is secured to a support column 266 which has segmented lugs 268 that matingly engage the locking member 260 when the support column 266 is rotated. Thus, the upper surface 270 of adapter plate 264 provides the surface which the position sensing device will actually engage and sense for properly positioning the robot arm relative to the surface TS of the workpiece to be drilled. Adapter plate 264 is cylindrical, although this is not necessary, and has a conical bore 272 concentrically aligned with the axis of the hole to be drilled in surface TS.

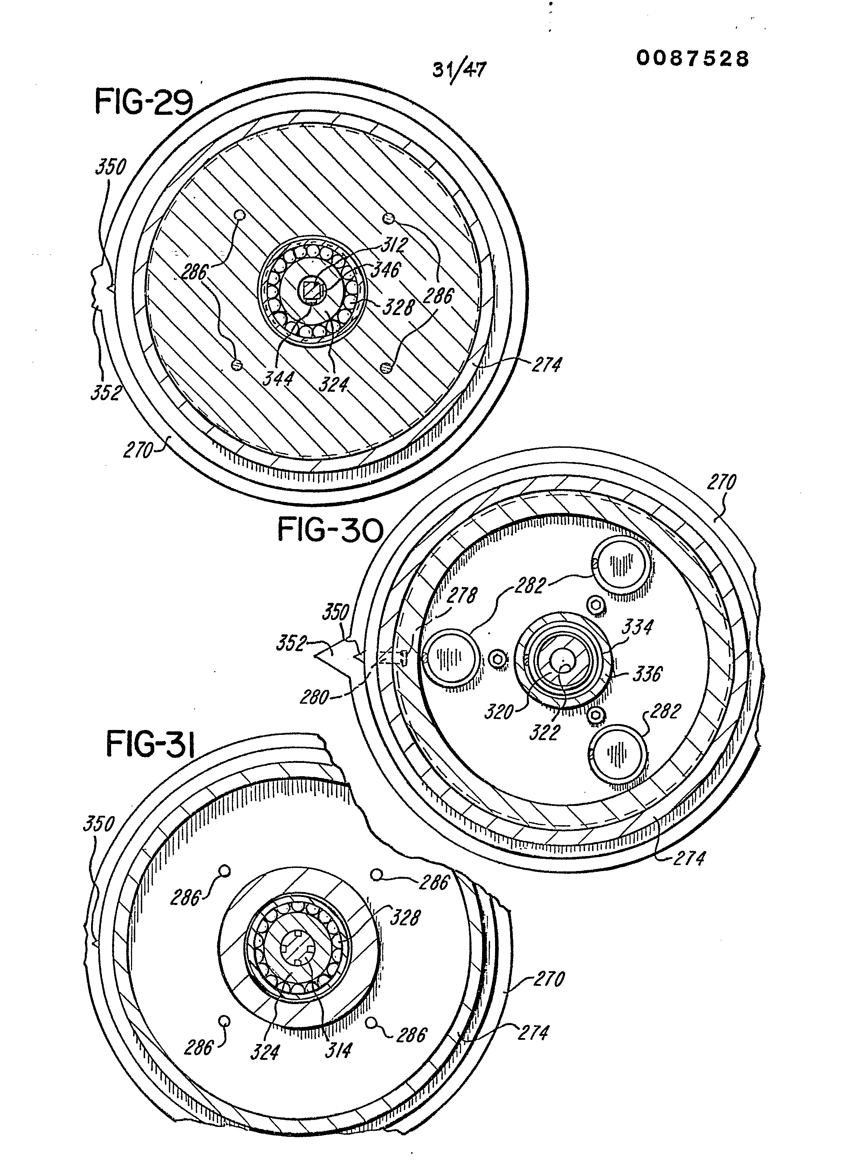

Referring now to the details of the position sensing device as illustrated in Fig. 25, a main cylindrical housing 274 is provided into which is threadedly received the upper cylindrical cap 258. Cap 258 supports the housing 274 from the support arm 254. Slidably engaged within cylindrical housing 274 is the main support member 276 which is also generally cylindrical in form. A vertically extending slot 278 is formed in the side of support member 276 in alignment with a screw 280 threadedly received in the housing 274 and extending into the slot 278 for holding the support member 276 within the housing 274 while permitting limited relative movement of the support member within the housing. The vertical extent of the slot is sufficient to permit the necessary sliding movement of the support member 276 within housing 274 during operation of the device as discussed below. Three compression springs 282 (see Fig. 30) engage the inner surface of upper cylindrical cap 258 and the upper surface of the cylindrical recess in support member 276 to bias the support member 276 outward of the housing against the screw 280. These springs are provided only to permit the support member 276 to telescope into the housing 274 to prevent damage to the robot arm and are therefore of sufficient strength to maintain the support member in the extended position during normal operation of the device.

A generally disc-shaped plate 284 forms a bottom end closure for the support member 276 and is bolted thereto with a plurality of bolts 286. A series of four pins 288 are mounted in corresponding holes in plate 284 for sliding movement therein. Pins 288 have outer semi-spherical ends 290 which engage the surface 270. The upper ends of pins 288 have enlarged semi-spherically shaped heads 292 which prevent the pins from passing out through the holes in plate 284. The four pins 288 are positioned at equally angularly and radially spaced locations around the plate 284 from the central vertical axis of the plate and the sensing device. Pins 288 constitute the angular position sensing probes of the preferred embodiment of the present invention which engage the surface 270 and move independently to indicate any angular offset in perpendicularity between the surface 270 and the central axis of plate 284 and thus the central axis of the position sensing device.

Also bolted to plate 284 by a plurality of bolts 294 is a pin movement sensing plate 296. Plate 296 has a central cylindrical main body portion 298 and four thin cantilevered extensions 300, each of which corresponds to an associated pin 288 and engages the top semi-spherical end portion 292 of each. Sensing plate 296 is preferably made of steel which permits sufficient bending of the cantilevered extensions 300 for the desired degree of movement of pins 288 within the plate 289 while staying within the elastic region of the material of plate 296 so that an essentially linear deformation occurs in the extensions during bending thereof due to a pin or pins 288 being pushed upward so as to bend the extensions. The cantilevered extensions 300 can either be integrally formed with or made separately from and secured to the main body portion 298.

Pairs of strain gages 302 and 304 are mounted perpendicular to one another on each of the cantilevered extensions 300 and provide an indication of the strain on each of the cantilevered extensions when they are bent due to upward movement of the associated pin 288. The strain gages 302 and 304 in conjunction with the cantilevered extensions 300 thus form the transducers of the present invention which give an extremely acurate indication of the relative movement of the pins 288 in plate 284. The extent of movement of the pins can thus be exactly correlated through the bending of extensions 300 and the corresponding change in resistance in the strain gages.

Also mounted within the main support member 276 is a lateral position sensing probe 306. In this preferred embodiment the lateral position sensing probe 306 has a lower cylindrical portion 308 which terminates in a semi-spherical end portion 310. At its upper end portion the cylindrical portion 308 joins a rectangular cross section portion 312 which, in turn, joins another, but larger diameter, generally cylindrical portion 314. Cylindrical portion 314 in turn joins a disc-shaped cap 316. Bolted to the top of cap 316 through the plurality of bolts 318 is a stepped shaft 320 with a central bore 322 extending therethrough. The cylindrical portion 314 is fitted in a cylindrical sleeve 324 which is pinned to the cylindrical portion 314, such as by roll pin 326, extending through a common bore in the side of the sleeve 324 and the cylindrical portion 314.

The assembly of the lateral position sensing probe 306, stepped shaft 320 and sleeve 324 is then mounted in a linear motion ball bushing 328, such as is available from Thompson Industries, Inc., Manhasset, New York, which is fitted in an internal bore in support member 276 so that the probe can move vertically along its central axis. The ball bushing 328 is preferably used to reduce as much as possible the friction due to movement of the probe within the support member 276. Ball bushing 328 is held in place in the support member 276 with snap rings 330 and 332 at the top and bottom of the ball bushing, respectively.

The probe 306 is biased downwardly as shown in Fig. 25, by cylindrical compression spring 334 which is housed within a sleeve 336. Compression spring 334 is held at a predetermined compressed height between the upper surface of the cap 316 of the probe 306, and a cap 338 which is threadably engaged in the upper end portion of sleeve 336. A screw 340 extends through the top 338 into a vertical slot 342 in the upper end portion of stepped shaft 320 to keep the probe aligned with the x and y axes of the device. The spring 334, prevents damage to probe 336 and permits the probe to retract into the support member if too great a side ways force is applied to the probe which might otherwise damage it. Also, springs 334 permit probe 306 to retract into support member 276 as pins 288 telescope into the support member when the device is moved toward the surface 270. The spring 334 also permits the probe to widen the sensing area beyond what it would be if the probe were fixed in the support member 276 and only permitted to bend, since the probe 306 can ride up the sides of the cone-shaped opening 272.

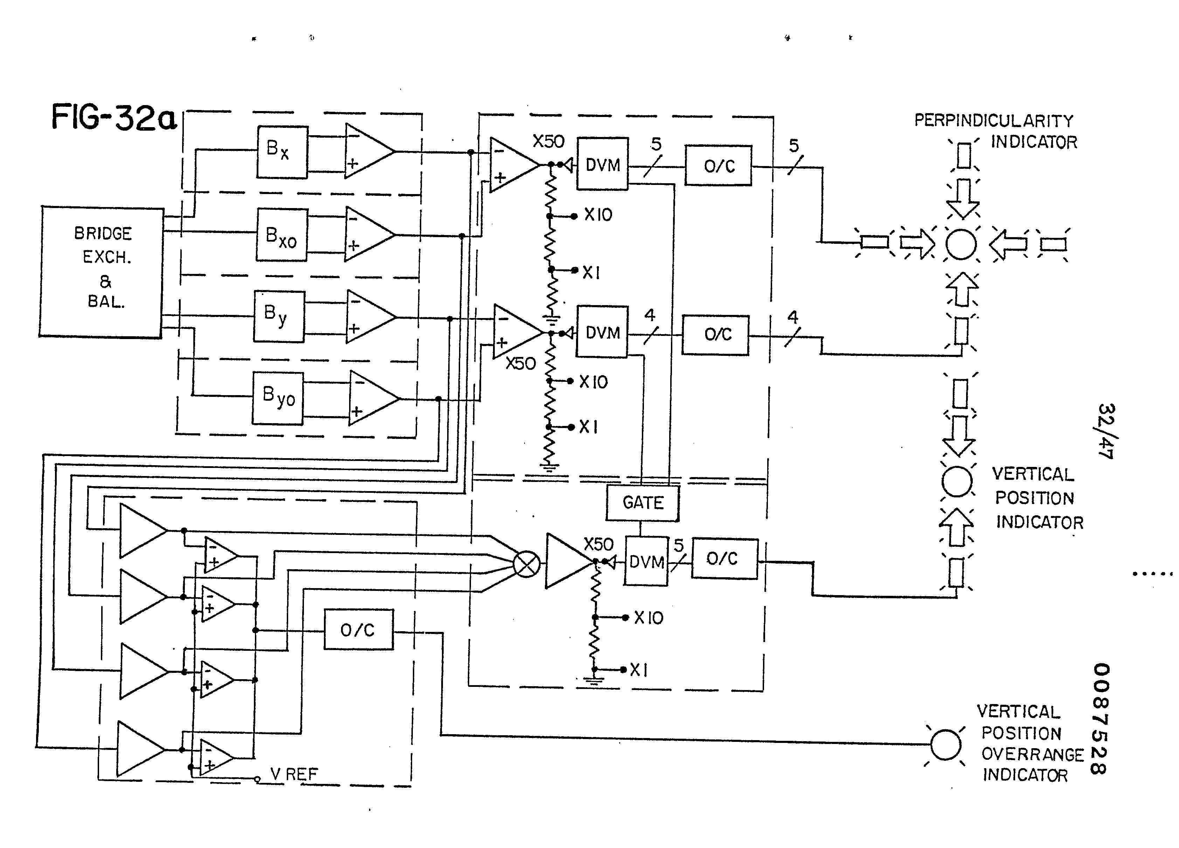

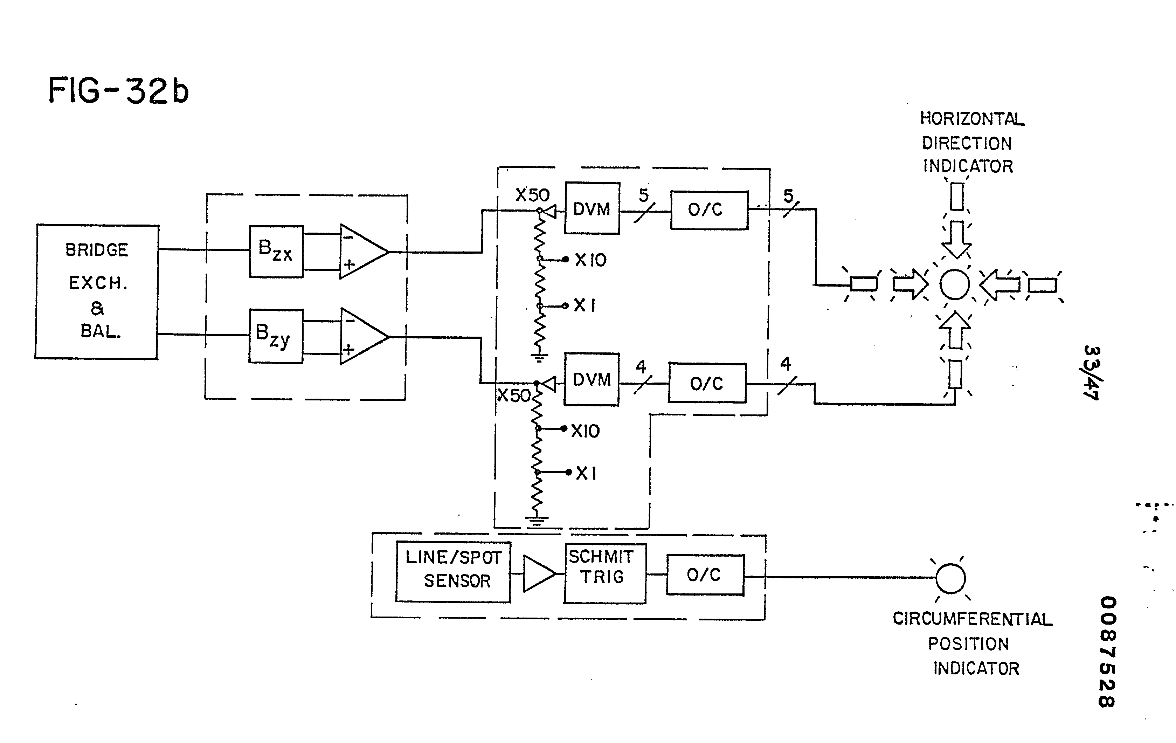

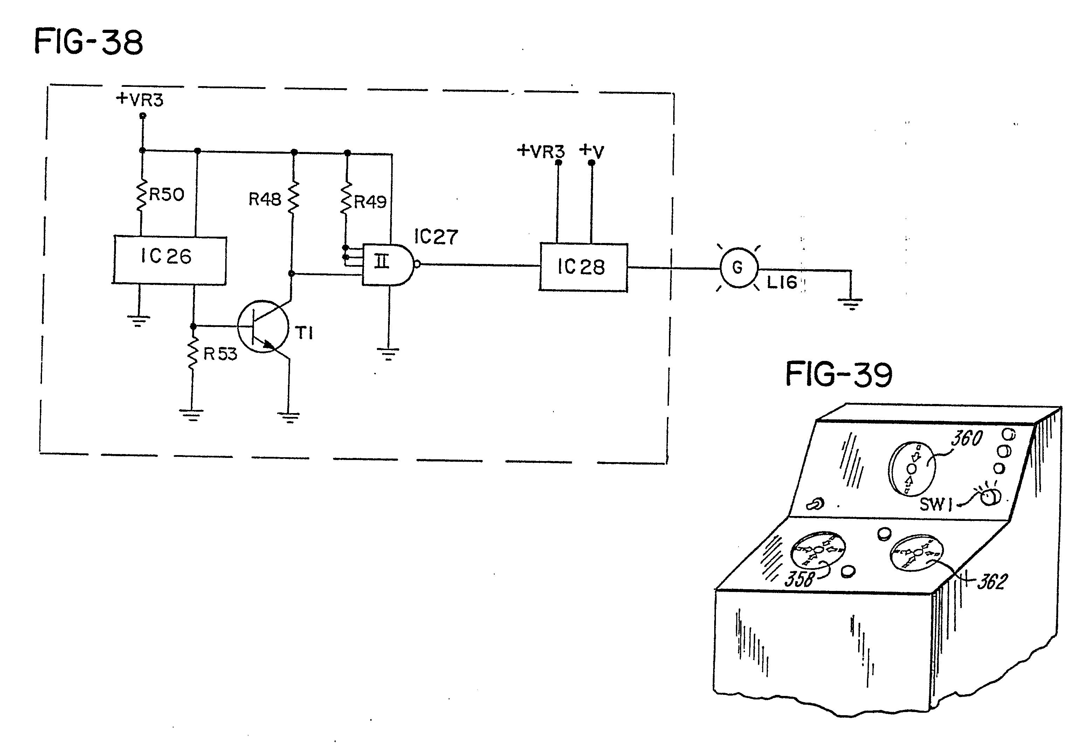

Two strain gages 344, 346 are mounted to adjacent perpendicular sides of rectangular cross section portion 312 of probe 306, and their lead wires (not shown) extend through the vertical slot 348 in the side of cylindrical portion 314 and then through the hollow central bore 322 of shaft 320 and out through the upper portion of the device. None of the lead wires from any of the strain gages are illustrated for the sake of clarity, however, it is apparent that lead wires must extend from each of the strain gages, referred to above, out of the device and into the control panel illustrated in Fig. 39 where the circuitry of Figs. 32 through 38 is contained.

As mentioned above, in the particular environment where this preferred embodiment of the present invention was designed to function, i.e. as a robot teacher, it was also necessary to provide a means for indicating rotational alignment of the device with the surface 270 in order to eventually permit the robot teacher to lock the drilling apparatus into the locking member 260. In order to provide an initial visual indication of the approach of this condition, a pointer 350 is mounted at the lower end portion of support member 276 and a corresponding pointer 352 is mounted to the side of disc 264 at a location which is in proper alignment for indicating the locked condition between the support column 266 and locking member 260. Thus, when the device is rotated about its central axis the two pointers 350 and 352 will come into alignment to indicate the locked condition.

In addition, to provide greater accuracy in rotational alignment for locking, an infrared LED source and a photo detector are fitted into a holder 354 which is precisely positioned around the periphery of plate 384 which will indicate the precise locked-up position with the actual drilling device in the locking member 260. The photo detector will sense a change in the signal received as a bounce-back from the surface 270 from the infrared LED, when the light strikes a change in the surface, such as a contrasting line, hole, slot etc., like spot 356 which is positioned in the plate 264 at the precise location to indicate the locked-up condition between the column 266 and locking member 260. The photo detector will indicate an increased voltage when the light source strikes the surface contrast which voltage change is used to activate a light and thus indicate exact alignment.

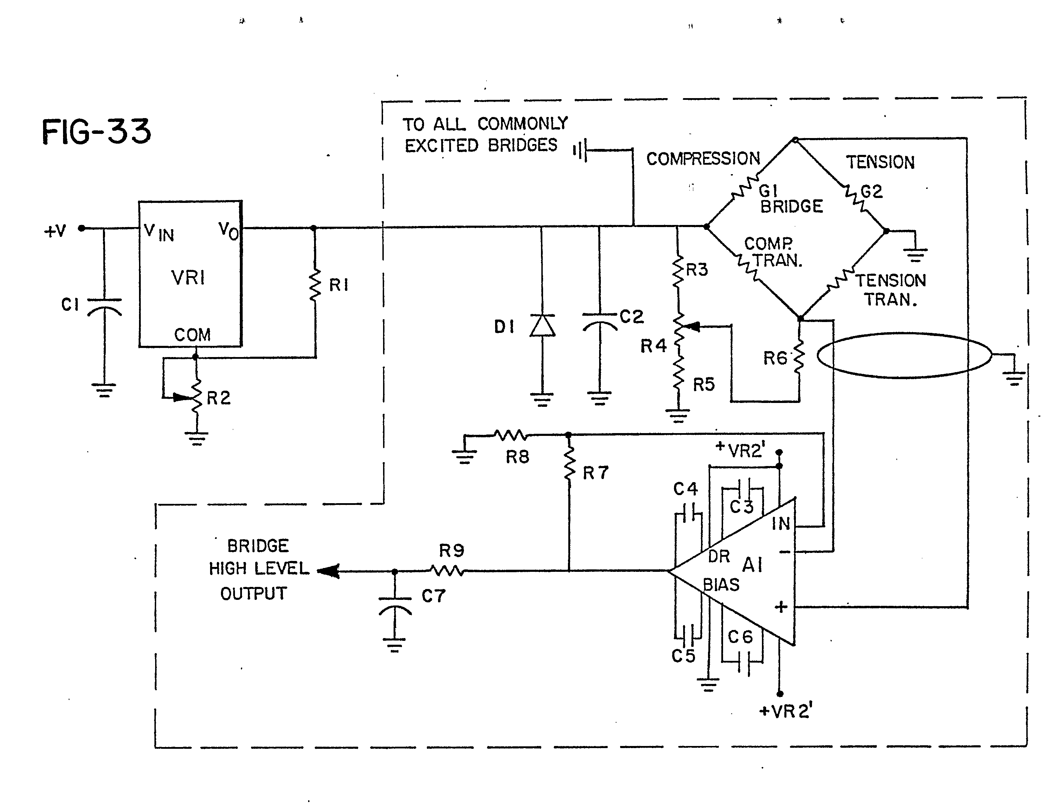

Referring now to the circuitry of Figs. 32 through 38, Figs. 32a and 32b are simplified block diagrams which indicate the interconnection of the circuitry illustrated in greater detail in Figs. 33 through 38. The circuit of Fig. 33 illustrates the amplifying circuit associated with a single set of strain gages 302 and 304 associated with a single cantilevered extension 300, and as indicated in Fig. 32a, there are actually four sets of circuitry identical to Fig. 33, with the exception of the voltage regulator $V_{R1}$, in order to operate the four sets of strain gages 302 and 304 associated with each of the four cantilevered extensions 300.

The circuit of Fig. 33 provides regulated excitation voltages to the sets of strain gages 302 and 304, amplifies the low level bridge output from each set of strain gages and filters out any frequency above 10Hz.

$V_{R1}$ is a four terminal, adjustable, precision voltage regulator. The resistor ratio R1/R2 sets the level of the regulated output Vo. The voltage regulator eliminates any significant change in bridge output as a function of variation in the supply voltage V+, bridge current or ambient temperature and reduces the ripple factor from the power supply by 60db.

Capacitors C1 and C2 stabilize the regulator and improve its transient response. Diode D1 protects the regulator from reverse voltage transients due to static discharges. Resistors R3 through R6 form a null circuit to balance out any unloaded or residual imbalance in the installed bridges.

The use of the particular amplifier A1, as designated in the parts list set out below, is especially helpful in this circuit. This amplifier automatically corrects itself for any internal offset or long term drift eliminating the need for a trim pot and permitting functional operation (i.e., precision tracking) at the very low (0-10MV) output levels that would ordinarily be precluded by the fact that amplifier drift would exceed this range.

The amplifier A1 gain is established by resistor ratio R7/R8 at a level that will prevent saturation at full scale deflection of the instrumented cantilever extensions 300. Capacitors C3 through C6 are required by the commutating feature of the amplifier A1. Resistor R9 and capacitor C7 form a low pass (10Hz) filter to remove the commutating/switching transients from the amplifier output.

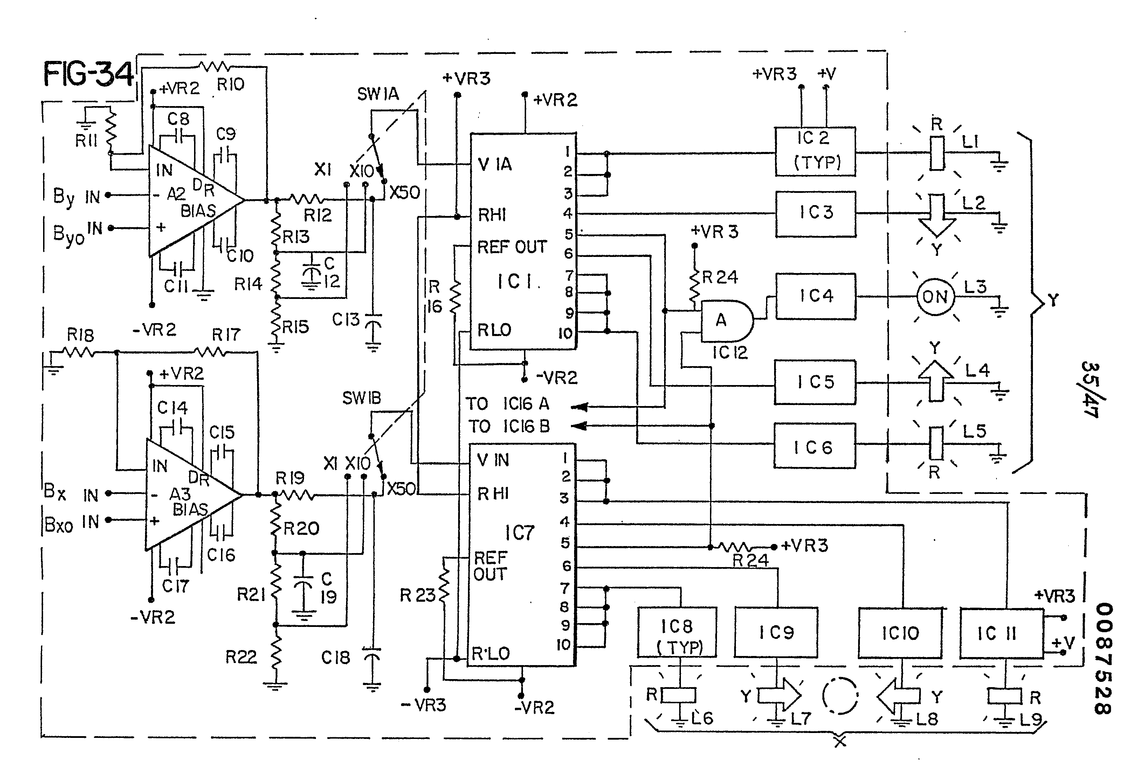

The bridge high level outputs from the circuit of Fig. 33 associated with each set of strain gages 302 and 304 and which correlate to the x and y axes are input into the circuitry of Fig. 34. The high level outputs of the strain gage bridges on the two instrumented cantilever extensions in the x axis (Bx and Bxo) and the two instrumented cantilever extensions in the y axis (By and Byo) of the pin movement sensing plate 296 are differentially summed by amplifiers A2 and A3.

Pure axial (vertical) movement of the main support member 276 will result in equal and same direction deflections of the cantilever extensions 300 and the output of amplifiers A2 and A3 will not change. Any inclination of the vertical axis of the device relative to the target surface 270 will result in an unequal deflection of the cantilever extensions in one or both axes. The output of amplifiers A2 and/or A3 will increase and the polarity of the output will correspond to the extension with the highest stress, thus indicating direction of tilt in both of the two mutually orthogonal axes.

The full scale output from amplifiers A2 and A3 is determined by the resistor voltage divider formed by resistors R13 through R15 and R20 through R22. Switch SW1 establishes the desired sensitivity for the device. Capacitors C12, C13 and C18, C19 form a 10Hz, low pass filter with the voltage divider resistors.

The outputs of A2 and A3 are coupled to digital voltmeter (DVM) integrated circuits (IC) IC1 and IC7, respectively. The DVM's normally drive the lamps, turning on lamp L1 at 10% of full scale input, lamp L2 at 20%, etc. -- lamp L10 at 100% of full scale. For this application a biasing network consisting of the positive and negative voltage reference VR3 shifts the operating point of the DVM's to cause the lamp L5 to be lit with no input from amplifiers A2 or A3. Positive voltage swings from amplifiers A2 or A3 turn on outputs 6 through 10 of IC1 and IC7, respectively, in a linear step sequence and negative voltage swings turn on outputs 4 through 1 of IC1 and IC7, respectively, in a similar manner.

The maximum number of indicator lamps driven by any one DVM is five. Outputs 3 through 7 of IC1 and IC7 are utilized in this design (5 being center). Outputs 8, 9 and 10 are "or" tied to output 7 and outputs 1 and 2 are "or" tied to output 3. Any voltage swing beyond the level normally indicated by outputs 3 or 7 will thus maintain an output at 3 or 7 until the input level falls back within the range of output 3 through 7.

The DVM outputs 3 through 7 of IC1 and IC7 are connected to opto-couplers IC2 through IC6 and IC8 through IC11, respectively. The DVM output turns on a light emitting diode (LED) within the opto-coupler. The light is sensed by a photo transistor which turns on an associated driver transistor to light the miniature incadescent lamps L1 through L9.

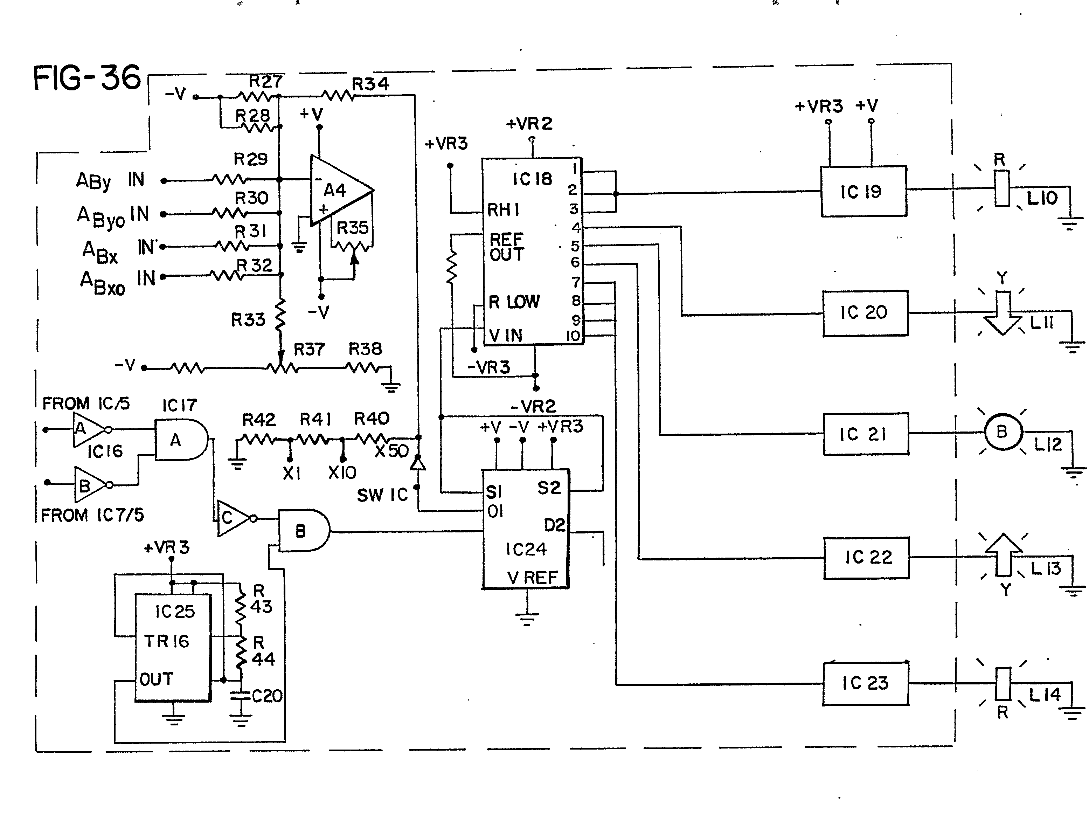

The DVM outputs 5 on IC1 and IC7 are effectively "ored" together such that a logical low output from either device will turn on lamp L3 through IC4. The output 5 on both devices is also coupled to the circuit of Fig. 36 where they are combined to develop a gate signal that controls the display format of the vertical position indicator.

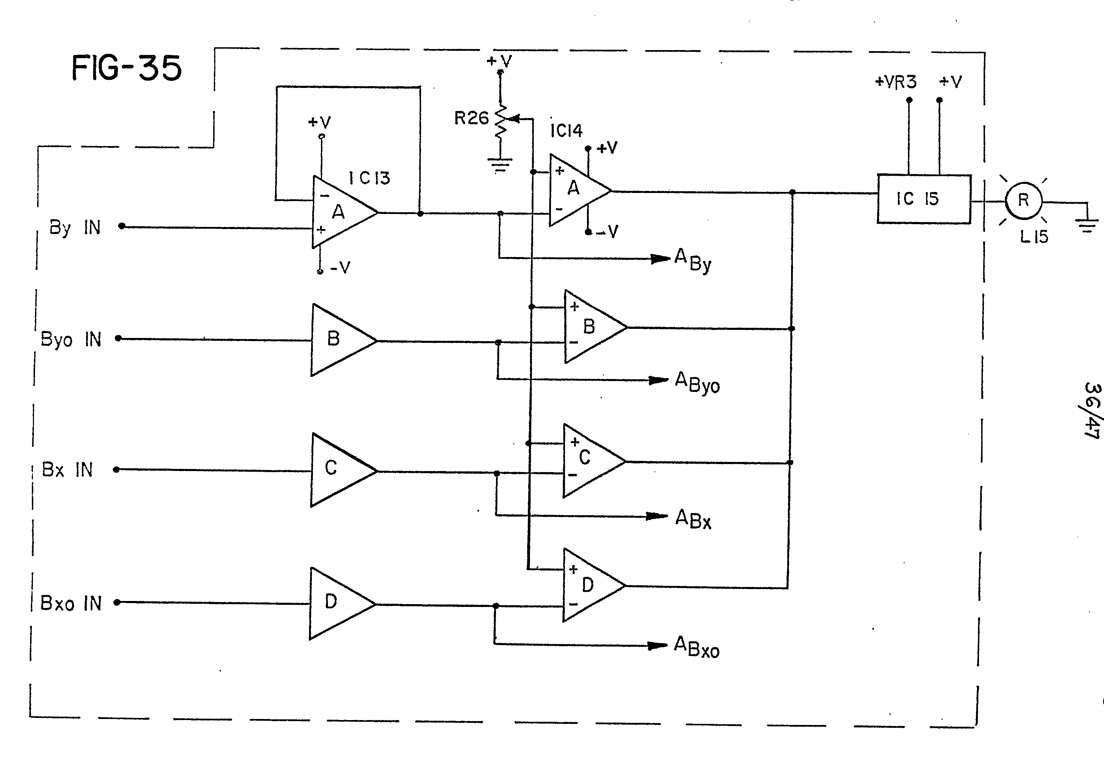

As shown in Figs. 32a and 35, the high level outputs from the strain gages associated with each of the four instrumented cantilever extensions are buffered with unity gain amplifiers IC13A through D and coupled to QUAD comparators IC14A through D. The comparators change state whenever any one of the four inputs exceed the reference level which is set by trim pot R26 to be nearly equal to the full scale output of the respective bridges.

The comparator outputs are "or" tied to opto-coupler IC15 which turns on over range indicator lamp L15 when any bridge output exceeds the reference level.

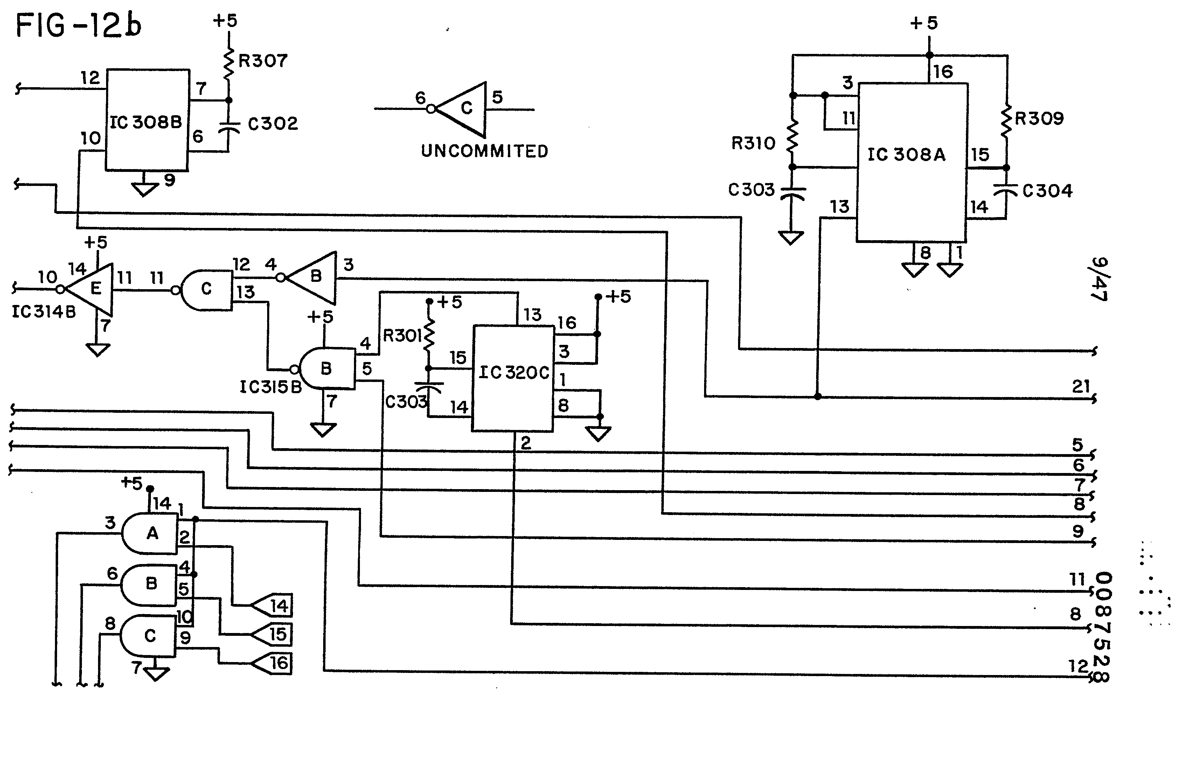

The high level buffered bridge outputs $A_{By}$, $A_{Byo}$, $A_{Bx}$ and $A_{Bxo}$ from the circuit of Fig. 11 are summed, as shown in the circuit of Fig. 12, with fixed bias source through resistors R27 and R28 and adjustable bias source resistors R36, R37 and R38. The gain of amplifier A4 is set to the level that all four bridge outputs must reach, approximately 1/2 of full scale, to offset the negative bias sources and achieve zero output from amplifier A4. Digital voltmeter IC18 will then turn on indicator lamp L12 through opto-coupler IC21, indicating that the device is positioned a precise distance above the target surface.

Any vertical movement above or below this level will swing the output of ICA4 through the calibrated range of DVM IC18, causing indicator lamps L10 through L14 to display the actual deviation in linear increments thus providing both direction and magnitude of deviation information to the operator to allow him to correctly position the device at the calibrated height above the target surface 270.

The full scale output of ICA4 is reduced in two steps by voltage dividers R40 through R42. Switch SW1C selects the desired full scale output level to establish the sensitivity of the vertical position display.

Vertical position can only be accurately defined when the vertical axis of the device is perpendicular to the target surface 270. Perpendicularity is indicated by logical low (0) levels at the inputs to IC16A and B (See Fig. 34).

IC16A and B change the logical low signals to logical highs which then cause a logical high at AND gate IC17A. This output is inverted by IC16C. This logical low signal is coupled to AND gate IC17B resulting in a logical low at the input to solid state switch IC24. This signal turns on the solid state switch IC24, coupling amplifier A4 output to DVM IC18. The vertical display is now enabled and indicator lamps L10 through L14 operate in the normal manner as long as the perpendicularity of the device to the target surface 270 is maintained.

Tilting the vertical axis of the device in any direction will cause an amber indicator light to come on in one or both axes of the perpendicularity display. One or both of the gating signals from IC12A, Fig. 34, will change to a logical high which will result in a high to AND gate IC17B, which then couples the 1Hz square wave generated by IC25 to the input of the solid state switch IC24. Resistors R43 and R44 and capacitor C20 set the oscillation frequency of IC25.

The switch will turn on and off at the 1Hz rate, switching the DVM input between -VR3 and A4 to cause the vertical display indicator lamps L10 through L14 to flash at the same rate, indicating that the displayed position indicated by lamps L10 through L14 is not valid until the tilt in the vertical axis of the device is corrected, returning the display to the normal constant on condition. Switch SW2 provides a means to abort the flashing display feature for initial setup, testing or training.

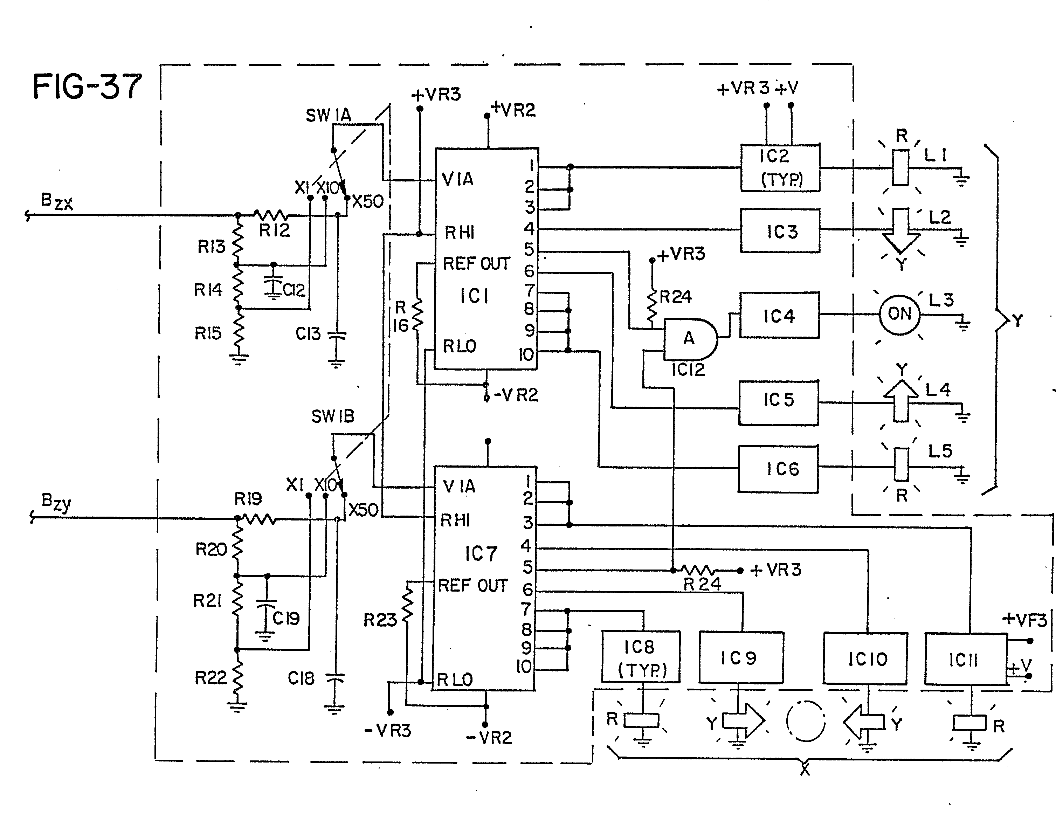

The horizontal direction indicator circuit is illustrated generally in Fig. 32b and partially in Fig. 37. The circuit is very similar to the perpendicularity indicator. The portion of the circuit within the box B1 of Fig. 32b is identical to the circuitry of Fig. 33 in which the strain gages 302 and 304 are replaced with the strain gages 344 and 346 mounted to the lateral position sensing probe 312, as described above. The two bridge high level outputs from this circuit are inputs $B_{zx}$ and $B_{zy}$ in Fig. 37. The circuit of Fig. 37 is identical to the circuit of Fig. 34 with the exception that the amplifiers A2 and A3 and the associated capacitors and resistors are deleted and the inputs $B_{zx}$ and $B_{zy}$ are connected directly to the DVM's IC1 and IC7, respectively, through the voltage divider circuits and sensitivity selector switches SW1. This circuit then operates the second set of indicator lamps L1 through L9 in the same manner that the circuitry of Figs. 33 and 34 operate the first set of indicator lights L1 through L9, as described above, upon the bending of probe 306.

The circumferential position indicator circuit which is associated with the photo detector described above for indicating the rotational alignment of the device with the locking member 260, is illustrated in Fig. 38. IC26 is a very sensitive reflective type line reader containing an infrared LED source and a photo detector in a precision molded plastic holder that aligns the axis of both devices such that the IR source is reflected from the target surface 270 to the photo detector when the device is positioned at the correct height and inclination to the target surface 270. When the device is aligned with the contrasting spot on the surface 270, there is an increase in current from the photo detector IC26. This current is converted to a voltage change by resistor R53 and amplified by transistor T1 to a TTL logic level which trips the Schmidt Trigger NAND gate IC27. The Schmidt Trigger gate has a built-in hysteresis which prevents oscillation of the output when the photo detector is near the switch point. The gate drives opto-coupler IC28 to turn on indicator lamp L16.

It is to be understood that the above described circuitry is one means of providing the desired visual indication of movements of the sensing device and that other circuit constructions can be utilized in conjunction with the device to provide either the same visual indications or other indications. For the sake of clarity, a list of components used in the construction of the above described circuitry is set out below, but is not to be construed as a limitation on the construction of the circuitry portion of the present invention.

ELECTRONICS PARTS LIST

| Item | Description | Type |
|------|-------------|------|
| A1 | Intersil ICL 7606 CJN | I.C. |
| A2,3 | Intersil ICL 7605 CJN | I.C. |
| A4 | National LM747CN | I.C. |
| C1,7,13,18,20 | .1 mfd | Capacitor |
| C2-6,8-11, 14-17 | 1.0 mfd | Capacitor |
| C12,19 | .20 mfd | Capacitor |
| D1 | 1N4148 | Diode |
| G1-4 | BLH FAET-06C-35-S9ES | Strain Gage |
| IC1,7,18 | National LM3914N | I.C. |
| IC2-6,8-11, 15,19-23,28 | Texas Instrument T1L113 | I.C. |
| IC12,17 | Texas Instrument SN7408 | I.C. |
| IC13 | National LM324N | I.C. |
| IC14 | National LM339N | I.C. |
| IC16 | Texas Instrument SN7404 | I.C. |
| IC24 | Siliconix DG163AP | I.C. |
| IC25 | Texas Instrument NE555 | I.C. |
| IC26 | Texas Instrument T1L139 | I.C. |
| IC27 | Texas Instrument SN74LS13N | I.C. |
| L1-16 | Chicago Miniture CM7382 | Lamp |
| R1 | 240 ohm | Resistor |
| R2 | 2K Pot | Resistor |
| R3,9,11,12, 18,19,25,50 | 100K | Resistor |
| R4,6,8,29-32, 35,51 | 10K | Resistor |
| R5 | 33K | Resistor |
| R7,10,17 | 1M | Resistor |
| R13,20,40 | 45.3K | Resistor |
| R14,21,41 | 4.02K | Resistor |
| R15,22,42,52 | 1K | Resistor |
| R16,23,39 | 1.2K | Resistor |
| R24,25 | 2.2K | Resistor |
| R26 | 200K - 20 Turn Trimmer | Resistor |
| R28 | 8.2K | Resistor |
| R33 | 330K | Resistor |
| R34 | 4.7K | Resistor |
| R36,38 | 120K | Resistor |
| R37 | 10K Pot | Resistor |
| R43,44 | 4.7M | Resistor |
| R53 | 15K | Resistor |

ELECTRONICS PARTS LIST
(Cont.)....

| Item | Description | Type |
|------|-------------|------|
| SW1A-C | Stackpole 73-1097 | Switch |
| SW2 | C&K 7101 | Switch |
| VR1 | National LM317 | Voltage Reg. |
| +V Voltages | 15V | Supply |
| -V voltages | -15V | Supply |
| +VR1 Voltages | +10V | Supply |
| +VR2 Voltages | +8V | Supply |
| -VR2 Voltages | -8V | Supply |
| +VR3 Voltages | +5V | Supply |
| -VR3 Voltages | -5V | Supply |

In operation, the device of Fig. 25 is brought into a position in close proximity to the surface 270 and initially visually disposed as perpendicular as possible to the surface. The device is then brought into engagement with the surface so that the probes 288 each touch the surface and so that the probe 306 is positioned in the conical depression 272 in the disc 264. As the pins 288 engage the surface and are thus telescoped into the support member 276, they will bend the cantilevered extensions 300 causing a variation in the voltage output from strain gages 302 and 306 in proportion to the amount of deflection of each of the extensions. This in turn, through the circuitry described above, will produce a lighting of the lights of both the perpendicularity indicator display 358 and the vertical position indicator display 360. During this initial phase of movement of the device the sensitivity switch SW1 should be positioned for the minimum sensitivity so that the indicator lamps provide a more meaningful indication of the general relationship of the device to the target surface 270 and provide an initial indication of the direction which the device is to be moved to both position the device the correct distance from the surface and perpendicular to the surface.

Likewise, on initial contact with the surface the probe 306 is positioned in the conical depression 272 in the disc 264 which results in some side ways deflection of the probe 306, producing a change in the voltage output of one or both of the strain gages 344 and 346 which, in turn, through the circuitry described above, lights the appropriate lamps in the horizontal direction indicator display 362.

At this point, the operator moves the device in the appropriate directions, as indicated by the lamps, in order to bring each of the indicator displays 358, 360 and 362 to the center green position. The operator then adjusts the sensitivity switch SW1 to a greater sensitivity which will produce a change in the light displays. The operator then again moves the device relative to the surface 270 and the conical depression 272 until each of the light displays is again brought to the center green light. This procedure is continued to the maximum sensitivity as established by switch SW1 and until the operator has finally positioned the device so that each of the indicator displays a center green light which then indicates that the device is positioned correctly on the center line of the locking member 260 and that the device is perpendicular to the surface 270 to the desired extent of sensitivity which is preprogrammed into the circuitry.

The operator then rotates the device while observing the positions of the pointers 350 and 352 until they are brought into alignment. The operator continues to rotate the device until the photo detector senses the spot on the surface of 270 which indicates exact alignment for the locking member 260 which will produce lighting of the lamp L16. It is possible, during rotation of the device that the relative perpendicularity of the device to the surface 270 and its alignment with the access of the locking member 260 may change. This will be indicated through the displays 358, 360 and 362 and additional correction may be necessary by the operator to bring all of the indicator lights to green once the rotational movement of the device has been completed.

Although the preferred embodiment of Fig. 25 of the present invention as described above was designed mainly to establish perpendicularity between the device and the target surface 270, it is to be understood that it is considered an additional feature of the device to be able to sense an angular relationship between the device and the target surface 270. Likewise, it is considered that the ability to sense perpendicularity or angularity of the device relative to the target surface is independent of the horizontal positioning indicator which is utilized in the preferred embodiment. These features combined, however, provide the desired sensitivity for the environment in which this device is described above.

The term transducer means, as used herein, is intended to be utilized in its broadest sense to encompass all of the various types of transducers which are capable of providing the necessary indication of the relative position of the sensing device of the present invention to a surface. Such transducer means include many of the light sensing types, such as photo detectors and light emitting diodes. It further includes sonic detectors, magnetic and electric detectors, such as inductance, reluctance and capacitance type of detectors. For example, it is anticipated that the pins 288 and associated transducer means, which includes the cantilevered extensions 300 and strain gages 302 and 304, can be replaced by any of the various transducer means indicated above which could provide the necessary indication of the distance from the target surface to the support member and the necessary indication of angularity and/or perpendicularity, as desired.

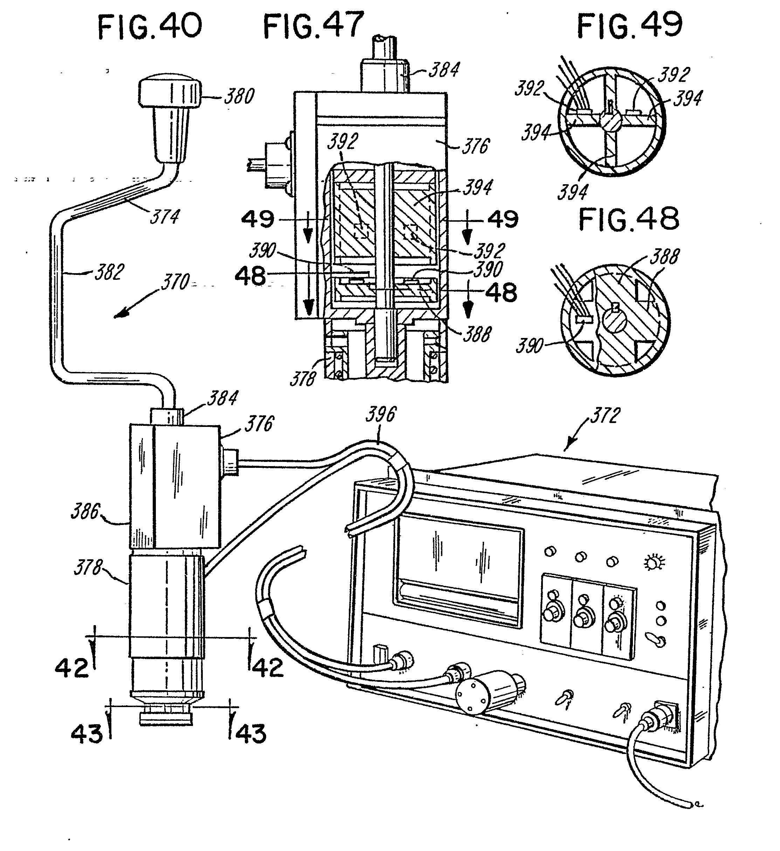

The preferred embodiment of the instrumented tool 370 of the present invention is seen in its overall configuration in Fig. 40, connected to a visual read-out device in the form of a graph recorder 372. The instrumented tool 370 basically consists of a crank handle 374, a thrust and torque measuring section 376 and an angle measuring section 378.

The crank handle 374 is of conventional construction with an upper handle 380 rotatably secured to the crank portion 382 which in turn has a female drive member 384 secured on the lower end portion thereof for rotation therewith. Drive member 384 mates with a corresponding male rectangular end portion of a main drive shaft (not shown) extending through the thrust and torque section 376.

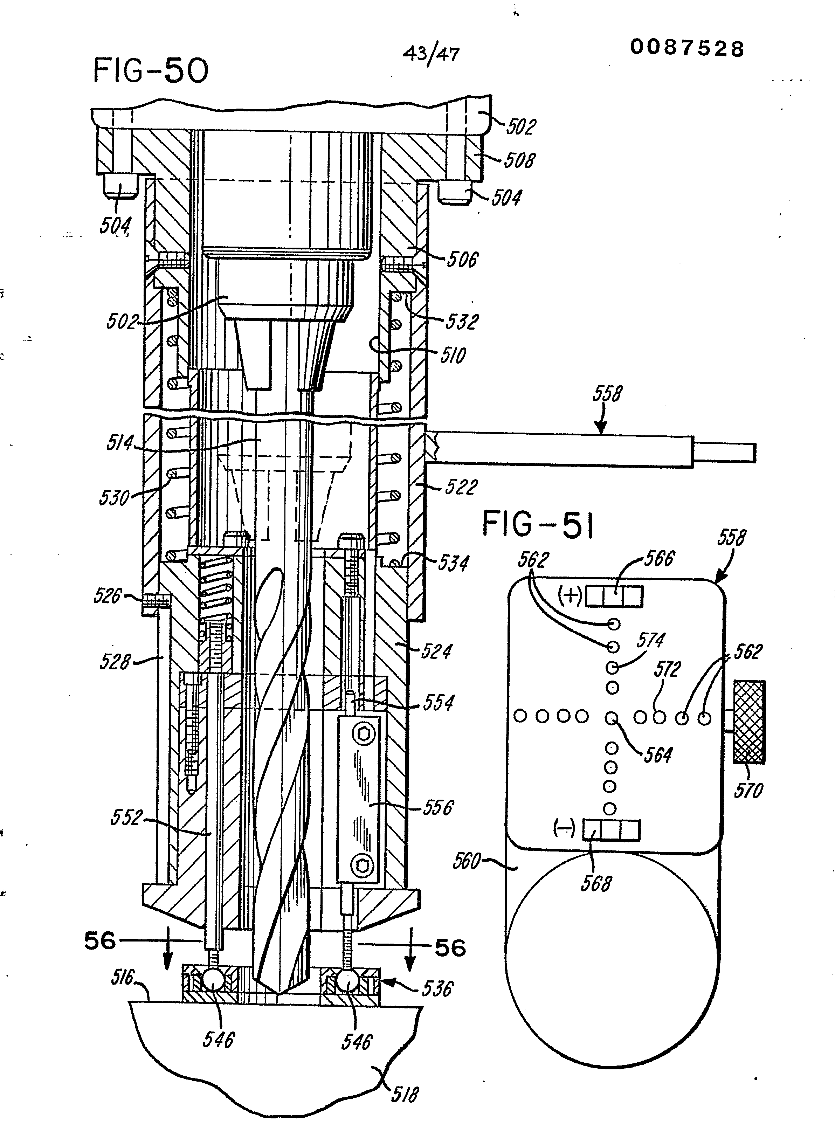

The thrust and torque section 376 is contained within a housing 386. The thrust sensing device can, for example, be a thin plate 388 associated with a collar on the main drive shaft which when bent due to downward application of force applies force to the sensing members, such as strain gage load cells 390, as shown in Figs. 47 and 48. The load cells 390 then produce an electrical output which is transmitted to the graph recorder 372 and amplified in order to produce a read-out thereon.

The torque sensing device is associated with the main drive shaft and can also, for example, consist of strain gage type load cells 397 which measures the stress on the shaft through an associated collar having thin plate-like portions 394, as shown in Figs. 47 and 49 and which produces an electrical output which can also be amplified by the graph recorder 372, to provide a visual read-out of the torque applied to the shaft. The torque

measuring sensors are conventionally secured to the main drive shaft as shown in Fig. 47 and the information, i.e. the electrical signals generated by torque applied to the main drive shaft, are transferred through slip rings into the stationary housing from which they are transferred through the electrical connection line 396 to the graph recorder 372. A model 6050 torque-thrust sensor, available from GSE, Inc., Farmington Hills, Michigan, can, for example, be used for the torque and thrust measuring section 376.

The lower portion of housing 386 which contains the thrust and torque measuring section, extends down over the angle measuring section 378. The angle measuring section is resiliently supported within housing 386, as best seen in Fig. 47. The main body portion 398 of the angle measuring section 378 is cylindrical and is concentrically received within cylindrical housing 386. It is biased outward in housing 386 by a compression spring 400 and is limited in its outward movement by a roll pin 402, or the like, which engages an elongated slot 404 in the side of main body portion 398, so that the main body can telescope within the housing 386 within the limits of the elongated slot 404.

Main body portion 398 is also concentric with the main drive shaft 406 which extends through both the thrust and torque measuring section 376 and the angle measuring section 378. The main drive shaft 406 can, of course, be sectionalized with engaging drive connectors, such as rectangular end portion 408 extending from the thrust and torque measuring section 376, in order to permit the various sections of the instrumented tool 370 to be disassembled more easily. Extending from the lower end portion of the shaft 406 is a driver member 410, here shown as a phillips head screwdriver fitted in a hexagonal recess 412 which receives a correspondingly shaped upper end portion of driver member 410. It is contemplated that the driver member 410 can be of any desired shape to drive a threaded fastener having any head configuration, into a hole.

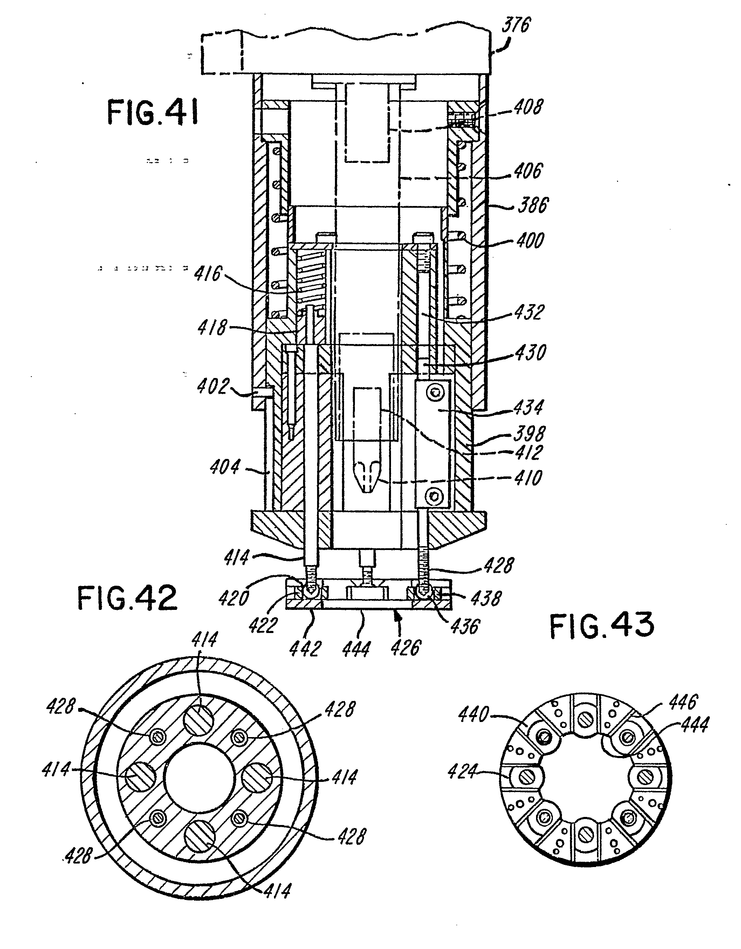

Contained within the main body portion 398 are a plurality of cylindrical support rods 414 (in the preferred embodiment illustrated there are four) which are disposed in an equally angularly and radially spaced pattern concentrically about the main drive shaft 406 in corresponding cylindrical openings in main body portion 398, as best seen in Fig. 42. Each of the support rods 414 is biased outwardly by a spring 416 which pushes against a spring centering collar 418 fitted to a reduced cylindrical upper end portion of each support rod. The lower end portion of support rods 414 are provided with spherically shaped members 420 which engage corresponding cylindrical support members 424 which in turn are engaged in radially extending channels 424 in the base plate assembly 426, as described in more detail below.

The plurality of springs 416 have a combined spring constant less than that of spring 400 so that as the main body portion telescopes into housing 386 the springs 416 will be fully compressed. This permits the main body portion 398 to be forced down to rest against the upper surface of the base plate assembly 476. which is important for reasons set out below.

Also contained within the main body portion 398 are a plurality of sensor rods 428 (in the first preferred embodiment illustrated there are four) which are also equally angularly and radially spaced in a pattern concentrically about the main drive shaft 406, and are also equally angularly spaced from support rods 414. The upper end portion 430 of each sensor rod 428 is cylindrical and is guided within the cylindrical opening 432 in the upper end portion of main body portion 398. The central portion of each sensor rod 428 extends through a linear potentiometer 434 which engages the central portion of the sensor rod 428 in a conventional manner to provide an electrical output from the potentiometer 434 which is transferred through the wires 396 to the graph recorder 372 in order to provide a visual read-out of the output of the potentiometers.

The lower end portion of each sensor rod 428 is provided with a spherically shaped member 436 which is the same as member 420 on the support rods 414. These spherically shaped members 436 are also fitted in corresponding cylindrical support members 438 mounted in substantially radially extending channels 440 in the base plate assembly 426. Base plate assembly 426 is comprised of a cylindrical plate 442 having a central opening 444 through which the driver member 410 will extend when the main body portion 398 is compressed within the housing 386. Each of the cylindrical support members 422 and 438 are captive within the base plate assembly 426 by mating wedge shaped members 446 secured to the base plate by screws or the like so as to form the radially extending channels 424 and 440. The spherically shaped members 420 and 436 are held captive in the cylindrical support members 422 and 438. This can be accomplished by having the upper opening smaller than the diameter of the spherical members 420 and 436. To assemble them the rods 414 and 428 are inserted through the respective cylindrical members 422 and 438 and the spherical members 420 and 436 are then threaded on to the rods.

Spherical members 420 and 436 are thus prevented from becoming disengaged from the base plate assembly 426, but are free to rotate in any direction sufficiently to permit the tool to be rotated so that the axis of rotation of main drive shaft 406 can have an angle with respect to a plane perpendicular to a flat surface upon which the base plate is set, of approximately 30 degrees. This angle is believed to be more than sufficient to allow for misalignment between the axis of rotation of drive shaft 406 and the axis of rotation of the threaded fastener, to account for normal human error in alignment, although a greater angle can be established if necessary.

The graph recorder 372 is of conventional construction, such as for example, an oscillograph of the general type available from Midwestern Instruments Inc., Tulsa, Oklahoma, Model No. TMR 032006. In addition, a signal conditioner should be utilized to amplify the signals coming from the torque and thrust sensors if the above referenced oscillograph is used. Such a conditioner can, for example, be a strain gage excitation and conditioner amplifier also available from Midwestern Instruments Inc., designated Model No. TMI 2600.

In operation, the instrumented tool 370 is positioned over a threaded fastener (not shown) already started into a hole in a surface which is preferably flat and perpendicular to the central axis of the hole and thus the central axis of the threaded fastener, in order that the instrument read-out is accurate and gives the information required. The instrumented tool is then pressed downwards so that the main body portion 398 telescopes within housing 386 to permit the driver member 410 to engage the head of the threaded fastener. The crank portion 382 is then rotated to thread the threaded fastener into the hole.

During insertion of the threaded fastener into the hole, the thrust being applied through the crank handle 374 as well as the torque being applied thereto, are constantly monitored through the torque and thrust sensors contained in section 376 to thus permit a determination that sufficient torque and thrust are being applied so that the driver member will not slip in its engagement with the head of the threaded fastener. Also, the information is useful so that not too much torque and thrust are being applied so as to cause damage to the head of the threaded fastener in that manner, and so far as the torque is concerned, to be certain that not too much torque is being applied to the threaded fastener which could cause it to break. It is a further advantage to measure the torque so that sufficient torque is applied to tighten the bolt for maximum holding power which is easily determinable by well known practices.

The graph recorder 372 can be adjusted to provide an appropriate scale on the read-out so it can be calibrated to provide a direct read-out of the torque and thrust being applied to the threaded fastener. The manner of doing this is also well known in the art and will therefore not be discussed in detail herein.

If the axis of rotation of the main drive shaft 406 is not perpendicular to the surface upon which the base plate assembly 426 is supported, an indication of this will be provided by the angle measuring section 137. In order to provide this information the potentiometers 434 are initially calibrated at a zero position at which the axis of rotation of the main drive shaft 406 is perpendicular to the base plate. This is most easily accomplished by compressing the springs 416 sufficiently to bring the lower surface of main body portion 398 into surface-to-surface contact with the upper surface of base plate assembly 426. Thus, during use of the device, when these two surfaces are not in complete surface-to-surface contact it will be indicated by the potentiometer outputs and associated visual or electronic output, and can be easily corrected by rocking the device until perpendicularity is obtained.

Once the potentiometers are calibrated, an inclination of the instrumented tool 370 with respect to the plane perpendicular to the surface upon which base plate assembly 426 rests will cause a visual read-out in graph 372. This is accomplished as a result of the sensor rods 428 moving within their respective potentiometers 434. If movement is in a plane passing through two potentiometers and through the axis of the drive shaft, the read-out will be from those two potentiometers only since the other potentiometers will not be changed because the sensors extending therethrough will not be moved within them. However, in the case where angular movement of the main drive shaft with respect to the surface upon which the base plate assembly 426 sets is not in either plane, all four potentiometers will be changed.

In this case, it is easy to calculate the actual angle in such an azimuth plane between the axis of rotation of the main drive shaft and the surface upon which base plate 426 sets. This is accomplished by using the following formula:

$$\theta = \text{ARCTAN} \sqrt{\tan^2 A + \tan^2 B}$$

Where $\theta$ is the tool inclination angle in the azimuth plane and A and B are the angular readings of the two angle sensors.

The tool may then be uprighted perpendicular to the surface by observing the read-outs of the potentiometers so that the axis of rotation of the drive shaft 406 is maintained relatively parallel to the axis of rotation of the threaded fastener.

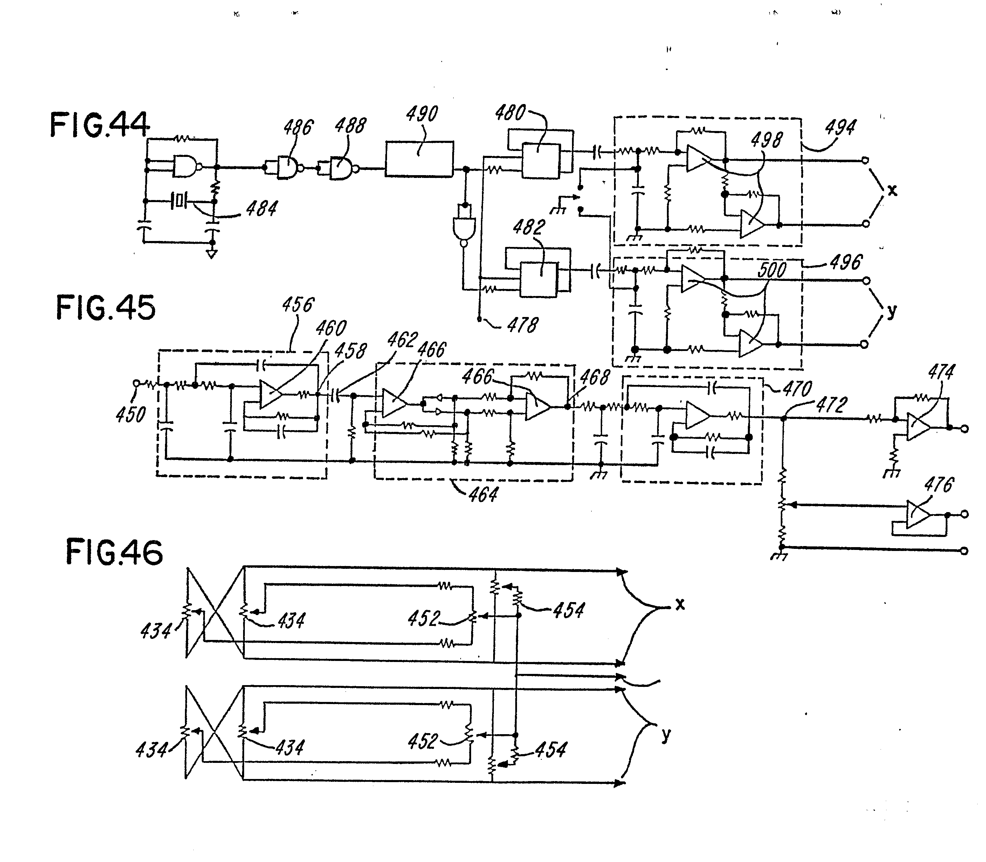

Calculation of the above equation is accomplished by the circuitry illustrated in Figs. 44-46. Basically the circuitry provides input voltages to a plurality of potentiometers and modifies the resultant output voltages to provide the necessary signals to the recording equipmuth described above.

Referring first to Fig. 46, there is illustrated a voltage supply and balance network associated with the two pairs of potentiometers 434 disposed in perpendicular planes referred to for simplicity as the x and y planes. A square wave input to the x and y terminals in Fig. 46 is provided from the x and y output terminals of the circuit of Fig. 44, in such a manner that the square wave input to terminals x will be 90 degrees out of phase with the square wave input to terminals y. This input voltage to the x and y terminals becomes the excitation voltage for potentiometers 434.

The resultant voltage from the potentiometers is combined and transmitted from terminal 448 to input terminal 450 (Fig. 45). Solution of the above referred to equation, is essentially accomplished in the circuitry illustrated in Fig. 46. The reason for this is that the summation of the square wave output of the potentiometers 434 is in fact essentially the same as the summation of two sine waves 90 degrees out of phase. The resultant vector summation is determined in the circuitry illustrated in Fig. 45, as described below.

Referring again to Fig. 46, a first pair of potentiometers 452 are connected in the balance circuitry of potentiometers 434 in order to compensate for differences in resistance in the potentiometers. A second set of potentiometers 454 are included in the output signal circuitry from the potentiometers 434 in order to adjust for off-set in the scale reading on the output of the recording equipment.

Referring now to the circuitry of Fig. 45, the square wave output from terminal 448 of Fig. 46 is the input to terminal 450 of Fig. 45. The first portion of the circuitry of Fig. 45, indicated within the phantom line area 456, is a three pole active filter circuit with an associated feed-back network producing a sine wave output at terminal 458 which is the actual resultant solution of the equation set out above. The integrated operational amplifier circuit 460 can be of conventional nature such as an LF 356 H or N available from National Semiconductor Inc.

The output from terminal 458 is AC coupled through capacitor 462 to a full wave rectifier circuit shown within phantom area 464. This circuit utilizes a pair of integrated circuits 466 of conventional construction such as MC 1458 SCP available from Motorola Corp. The circuitry in area 464 produces a full wave rectified sine wave without diode loss at pin 468.

The output from pin 468 is then fed into circuit 470 which is also a three pole active filter circuit providing a DC voltage at output terminal 472 which is amplified, but proportional to the full wave rectified sine wave produced at the output terminal 468.

The DC voltage from terminal 472 is then pased through operational amplifiers 474 and 476. Amplifier 476 supplies voltage to the graph recorder 372 in a conventional manner. The output from operational amplifier 474 is used as an input through terminal 478 to the D flip-flops 480 and 482 (MC 14013CP) of the circuitry illustrated in Fig. 44. This feedback is used to modulate the square wave being used to excite the potentiometers 434 to compensate for nonlinearity of the arctangent function being calculated which is a procedure commonly used under such conditions.

In order to provide the excitation voltage for the potentiometers, a crystal oscillator 484 is used having, for example, a 3.6 mHz operating frequency although this is not critical. The signal is then passed through a pair of NAND gates 486 and 488 which act as wave shaping inverters in order that the signal coming from gate 488 is a square wave of the same frequency and phase as the unshaped signal generated by oscillator 484. The signal from gate 488 is then fed into a counter 490 which is used to divide the high frequency signal down to approximately 900 hertz, for example, which is a more reasonable frequency for exciting the potentiometers 434 used.

The output signal from counter 490 is then split and fed into flip-flops 480 and 482, with the signal into 482 being inverted by NAND gate 492. The outputs of the flip-flops 480 and 482 are thus 90 degrees out of phase, as desired for exciting the potentiometers 434. These signals are then passed through respective amplifiers circuits 494 and 496 shown in the dotted line areas of Fig. 44, in order to provide the necessary amplitude for exciting the potentiometers. It is preferable that the amplifier units 498 and 500 in the circuits 494 and 496 are fast response operational amplifiers, such as MC 1458 SCP, in order that they respond to the rapid changes produced in the signals from the flip flops as a result of the modulating signal from amplifier 474 as described above.

It can therefore be seen that with the above circuitry as described in connection with Figs. 44, 45, and 46, the solution to the above formula can easily and accurately be obtained and utilized as an input for operating the graph recording equipment 372 of conventional construction.

Although a manual crank is provided in this preferred embodiment for providing the torque and thrust for inserting the threaded fastener, a motor or other means may also be utilized. In addition, if such a motor means is provided the angular read-out from the graph recorder 372 could also be utilized to interrupt operation of the device if the angle of inclination is too great with respect to the axis of rotation of the threaded fastener. Further, it is contemplated that provision can be made for monitoring an envelope of parameters including torque, thrust and angle of inclination so that if, in operation, a value is monitored outside of the envelope the instrument will be shut off, sound an alarm, etc. All of these modifications can likewise be used with the drill, tap or wrench modifications described below.

Referring now to a further preferred embodiment of the present invention as illustrated in Fig. 50, it is basically constructed the same as the embodiment of Fig. 40, but is adapted for attachment to a drill motor 502. Drill motor 502 is of any conventional construction, for example, of the hand held drill type, but which has had its lower portion adapted for being bolted to the angle measuring device by a plurality of bolts 504. In this embodiment the upper portion of the instrumented tool includes the cylindrical mounting cap 506 which is provided with a flange 508 through which the plurality of bolts extend and bolt into the drill motor 502 for holding the instrumented tool securely to the drill motor.

The central cylindrical opening 510 in the mounting cap 506 is of sufficiently large diameter to permit the chuck 512 of the drill motor to have clearance therein so that it is free to rotate while drilling. Provision can be made in the side of the housing for inserting a key (not shown) to release the drill 514 from the chuck in a conventional manner without unbolting the instrumented tool from the drill motor. In this embodiment, the thrust and torque measuring section 376 of the previous embodiment is omitted and only the angle measuring portion is utilized in order to establish the perpendicularity or desired angle of the drill 514 to the surface 516 of the object 618 in which the hole is to be drilled. It is also to be noted that although this preferred embodiment is described in connection with a drilling device it can likewise be utilized for tapping, or as a power driven wrench.

Bolted to the mounting cap 506 by a plurality of bolts 520 is a cylindrical upper housing 522. A lower cylindrical housing 524 is slidably received within upper housing 522. Bolt 526 is threaded into the lower edge portion of the upper housing 522 and rides in an elongated slot 528 formed in the side of the lower housing 524 to thus permit telescoping movement of the lower housing 524 within the upper housing 522. A compression spring 530 is contained within the upper housing 522 and compressed between the shelf 532 on the mounting cap 506 and the upper edge 534 of lower housing 524 to bias the lower housing in the extended position as shown in Fig. 50.

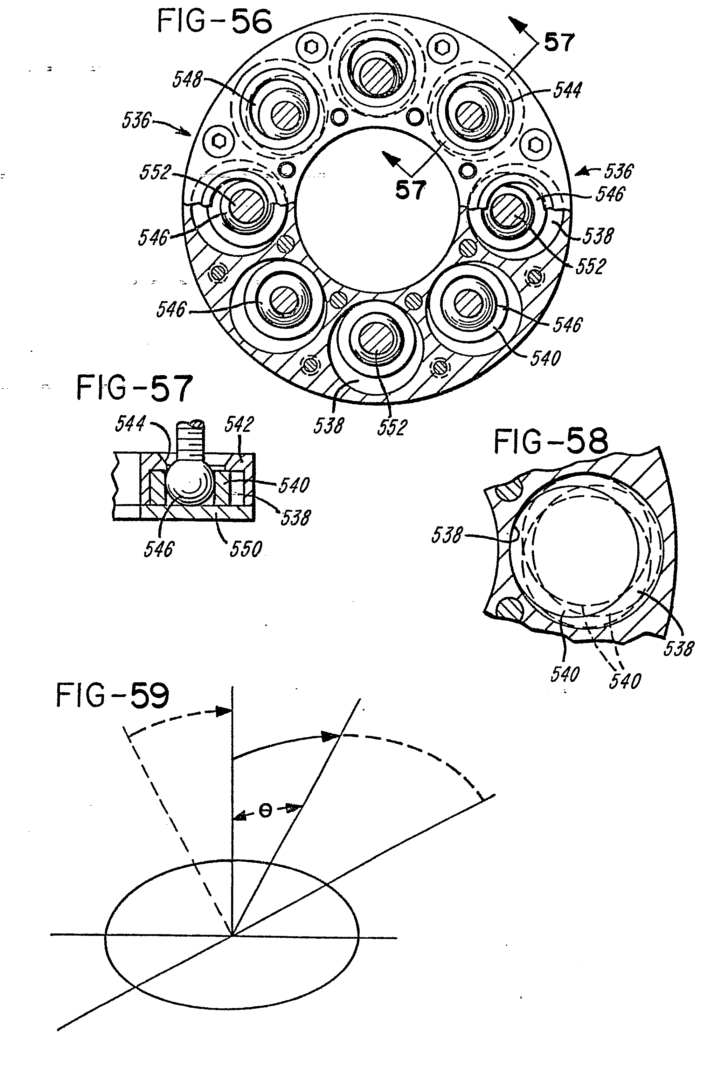

The lower housing 524 contains a plurality of potentiometers and support rods of identical construction and arrangement of those described in detail above in connection with the preferred embodiment of Fig. 40. The central opening in the lower housing 524 has been expanded to accommodate the drill as shown. The construction of the base plate assembly 536, is somewhat different from the construction of base plate assembly 426 in the preferred embodiment of Fig. 40 and is illustrated more clearly in Figs. 56-58. Although the base plate assembly 536 accomplishes the same function as the base plate assembly 426, rather than utilizing the radially extending channels 424 and 440 to permit movement of the cylindrical support members 422 and 438, cylindrical bores 538 are utilized instead due to the relative ease in production of this form over that of Fig. 40.

The diameters of the cylindrical bores 538 are based on the largest displacement necessary of the cylindrical support members 540, which are the same as the cylindrical support members 422 and 538, which is needed to permit the frame structure to be tilted the desired amount relative to the base plate assembly 536. Cylindrical bores 538 are formed in the lower portion of the main base plate 542, as shown in Fig. 57, and a reduced tapered opening 544 is formed in the upper portion of base plate 542 with the taper being sufficient to permit the support plate or potentiometer rod to be tilted the desired angle relative to the base plate without contacting the side of the base plate.

The cylindrical support member 540 is constructed the same as cylindrical support members 422 and 438 so as to hold the respective spherically shaped members 546 and 548, which are likewise identical to spherically shaped members 420 and 436. A cover plate 550 is bolted to the bottom of base plate 542 with a plurality of bolts 552 to hold the assembly together after all of the cylindrical support members 540 and spherically shaped members 546 and 548 are positioned in the base plate 542. Both the base plate 542 and cover plate 550 are provided with a central circular opening going completely therethrough in order to permit the drill to pass through to the workpiece.

Referring again to Fig. 50, the lower cylindrical housing 524 is essentially the same as the main body portion 398 of the embodiment of Fig. 41. Likewise, the support rods 552 and sensor rods 554 are identical to support rods 414 and sensor rods 428 and also potentiometers 556 are the same as potentiometers 434 of the embodiment of Fig. 41.

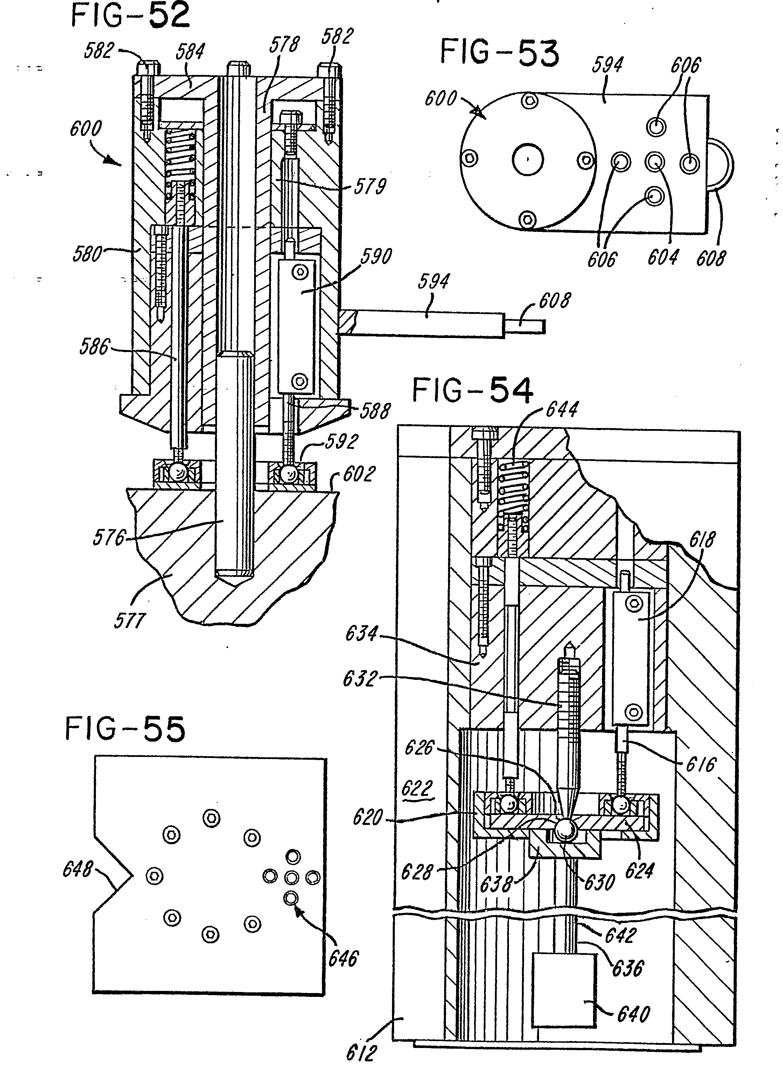

As an alternative to the use of the graph recorder 372 which is discussed above with regard to the embodiment of Fig. 40, the instrumented tool illustrated in Fig. 50 is provided with an angle indicator 558 which is shown in plan view in Fig. 51. Angle indicator 558 is secured to the side of the upper housing 522 with a mounting bracket 560 which conforms to the cylindrical configuration of the upper housing. The angle indicator is relatively thin as can be seen from Fig. 50 and is basically of printed circuit construction with a pair of perpendicular cross bars formed of a plurality of lights 562. The four potentiometers 556 are positioned 90 degrees apart so that two each are positioned in perpendicular planes which are aligned with the cross bars formed by the lights 562, so that the electrical impulses received from the potentiometers can be coordinated with the positions of the cross bars on the angle indicator 558.

The printed circuit board in angle indicator 558 is so constructed that upon receipt of calibrated signals from the potentiometers 556, when the drill 514 is positioned exactly, i.e., within the design tolerance limits of the equipment, perpendicular in the two orthogonal planes of the potentiometers relative to the reference plane 516, only the central light 564 will be lit. As the drill is positioned askew to the reference plane 516 the lights 562 in the direction of tilt of the drill will light individually. As the angle of tilt of the drill relative to the reference plane 516 increases the corresponding lights 562 which are further out from the central light 564 will light while the inboard lights 562 will go out.

The amount of angular tilt of the drill relative to the reference plane can be correlated to the positions of the lights. For example, it can be calibrated so that every five degrees of tilt will cause a change in which a light or lights are lit until the outermost light is reached at which point any further tilt will cause the outermost lights to continue to be lit until the drill is brought to a more perpendicular position. Then, as the drill approaches perpendicularity, the lights will progress inwardly toward the central light 266 at which point the drill will be exactly perpendicular to the reference plane in the two orthogonal planes corresponding to the planes of the potentiometers 556.

In order to permit an object to be drilled at an angle other than exactly perpendicular to the surface, an azimuth biasing feature can be included in the angle indicator 558. This can be accomplished through the use of angle indicating windows 556 and 568 which can, for example, be in the form of LCD or LED numerical read-outs. Thus, if it is desired to slant the angle of the drill relative to the surface in the plane aligned with the angle indicating windows 566 and 568, the appropriate desired angle can be indicated in either of the windows 566 or 568, depending upon the direction of slant desired from the central vertical position, by adjusting the thumb wheel 570 which adjusts the appropriate resistance internally of the angle indicator in order to bias the circuit to indicate that the central light 564 will be lit when the drill is at the appropriate angle in the azimuth plane.

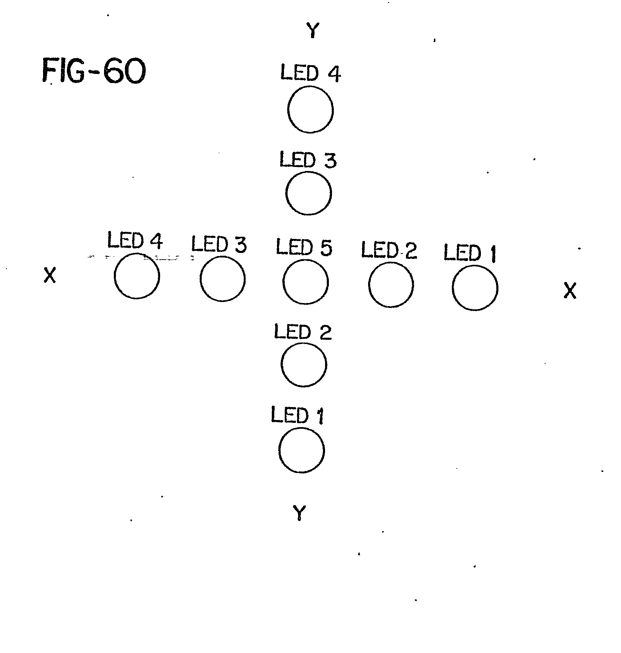

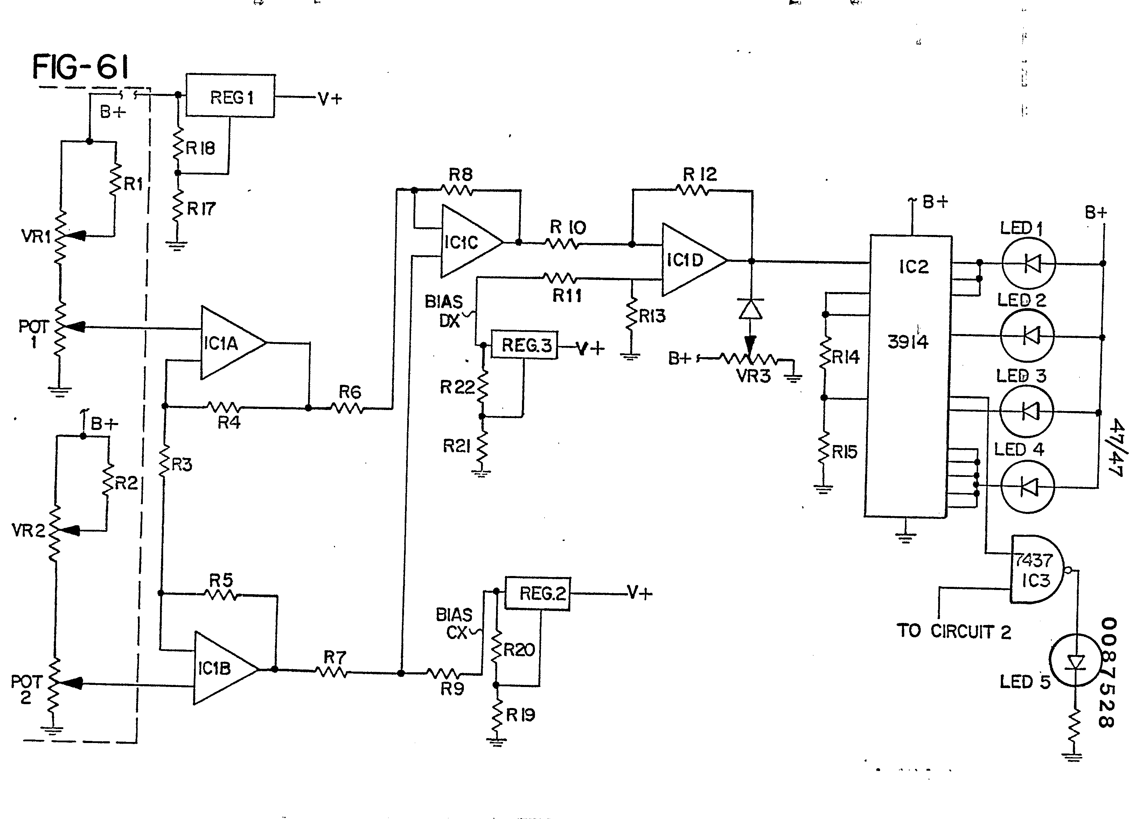

As an example of the circuitry which can be utilized to translate the signals received from the potentiometers into the visual readout provided by angle indicator 558, the circuit disclosed in Fig. 61 is provided. Also, an enlarged schematic representation of the light layout for the angle indicator 558 is provided in Fig. 60, only 9 LEDs (light emitting diodes) being utilized. It is to be understood that any number of LEDs can be used and that the following description in conjunction with Figs. 60 and 61 is exemplary only.

Referring to the circuit of Fig. 61 integrated circuits IC1A, B and C together form an instrumentation amplifier that outputs a gained voltage linerally proportional to the degree of nonperpendicularity as sensed by the sensor potentiometers 1 and 3 (X axis). The combination of VR1 and R1 limit the voltage to sensor potentiometer 1 and the combination of VR2 and R2 do the same for sensor potentiometer 3. The gain of the amplifier formed by IC1A, B and C is controlled by the value of R3.

Bias CX is used to adjust the output voltage of IC1C to approximately mid-range at 0 angle of inclination. IC1B is a differential amplifier with gain. This circuit takes the output of IC1C and subtracts bias DX. This difference is then amplified to give the degree of sensitivity desired.

Bias DX is obtained from adjustable voltage regulator REG-3 and is used to program and offset angle or used to measure an unknown angle. The output of IC1D is then fed into IC2 which is an analog voltmeter that can drive up to 10 LEDs (light emitting diodes). In the normal usage of this device, an analog input of 10 percent of full scale would light the first LED, 20 percent of full scale would light the second LED, - -.

In the circuit illustrated, the output of IC1D is set for 50 percent of full scale of the voltmeter at 0 angle of inclination and thus lights LED 5 through IC3. LED's 2 and 3 light whenever the frame of the device is inclined off the true perpendicular position by more than the first threshold level.

LEDs 1 and 4 light whenever the second threshold level is exceeded and remain on at any greater angle, because the remaining LED outputs are "or" tied to LEDs 1 and 4. The display can be expanded to drive an almost unlimited number of LEDs by cascading several voltmeter circuits together. In normal operation the output from IClD ranges from 0 to 100 percent of full scale of the voltmeter as the angle of inclination is changed from the maximum positive angle to the maximum negative angle. LED 1 would normally go out when the input is less than 10 percent of full scale. Diode D1 and VR3 form a low limit voltage clamping circuit which prevents the output from going below the 10 percent level.

The circuit described above is for the X axis. The Y axis consists of a duplication of IC1, IC2, REG-2 and REG-3 and their associated circuitry. IC3 is common to both axes and is REG-1.

Thus, in order to operate the drill at the desired angle, whether it be exactly perpendicular to the reference surface 516 or at a biased angle as described above, the operator need only observe the two cross bars of lights until they converge on the central light and until only the central light 564 is lit, at which point the drill is at the desired angle. When the drill is positioned in a plane other than in one of the two planes indicated by the positions of the cross bars, the lights 562 in both cross bars will be lit simultaneously. Thus if the drill is slanted towards the upper right hand quadrant of Fig. 51, and is at, for example, a slant of ten degrees from the desired position, the two lights 572 and 574 will initially be lit. As the drill is brought to the vertical, or desired angular position, the lights inboard of the lights 572 and 574 will sequentially light as the lights 572 and 574 are extinguished and subsequently the light 564 will be the only light lit when the drill is at the exact position for drilling.

The circuitry of Figs. 44-46 as described above can be utilized with this embodiment except for the angle resolving feature which is not needed because of the use of the perpendicular cross bars of lights which are used instead. It is to be understood, however, that the graph recorder 396 could be utilized in conjunction with or in place of the light bars in any of the disclosed embodiments if a more exact location and permanent read-out of the relative position of the drill to the reference plane 516 is desired.

Referring now to a further alternative embodiment of the present invention as illustrated in Figs. 52 and 53, this device is again very similar to the embodiment of Fig. 50 as well as that of Fig. 41, but is directed in this instance to measurement of the position of a stud 576 which is fixed in an object 577 and extends from a reference surface 602. In this embodiment, the main housing 580 is constructed very similar to the lower housing 524 of the embodiment of Fig. 50, and since there is no need for compressing an upper portion of the housing as there is in in the embodiments of Figs. 41 and 50, this feature has been eliminated from the embodiment of Fig. 52.

In this embodiment, the central opening 579 defined in the main body 580 is of larger diameter than the stud 576 to be checked, so that there is room to receive a sleeve 578 having an internal bore diameter which provides a slip fit over the upper portion of the stud 576. In this way, if other stud diameters are needed to be checked, the sleeve 578 can simply be removed and another sleeve inserted having an appropriate bore diameter for the diameter of stud to be checked. Sleeve 578 is held in the main body portion 590 by a plurality of bolts 582 extending through the collar portion 584 and into threaded holes in the upper portion of the main body 580.

The support rods 586 and sensor rods 588, as well as the potentiometers 590 are the same as in the two described embodiments of Figs. 40 and 50 and positioned in the same angular relationship around the central opening in the housing. The base plate 592 is likewise preferably like the embodiment of Figs. 56-58, and the angle indicator 594 is also preferably like the embodiment of Fig. 50, although again, if more accuracy or a permanent record is desired, the graph recorder 396 could alternatively or additionally be utilized.

With this embodiment, the instrumented tool 600 is merely slipped over the stud so that the sleeve 578 engages the stud with the stud extending up through the base plate 592. If the stud is perpendicular to the reference surface 602 only the central light 604, as shown in Fig. 53, will be lit. However, if the stud is not perpendicular the appropriate light or lights 606 will be lit, indicating the direction of angle of the stud relative to the reference surface 602. Again, a thumb wheel 608 is provided in order to bias the printed circuit contained within the angle indicating device 594 so that if the stud is desired to be positioned at some angle relative to the reference surface 602 the lighting system can be adjusted accordingly so that only the central light 604 will be lit when the stud is at the desired relative angle.

In the angle indicator 594 as shown schematically in Fig. 53, only four lights outside of a central light 604 are utilized to indicate a deviation from the exact central or desired angle of position. It is to be understood that a greater number could be utilized, as in the embodiment of Fig. 51, if further indication of the deviation of the stud from the desired position is desired. Likewise, the LCD or similar numerical indicators such as 566 and 568 in Fig. 51, can be utilized for the biasing feature as described above.

Referring now to yet a further alternative embodiment of the present invention as illustrated in Figs. 54 and 55, this variation of the present invention is intended to be utilized as a level for indicating the true perpendicularity or vertical position of an object relative to the ground. In this embodiment, the instrumented tool 610 is encased with a completely enclosed housing 612. The support rods 614 and sensor rods 616 are again the same as the previous embodiments, as is also true for the potentiometers 618. In this case, however, construction of the base plate assembly 620 is somewhat different.

Each of the sensor rods 616 and support rods 614 are captive within a base plate 622 in essentially the same manner as illustrated in Figs. 56-58. However, the cover plate 624 is provided with a central opening defined by an upper conical surface 626 and a lower spherical surface 628. The spherical surface 628 engages a corresponding spherical ball 630 suspended from a stud 632 threadedly secured in the main body portion 634 of the instrumented tool 610. The upper conical surface 626 permits the cover plate 624 to be tilted in any direction without causing contact between the support stud 632 and the base plate 624 which would otherwise inhibit operation of the device.

Extending downwardly from cover plate 624 is a pendulum like member 636 which is suspended from a mounting bracket 638 fixedly secured to the bottom of cover plate 624. A weight 640 is fixed to the end of the long rod 642 and acts as a plumb for the base plate in order to maintain the base plate exactly horizontal relative to the ground. The appropriate length of the rod 642, as well as the appropriate weight of member 640, can be established depending upon the frictional forces found in the interconnection of the base plate and the sensor rods 616 and support rods 614, support stud 632, and also the force required to overcome the compression springs 644.

In operation, this latter preferred embodiment is utilized by positioning the housing against the generally vertical surface to be examined, and the exact angle from the vertical will be indicated through the angle indicator light system shown generally at 646 in Fig. 55, which is the same as the light system as described above in connection with Figs. 51 and 53. In addition, if a cylindrical surface, such as a pipe, is being examined for its relative vertical position, it can be positioned in the V-shaped notch 648 extending along the entire length of one side of the housing 612, and an indication of its relative vertical position can likewise be established. Also, as with the above referred to embodiments, a biased angle in an azimuth plane can be established in the same manner as with the angle indicator instruments described in connection with Figs. 51 and 53.

The use of the light bars as described in several of the preferred embodiments discussed above, have several distinct advantages over the use of the graph recorder. For example, it is possible to easily, visually determine the direction of inclination of the device relative to the base plate and thus the surface being drilled, etc., and to move the device in a direction such that the lights will converge on the center light of the cross bars so that the frame structure is at the desired angle relative to the surface. This is true regardless of whether the desired angle is perpendicular or is at an angle to the surface in an azimuth plane, since the position of the azimuth plane can also be established by utilizing the cross bars of lights.

The cross bars are preferably positioned relative to the potentiometers so that one row of lights corresponds to potentiometers in one plane while the perpendicular row of lights corresponds to the potentiometers in a perpendicular plane. Thus, when the device is positioned on the object relative to which the angle is to be measured, it is maneuvered into a position where the desired azimuth plane will correspond to the location of the potentiometers. The device is then tilted in such a manner to bring the lights in the light bar perpendicular to the light bar in the azimuth plane, into the center position so that only movement in the azimuth plane is remaining. The operator then only needs to maneuver the device in the azimuth plane until the central light is the only light lit.

In those devices where a bias angle can be provided, the procedure is similar in that initially the device is maneuvered to bring the lights in the cross bar which is perpendicular to the azimuth plane, into the central light, and then the device is maneuvered in the azimuth plane until only the central light is lit and thus the device will be positioned at the desired angle which is originally set into the biasing function described above. This biasing function can likewise be utilized to establish the angle of inclination of one surface relative to another by essentially reversing the procedures described above. For example, the device can be positioned with the base plate on one surface and the frame resting against the other surface; the device is then maneuvered until the light bar perpendicular to the azimuth plane light bar indicates a central light reading and then the bias wheel is adjusted until a similar reading occurs in the azimuth light bar and then the angular position of the one surface relative to the other can be read in the LCDs or similar read-out provided as described above.

While the form of apparatus herein described constitute preferred multiple embodiments of this invention, it is to be understood that the invention is not limited to this precise form of apparatus, and that changes may be made therein without departing from the scope of the invention which is claimed in the appended claims.

~~What is claimed is:~~

-104-
## CLAIMS

0087528

1. A position sensing device, comprising:

a support member (16);

at least two angular position sensing probes (104, 106) movably mounted in spaced relation in said support member (16) and extending therefrom to be engagable with an external surface;

transducer means (110, 118) mounted to said support member (16) and engaging each said sensing probe (104, 106) for sensing movement thereof and providing electrical signals indicative of the positions of each said sensing probe (104, 106) relative to said support memeber (116);

at least one reference probe (120) mounted in said support member (16) in known spaced relation from each said sensing probe (104, 106) and having an end thereof extending from said support member (16) a known fixed distance and engagable with said external surface; and

means receiving said signals from said transducer means (110, 118) and comparing the indicated positions of said sensing probes (104, 106) relative to said known distance of said reference probe (120) and to said known spaced relation among said probes (104, 106, 120) and providing therefrom an indication of the relative angular position of said support member (16) to said surface.

2.      A position sensing device as defined in claim 1 including:

a housing (12) slidably receiving said support member (16) and providing a reference plane;

further transducer means (94, 96) engaging said support member (16) and said housing (12) for sensing relative movement thereof and providing electrical signals indicative of the relative positions between said housing (12) and said support member (16); and

means receiving said signals from said further transducer means (94, 96) and indicating the distance from said end of said reference probe (120) to said reference plane.

3.      A position sensing device as defined in claim 1 or 2 including:

a platten (126) forming said external surface, said platten (126) being movably mounted to said support member (16) and engaging each said sensing probe (104, 106) and reference probe (120) and having a further surface engagable with a workpiece, said mounting of said platten (126) to said support member (16) being such that said platten (126) is free to rest flat on a workpiece in engagement with said further surface when said support member (16) is at an angle thereto in any direction and within a predetermined limit of angle.

4. A position sensing device as defined in claim 1 or 2 wherein said transducer means (110, 118) includes:

each said sensing probe (146) having a camming surface (148);

a plurality of camming members (150) movably mounted in said support member (16) and each having a cam follower end engaging a respective said camming surface (148) of said sensing probes (146);

a plurality of flexible members (94) each engaging a respective camming member (150) so as to be flexed by movement of said camming members (150) upon movement of an associated sensing probe (146); and

means (98) mounted on each said flexible member (94) for providing electrical signals indicative of the amount of bending thereof in response to movement of an associated sensing probe (146).

5.      A position sensing device as defined in claim 3 wherein said transducer means (110, 118) includes:

each said sensing probe (146) having a camming surface (148);

a plurality of camming members (150) movably mounted in said support member (16) and each having a cam follower end engaging a respective said camming surface (148) of said sensing probes (146);

a plurality of flexible members (94) each engaging a respective camming member (150) so as to be flexed by movement of said camming members (150) upon movement of an associated sensing probe (146); and

means (98) mounted on each said flexible member for providing electrical signals indicative of the amount of bending thereof in response to movement of an associated sensing probe (146).

6.      A position sensing device as defined in claim 1 or 2, including:

a lateral position sensing probe (44) movably mounted to said support member (16) and extending therefrom for engaging a discontinuity in said surface so as to cause bending of said lateral position sensing probe (44) upon lateral movement of said support member (16);

additional transducer means (66, 68) engaging said lateral position sensing probe (44) for sensing bending thereof and providing an electrical signal indicative of the degree of bending; and

means receiving said signal from said additional transducer means and providing an indication of the degree of bending of said lateral position sensing probe.

7. A position sensing device as defined in claim 3, including:

a lateral position sensing probe (44) movably mounted to said support member (16) and extending therefrom for engaging a discontinuity in said surface so as to cause bending of said lateral position sensing probe (44) upon lateral movement of said support member (16);

additional transducer means (66, 68) engaging said lateral position sensing probe (44) for sensing bending thereof and providing an electrical signal indicative of the degree of bending; and

means receiving said signal from said additional transducer means and providing an indication of the degree of bending of said lateral position sensing probe.

8.      A position sensing device, comprising:

a support member (16);

at least two angular position sensing probes (146) movably mounted in spaced relation in said support member (16) and extending therefrom to be engagable with an external surface, each said probe (146) having a camming surface (148);

a plurality of camming members (150) movably mounted in said support member and each having a cam follower end engaging a respective said camming surface (148) of said probes (146);

a plurality of flexible members (94) each engaging a respective camming member (150) so as to be flexed by movement of said camming members (150) upon movement of an associated probe (146);

means (98) mounted on each said flexible member (94) for providing electrical signals indicative of the amount of bending thereof in response to movement of an associated probe (146); and

means receiving said signals and providing an indication of the relative angular position of said support member (16) to said external surface.

9.      A position sensing device as defined in claim 1 or 8 including:

said support member (16) defining liquid supply cavities;

each said probe (165) defining liquid supply cavities interconnected to said cavities in said support member (16) for receiving liquid therefrom, each said probe (165) having an outer end defining an opening connected to said cavities in said probes and through which said liquid is expelled; and

a metering orifice (192) mounted in each said cavity in each said probe (165) for controlling the volume of liquid expelled from said opening so as to support said probes (165) on a hydrodynamic bearing formed by said liquid between said outer ends thereof and said external surface.

10.         A position sensing device, comprising:

a     support     member     (16)     mountable     for rotation about an axis;

at least one angular position sensing probe (104) movably mounted within said support member in spaced relation to said axis and extending from said support member (16) for engagement with an external surface as said support member is rotated thereabove;

transducer     means     (118)     mounted     to     said support member (16) and engaging said probe (104) for   sensing   movement   thereof   relative   to   said support   member   (16)   and   providing   at   least   two separate   sets   of   electrical   signals   indicative   of the   position   of   said   probe   (104)   relative   to   said support member (16) at at least two separate angular positions of said probe relative to said axis;

means   for   sensing   the   angular   position   of said   probe   (104)   as   it   is   rotated   about   said   axis and   providing   at   least   two   separate   electrcal signals   indicative   of   at   least   two   separate   angular positions of said probe (104) about said axis; and

means   receiving   said   at   least   two   sets   of signals   from   said   transducer   means   (118)   and   from said   means   for   sensing   the   angular   position   of   said probe   (104)   and   providing   an   indication   of   the relative   angular   position   of   said   support   member (16) to said surface.

11.     A   position   sensing   device   as   defined   in claim 10 wherein said signal receiving means further provides   an   indication   of   the   distance   of   said support member to said surface.

12.        An angle measuring device, comprising:

a frame (16);

means (126) providing a reference plane;

means (104, 106) interconnecting said frame (16) and said reference plane means (126) for two dimensional pivotal movement of said frame (16) about a fixed location in said reference plane means (126), and for sensing the relative angular position between said frame (16) and said reference plane means (126) and providing electrical signals indicative of said position; and

means receiving said signals and providing an indication of said relative angular position.

13.        An angle measuring device as defined in claim 12 wherein said connecting means includes:

a plurality of equally angularly spaced sensing means (288) disposed about an axis in said frame (16) which intersects said reference plane (126) at said fixed location, each said sensing means (288) including a rod (288) mounted in said frame (16) for longitudinal movement parallel to said axis and pivotally connected to said reference plane means (126).

14.        An angle measuring device as defined in claim 12, including:

a central cylindrical opening defined in said frame (16) concentric with a central cylindrical opening defined in said reference plane means (126), whereby said angle measuring device can be positioned over a stud with said reference plane means (126) surrounding said stud and said stud engaging the surfaces of said frame (16) defining said cylindrical opening.

15. An angle measuring device as defined in claim 12, including:

plumb means secured to said reference plane means (126) for holding said reference plane means (126) horizontal with respect to the ground;

said frame (16) having a surface perpendicular to said reference plane means (126) for engaging a member whose angle relative to the ground is to be measured.

16. An angle measuring device as defined in claim 12, including:

a drill motor (502);

means mounting said frame (16) to said drill motor (502);

said frame (16) having a central cylindrical surface defining an opening through which a drill can be inserted into said drill motor (502);

said reference plane means (126) having a central cylindrical opening defined therein concentric with said cylindrical opening in said frame (16), through which said drill can pass;

said frame (16) being telescoping towards said reference plane means (126) to permit said drill to extend through said reference plane.

17.      An angle measuring device comprising:

a frame (16);

a base plate (426);

a plurality of equally angularly spaced parallel rods (414) disposed about a central axis in said frame (16) and pivotally connected to said base plate (426);

means (428) mounted in said frame (16) and receiving at least some of said rods (414) for sensing the position of said rods (414) relative to said frame and providing electrical signals indicative of said relative positions; and

means receiving said signals and providing an indication of the relative angular position between said frame and said base plate.


18.      An instrumented tool for inserting a threaded fastener in a member, comprising:

a driver member (410) having means for drivingly engaging said threaded fastener;

a rotatable shaft (406) supporting said driver member (410) for rotation therewith;

means (374) engaging said shaft (406) for causing axial rotation thereof;

means (394, 397) engaging said shaft (406) for measuring the torque on said shaft;

means (386, 390) engaging said shaft (406) for measuring the thrust on said shaft; and

means (378) supporting said shaft and engagable with a surface of said member for measuring the angle between the axis of rotation of said shaft (406) and said surface of said member.

19.      An instrumented tool as defined in claim 18 wherein said shaft rotating means (374) also provides manual means for adjusting the relative axial alignment between said shaft and said threaded fastener.

20.      An instrumented tool as defined in claim 18, including:

housing means (386) supporting said shaft (406) for axial rotation;

said means (394, 397) for measuring the torque on said shaft (406) having a first sensor means (397) engaging said shaft for sensing torque applied thereto by said shaft rotating means (374); and

said means (386, 390) for measuring the thrust on said shaft (406) having second sensor means (390) engaging said shaft for sensing thrust being applied axially of said shaft by said shaft rotating means (374).

21.      An instrumented tool as defined in claim 20, wherein said angle measuring means includes:

a base plate (426) having a central opening defined therein through which said drive member (410) extends for engaging a threaded fastener, said base plate being engagable with the surface of said member in which said threaded fastener is being inserted; and

a plurality of potentiometer means (428, 434) equally angularly spaced in a concentric pattern about said shaft and associated with said shaft (406) and said base plate (426) for sensing the relative angular displacement therebetween.

22.        An angle measuring device, comprising:

a frame (398);

means (426) providing a reference plane;

means (414, 428) interconnecting said frame and said reference plane means (426) for two dimensional pivotal movement of said frame (398) about a fixed location in said reference plane means (426), and for sensing the relative angular position between said frame (398) and said reference plane means (426) and providing electrical signals indicative of said position, and including a plurality of spaced sensing means (428, 434) disposed about an axis in said frame (398) which intersects said reference plane at said fixed location, each said sensing means (428, 434) including a rod (428) mounted in said frame for longitudinal movement parallel to said axis and pivotally connected to said reference plane means (426); and

means (372) receiving said signals and providing an indication of said relative angular position.

23.        An angle measuring device as defined in claim 22 wherein said interconnecting means (414, 428) includes said plurality of spaced sensing means (428, 434) being disposed at equally angularly spaced location about said axis in said frame.

24.    A position sensing device, comprising:

a support member (276);

a plurality of angular position sensing probes (288) movably mounted within and extending from said support member for simultaneously engaging a surface;

first transducer means (300, 302, 304) mounted to said support member (276) and engaging said probes (288) for sensing movement thereof and providing electrical signals indicative of the positions of each said probe (288) relative to said support member (276); and

means receiving said signals from said transducer means (300, 302, 304) and providing an indication of the relative angular position of said support member (276) to said surface.

25.    A position sensing device as defined in claim 24 wherein said angular position sensing probes (288) are each mounted in said support member (276) for rectilinear movement along parallel spaced axes.

26.    A position sensing device as defined in claim 25 wherein each said angular position sensing probe (288) is independently movable relative to the others of said last named probes.

27.    A position sensing device as defined in claim 24 wherein said signal receiving means further provides an indication of the distance from said support member to said surface.

28.      A position sensing device as defined in claim 24, including:

a lateral position sensing probe (306) movably mounted to said support member (276) and extending therefrom for engaging a discontinuity in said surface so as to cause bending of said lateral position sensing probe (306) upon lateral movement of said support member (276);

second transducer means (344, 346) engaging said lateral position sensing probe (306) for sensing bending thereof and providing an electrical signal indicative of the degree of bending; and

means receiving said signal from said lateral position sensing probe (306) and providing an indication of the degree of bending of said lateral position sensing probe (306).

29.      A position sensing device, comprising:

a support member (276);

a plurality of angular position sensing probes (288) movably mounted within and extending from said support member (276) for simultaneously engaging a surface when said support member (276) is moved into proximity with said surface;

first transducer means (300, 302, 304) mounted to said support member (276) and engaging said probes for sensing movement thereof and providing electrical signals indicative of the positions of each said probe (288) relative to said support member (276);

means receiving said signals from said transducer means (300, 302, 304) and providing an indication of the relative angular position of said support member (276) to said surface and of the distance from said support member (276) to said surface;

a lateral position sensing probe (306) movably mounted to said support member (276) and extending therefrom for engaging a discontinuity in said surface so as to cause bending of said lateral position sensing probe (306) upon lateral movement of said support member (276);

second transducer means (344, 346) engaging said lateral position sensing probe (306) for sensing bending thereof and providing an electrical signal indicative of the degree of bending; and

means receiving said signal from said lateral position sensing probe and providing an ·indication of the degree of bending said lateral position sensing probe.

30.     A position sensing device, comprising:

a support member (276);

a plurality of angular positioned sensing means (288) for simultaneously contacting a surface when said support member (276) is moved into proximity with said surface;

transducer means (300, 302, 304) mounted to said support member (276) and associated with each said angular position sensing means (288) for providing electrical signals indicative of the distance from each said angular position sensing means (288) to said surface; and

means receiving said signals from said transducer means (300, 302, 304) and providing an indication of the relative angular position of said support member (276) to said surface.

FIG-1

**FIG-2**

**FIG-3**

FIG-4

FIG-5

FIG-6

4/47

0087528

FIG-7

96'
96'
97'
97'
34'
154
97'
98'

FIG-8

150
10'
146
150
44'
94'
16'
146
94'
154
34'
150
146
94'

FIG-9

146
94'
44'
146
146
150
94'
150
16'
94'
146

FIG-10

FIG-11

10

44'

224

232

226

234

228          230

0087528

FIG-12a

FIG-12b

# FIG-12c

# FIG-12d

FIG-13a

FIG-13b

# FIG-13c

FIG-13d

# FIG-14a

FIG-14b

FIG-14c

0087528

FIG-14d

0087528

FIG-14e  20/47  0087528

VERT DVM SIG 1

VERT DVM SIG 19

FIG-15a

21/47

0087528

# FIG-15b

0087528

FIG-15c

23/47

0087528

CON 102-A

VISUAL DISPLAY

FIG-15d

CON 102 B
ANALOG
OUTPUT

# FIG-15e

# FIG-16

# FIG-17

BUS

| | | | |
|---|---|---|---|
| ↓ | 1 | A | ↓ |
| +5 | 2 | B | +5 |
| +5* | 3 | C | CLOCK A |
| +5* | 4 | D | CLOCK B |
| ↓* | 5 | E | CLOCK C |
| ↓* | 6 | F | CLOCK D |
| | 7 | H | |
| | 8 | J | |
| | 9 | K | |
| | 10 | L | |
| | 11 | M | |
| | 12 | N | |
| | 13 | P | |
| VERT O/R | 14 | R | |
| PROBE OUT OF HOLE | 15 | S | |
| ABOVE TARGET | 16 | T | |
| V | 17 | U | |
| HX | 18 | V | +5R ⎱ |
| HY | 19 | W | −5R ⎰ (A) |
| PX | 20 | X | −15 |
| PY | 21 | Y | ⏚ |
| −1.2 REF | 22 | Z | +15 |

0087528

FIG-18

```
| 12a | 12b |
        | 12c |  | 12d |
```

FIG-19

```
| 13a |  | 13c | 13d |
| 13b |
```

FIG-20

```
| 14a | 14b | 14c |
| 14d | 14e |
```

FIG-21

```
| 15a | 15b | 15c | 15d |
| 15e |
```

FIG-22

240

+X +Y +Z

+J +K +P
+K +L W V +Q T U
+A +B +C +D +E +M W V +I R
+F +N +R
+G +O +S

28/47

0087528

FIG-23

FIG-24

FIG-25

0087528

FIG-26

FIG-27

FIG-28

FIG-29

350
286
312
346
328
286
274
352
344 324
270

FIG-30

270
278 282
350 334
352
280 336
320
322 282
274

FIG-31

350
286
286
328
270
286 324 314 286 274

FIG-32a

# FIG-32b

BRIDGE EXCH. & BAL.

$B_{zx}$

$B_{zy}$

X50

X10

X1

DVM 5 O/C 5

X50

X10

X1

DVM 4 O/C 4

HORIZONTAL DIRECTION INDICATOR

LINE/SPOT SENSOR

SCHMIT TRIG

O/C

CIRCUMFERENTIAL POSITION INDICATOR

FIG-33

TO ALL COMMONLY EXCITED BRIDGES

COMPRESSION   TENSION

G1 BRIDGE   G2

COMP. TRAN.

TENSION TRAN.

+V   V IN   V O   VR1   COM

C1   R2   R1

D1   C2   R3   R4   R5   R6

BRIDGE HIGH LEVEL OUTPUT

R8   R7   R9   C7

C4   C3   +VR2'   IN

DR A1 BIAS

C5   C6   +VR2'

0087528

0087528

**FIG-34**

FIG-35

FIG-36

FIG-37

38/47

0087528

# FIG-38

# FIG-39

FIG.40   FIG.47   FIG.49

FIG.48

0087528

FIG.41

FIG.42

FIG.43

FIG.44

FIG.45

FIG.46

FIG-50

FIG-51

0087528

FIG-52

FIG-53

FIG-54

FIG-55

FIG-56

FIG-57

FIG-58

FIG-59

Y

FIG-60

LED 4

LED 3

LED 4    LED 3    LED 5    LED 2    LED 1

X                                                    X

LED 2

LED 1

Y

FIG-61

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US - A - 4 101 405 (INOVE) <br> * Figures 1,3-5; column 6, line 61 - column 9, line 15 * | 1-3, 17,22-27,30 | G 01 B 7/30 <br> 7/31 <br> 7/14 <br> B 23 B 49/00 <br> G 01 C 9/14 <br> B 25 B 23/14 |
| X | US - A - 4 172 324 (MEYER) <br> * The whole document * | 12 | |
| X | CH - A - 356 918 (EBAUCHES) <br> * Pages 2,3; figures * | 24-27, 30 | |
| A | CH - A - 545 673 (EBAUCHES) <br> * Figures 4-7 * | 6 | **TECHNICAL FIELDS SEARCHED (Int. Cl. 3)** <br><br> G 01 B <br> G 01 D <br> B 23 Q |
| A | PRACTICAL ENGINEERING, vol. 20, December 9, 1949 <br> W. COOPER: "Checking Angular Faces -II", pages 614-615. <br> * Figure 18 * | 1 | |
| A | US - A - 3 864 835 (MORISAKI) <br> * The whole document * | 1-3 | |

The present search report has been drawn up for all claims

| Place of search | Date of completion of the search | Examiner |
|---|---|---|
| The Hague | 20-01-1983 | IVES |

**0087528**

European Patent
Office

EUROPEAN SEARCH REPORT

Application number

-2- EP 82 30 1013

## DOCUMENTS CONSIDERED TO BE RELEVANT

| Category | Citation of document with indication, where appropriate, of relevant passages | Relevant to claim |
|---|---|---|
| A | <u>CH - A - 511 420</u> (VEREINIGTE DRAHTWERKE)<br><br>* The whole document *<br><br>---- | 1-3 |

CLASSIFICATION OF THE APPLICATION (Int. Cl.)

TECHNICAL FIELDS SEARCHED (Int. Cl.)

# 0087528

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

---

## ☒ LACK OF UNITY OF INVENTION

The Search Division considers that the present European patent application does not comply with the requirement of unity of invention and relates to several inventions or groups of inventions.

namely:

```
1. claims 1-11,24-30; A position sensing device
2. claims 12-14,17,22-23; An angle measuring device
3. claims 18-21; An instrumented tool
4. claim 15; An angle measuring device including plumb
             means.
5. claim 16; An angle measuring device including a drill
             motor.
```

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☒ None of the further search fees has been paid within the fixed time limit. The present European search report has been drawn up for those parts of the European patent application which relate to the invention first mentioned in the claims.

namely claims   1-11,24-30